(19) Europäisches Patentamt / European Patent Office / Office européen des brevets

(11) **EP 4 383 891 A1**

(12) **EUROPEAN PATENT APPLICATION**
published in accordance with Art. 153(4) EPC

(43) Date of publication:
**12.06.2024 Bulletin 2024/24**

(21) Application number: **22852337.9**

(22) Date of filing: **05.08.2022**

(51) International Patent Classification (IPC):
**H04W 72/04** *(2023.01)*     **H04L 5/00** *(2006.01)*

(52) Cooperative Patent Classification (CPC):
**H04L 5/00; H04W 72/04**

(86) International application number:
**PCT/CN2022/110527**

(87) International publication number:
**WO 2023/011626 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.08.2021 CN 202110903588**

(71) Applicant: **Datang Mobile Communications Equipment Co., Ltd.
Beijing 100085 (CN)**

(72) Inventors:
• **HUANG, Qiuping
  Beijing 100085 (CN)**
• **SU, Xin
  Beijing 100085 (CN)**

(74) Representative: **dompatent von Kreisler Selting Werner -
Partnerschaft von Patent- und Rechtsanwälten mbB
Deichmannhaus am Dom
Bahnhofsvorplatz 1
50667 Köln (DE)**

(54) **RESOURCE INDICATION METHOD AND APPARATUS, TERMINAL, NETWORK SIDE DEVICE, AND STORAGE MEDIUM**

(57) The present disclosure provides a resource indication method and apparatus, a terminal, a network side device, and a storage medium. The method comprises: receiving downlink control information (DCI), the DCI comprising a plurality of SRI domains; determining a bit width of a first SRI domain among the plurality of SRI domains according to the number of resources comprised in at least one SRS resource set among a plurality of SRS resource sets; and determining, according to the bit width of the first SRI domain, an SRS resource corresponding to uplink transmission. According to the resource indication method and apparatus, the terminal, the network side device, and the storage medium provided by the present disclosure, the bit width of the first SRI domain in the DCI is determined by means of the number of resources comprised in the at least one SRS resource set among the plurality of SRS resource sets, such that the bit width of the first SRI domain is reasonably set, the problem that the DCI cannot indicate any SRI combination when indicating PUSCH single TRP transmission is solved, and the transmission performance of a PUSCH is ensured.

FIG. 1

## Description

### CROSS-REFERENCE TO RELATED APPLICATION

The present application claims priority to Chinese patent application No. 2021109035881 filed on August 06, 2021, entitled "Resource Indication Method and Apparatus, Terminal, Network Side Device, and Storage Medium", which is hereby incorporated by reference in its entirety.

### FIELD

The present application relates to the field of communication, and in particular to resource indication methods and apparatuses, a terminal, a network side device, and a storage medium.

### BACKGROUND

In a physical uplink share channel (PUSCH) transmission scheme, a base station transmits a sounding reference signal resource indicator (SRI) to a user equipment (UE) through downlink control information (DCI) to indicate a sounding reference signal (SRS) resource selected by the base station.

For a multiple transmission and reception points (M-TRPs) scenario, the DCI may include two SRI fields and two transmission pre-coding matrix indicator (TPMI) fields in a codebook-based PUSCH transmission scheme; or the DCI may include two SRI fields in a nonCodebook-based PUSCH transmission scheme. In case that the base station indicates that PUSCH transmission corresponds to any TRP, a first SRI field of the two SRI fields should be used to indicate any SRS resource set corresponding to the TRP. However, the number of SRS resources configured in each SRS resource set may be different since specific configurations for various SRS resource set corresponding to the TRP are not currently limited. It is impossible to indicate any SRI combination in case that the DCI indicates single-TRP based PUSCH transmission if a bit width of the first SRI field is not determined reasonably, which affects the performance of the PUSCH transmission. Therefore, a method for determining the bit width of the first SRI field is urgently needed.

### SUMMARY

The present application provides resource indication methods and apparatuses, a terminal, a network side device, and a storage medium, which solve the problem of limited performance of PUSCH transmission caused by unreasonably setting a bit width of a first SRI field.

An embodiment of the present application provides a resource indication method, including:

receiving downlink control information (DCI), the DCI including multiple sounding reference signal (SRS) resource indicator (SRI) fields;
determining a bit width of a first SRI field in the multiple SRI fields based on the number of resources included in at least one SRS resource set among multiple SRS resource sets; and
determining an SRS resource corresponding to an uplink transmission based on the bit width of the first SRI field.

In a resource indication method according to an embodiment of the present application, determining the bit width of the first SRI field in the multiple SRI fields based on the number of resources included in at least one SRS resource set among multiple SRS resource sets includes:
determining the bit width of the first SRI field based on the number of resources included in an SRS resource set corresponding to the first SRI field among the multiple SRS resource sets.

In a resource indication method according to an embodiment of the present application, the number of resources included in the SRS resource set corresponding to the first SRI field is equal to or greater than the number of resources included in each of SRS resource sets other than the SRS resource set corresponding to the first SRI field among the multiple SRS resource sets.

In a resource indication method according to an embodiment of the present application, determining the bit width of the first SRI field based on the number of resources included in the SRS resource set corresponding to the first SRI field among the multiple SRS resource sets includes:
determining the bit width of the first SRI field based on the number of resources included in the SRS resource set corresponding to the first SRI field and at least one of a minimum value among numbers of resources included in each of the multiple SRS resource sets and a maximum number of transmission layers.

In a resource indication method according to an embodiment of the present application, among the multiple SRI fields included in the DCI, a second SRI field indicates the number of transmission layers and SRS resources corresponding to the second SRI field, and SRI fields other than the second SRI field among the multiple SRI fields indicate SRS resources corresponding to the number of transmission layers; and

the number of resources included in the SRS resource set corresponding to the second SRI field is equal to or greater than the number of resources included in each of SRS resource sets other than the SRS resource set corresponding to the second SRI field among the multiple SRS resource sets.

In a resource indication method according to an embodiment of the present application, the second SRI field is one of the first SRI fields.

In a resource indication method according to an embodiment of the present application, determining the bit width of the first SRI field in the multiple SRI fields based on the number of resources included in at least one SRS resource set among multiple SRS resource sets includes:

determining the bit width of the first SRI field based on a maximum value among numbers of resources included in each of the multiple SRS resource sets.

In a resource indication method according to an embodiment of the present application, determining the bit width of the first SRI field based on a maximum value among numbers of resources included in each of the multiple SRS resource sets includes:

determining the bit width of the first SRI field based on the maximum value among the numbers of resources included in each of the multiple SRS resource sets and at least one of a minimum value among numbers of resources included in each of the multiple SRS resource sets and a maximum number of transmission layers.

In a resource indication method according to an embodiment of the present application, determining the bit width of the first SRI field in the multiple SRI fields based on the number of resources included in at least one SRS resource set among multiple SRS resource sets includes:

in case that numbers of resources included in the multiple SRS resource sets are the same, determining the bit width of the first SRI field in the multiple SRI fields based on the number of resources included in one SRS resource set among the multiple SRS resource sets and a maximum number of transmission layers.

In a resource indication method according to an embodiment of the present application, a bit width of a third SRI field other than the first SRI field among the multiple SRI fields is determined based on at least one of the number of resources included in an SRS resource set corresponding to the third SRI field, a minimum value among the numbers of resources included in each of the multiple SRS resource sets, and a maximum number of transmission layers.

In a resource indication method according to an embodiment of the present application, a coding scheme of the first SRI field is determined based on the number of resources included in the SRS resource set to which the SRS resource indicated by the first SRI field belongs and at least one of a minimum value among numbers of resources included in each of the multiple SRS resource sets and a maximum number of transmission layers.

In a resource indication method according to an embodiment of the present application, the multiple SRI fields in the DCI are in one-to-one correspondence with the multiple SRS resource sets.

In a resource indication method according to an embodiment of the present application, usage types of the multiple SRS resource sets are consistent; or

uplink transmission schemes corresponding to the multiple SRS resource sets are consistent.

An embodiment of the present application provides a resource indication method, including:

determining downlink control information (DCI), where the DCI includes multiple sounding reference signal (SRS) resource indicator (SRI) fields, a bit width of a first SRI field in the multiple SRI fields is determined based on the number of resources included in at least one SRS resource set among multiple SRS resource sets; and

transmitting the DCI.

In a resource indication method according to an embodiment of the present application, the bit width of the first SRI field is determined based on the number of resources included in an SRS resource set corresponding to the first SRI field among the multiple SRS resource sets.

In a resource indication method according to an embodiment of the present application, the number of resources included in the SRS resource set corresponding to the first SRI field is equal to or greater than the number of resources included in each of SRS resource sets other than the SRS resource set corresponding to the first SRI field among the multiple SRS resource sets.

In a resource indication method according to an embodiment of the present application, the bit width of the first SRI field is determined based on the number of resources included in the SRS resource set corresponding to the first SRI field and at least one of a minimum value among numbers of resources included in each of the multiple SRS resource sets and the maximum number of transmission layers.

In a resource indication method according to an embodiment of the present application, among the multiple SRI fields included in the DCI, a second SRI field indicates the number of transmission layers and SRS resources corresponding to the second SRI field, and SRI fields other than the second SRI field among the multiple SRI fields indicate SRS resources corresponding to the number of transmission layers; and

the number of resources included in the SRS resource set corresponding to the second SRI field is equal to or greater than the number of resources included in each of SRS resource sets other than the SRS resource set corresponding to the second SRI field among the multiple SRS resource sets.

In a resource indication method according to an embodiment of the present application, the second SRI field is one of the first SRI fields.

In a resource indication method according to an embodiment of the present application, the bit width of the first SRI field is determined based on a maximum value among numbers of resources included in each of the multiple SRS resource sets.

In a resource indication method according to an embodiment of the present application, the bit width of the first SRI field is determined based on the maximum value among the numbers of resources included in each of the multiple SRS resource sets and at least one of a minimum value among numbers of resources included in each of the multiple SRS resource sets and the maximum number of transmission layers.

In a resource indication method according to an embodiment of the present application, in case that numbers of resources included in the multiple SRS resource sets are the same, the bit width of the first SRI field in the multiple SRI fields is determined based on the number of resources included in one SRS resource set among the multiple SRS resource sets and a maximum number of transmission layers.

In a resource indication method according to an embodiment of the present application, a bit width of a third SRI field other than the first SRI field among the multiple SRI fields is determined based on at least one of the number of resources included in an SRS resource set corresponding to the third SRI field, a minimum value among the numbers of resources included in each of the multiple SRS resource sets, and a maximum number of transmission layers.

In a resource indication method according to an embodiment of the present application, a coding scheme of the first SRI field is determined based on the number of resources included in the SRS resource set to which the SRS resource indicated by the first SRI field belongs and at least one of a minimum value among numbers of resources included in each of the multiple SRS resource sets and the maximum number of transmission layers.

In a resource indication method according to an embodiment of the present application, the multiple SRI fields in the DCI are in one-to-one correspondence with the multiple SRS resource sets.

In a resource indication method according to an embodiment of the present application, usage types of the multiple SRS resource sets are consistent; or

uplink transmission schemes corresponding to the multiple SRS resource sets are consistent.

An embodiment of the present application further provides a terminal, including a processor, a memory storing a computer program, a transceiver for transmitting and receiving data under control of the processor;

the computer program, in case that executed by the processor of the terminal, causes the processor to perform the following operations:

> receiving downlink control information (DCI), the DCI including multiple sounding reference signal (SRS) resource indicator (SRI) fields;
> determining a bit width of a first SRI field in the multiple SRI fields based on the number of resources included in at least one SRS resource set among multiple SRS resource sets; and
> determining an SRS resource corresponding to an uplink transmission based on the bit width of the first SRI field.

In addition to the above operations, the computer program, in case that executed by the processor of the terminal, causes the processor to further perform the operations in the resource indication method applied to the terminal according the embodiment of the present application.

An embodiment of the present application further provides a network side device, including a processor, a memory storing a computer program, and a transceiver for transmitting and receiving data under control of the processor;

the computer program, in case that executed by the processor of the terminal, causes the processor to perform the following operations:

> determining downlink control information (DCI), where the DCI includes multiple sounding reference signal (SRS) resource indicator (SRI) fields, a bit width of a first SRI field in the multiple SRI fields is determined based on the number of resources included in at least one SRS resource set among multiple SRS resource sets; and
> transmitting the DCI.

In addition to the above operations, the computer program, in case that executed by the processor of the terminal, causes the processor to further perform the operations in the resource indication method applied to the network side device according the embodiment of the present application.

An embodiment of the present application further provides a resource indication apparatus, including:

a receiving unit, for receiving downlink control information (DCI), the DCI including multiple sounding reference signal (SRS) resource indicator (SRI) fields;

a bit width determining unit, for determining a bit width of a first SRI field in the multiple SRI fields based on the number of resources included in at least one SRS resource set among multiple SRS resource sets; and

a parsing unit, for determining an SRS resource corresponding to an uplink transmission based on the bit width of the first SRI field.

In addition to the above operations, the units in the resource indication apparatus are also used to perform the operations in the resource indication method applied to the terminal according the embodiment of the present application.

An embodiment of the present application further provides a resource indication apparatus, including:

an information determining unit, for determining downlink control information (DCI), where the DCI includes multiple sounding reference signal (SRS) resource indicator (SRI) fields, a bit width of a first SRI field in the multiple SRI fields is determined based on the number of resources included in at least one SRS resource set among multiple SRS resource sets; and

a transmitting unit, for transmitting the DCI.

In addition to the above operations, the units in the resource indication apparatus are also used to perform the operations in the resource indication method applied to the network side device according the embodiment of the present application.

An embodiment of the present application further provides a processor-readable storage medium storing a computer program that, when executed by a processor, causes the processor to execute the steps of the resource indication methods described above.

In the resource indication methods and apparatuses, the terminal, the network side device, and the storage medium provided by the embodiments of the present application, the bit width of the first SRI field is reasonably set by determining the bit width of the first SRI field in the DCI based on the number of resources included in at least one SRS resource set among multiple SRS resource sets, and the problem that it is impossible to indicate any SRI combination in case that the DCI indicates single-TRP based PUSCH transmission is solved and the PUSCH transmission performance is ensured.

**BRIEF DESCRIPTION OF THE DRAWINGS**

In order to clearly illustrate the solutions disclosed in the embodiments of the present application, the drawings used in the descriptions of the embodiments are briefly described below. The drawings in the following description are only some embodiments of the present application, and other drawings may be obtained according to these drawings without creative effort for those skilled in the art.

FIG. 1 is a first schematic flow chart of a resource indication method according to an embodiment of the present application;

FIG. 2 is a second schematic flow chart of a resource indication method according to an embodiment of the present application;

FIG. 3 is a schematic structural diagram of a terminal according to an embodiment of the present application;

FIG. 4 is a schematic structural diagram of a network side device according to an embodiment of the present application.

FIG. 5 is a first schematic structural diagram of a resource indication apparatus according to an embodiment of the present application; and

FIG. 6 is a second schematic structural diagram of a resource indication apparatus according to an embodiment of the present application.

**DETAILED DESCRIPTION**

In the embodiments of the present application, the term "and/or" describes a related relationship of associated objects, and indicates three kinds of relationships. For example, A and/or B may represent that A exists alone, A and B exist simultaneously, and B exists alone. Character "/" generally indicates that the associated objects are in an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative effort belong to the scope of the present application.

In a scenario where a base station configures physical uplink share channel (PUSCH) transmission of a terminal to be a multiple transmission and reception points (M-TRPs) transmission, whether the PUSCH is actually transmitted to one TRP or to two TRPs is dynamically switched through downlink control information (DCI) signaling.

The DCI may include two SRI fields and two transmission pre-coding matrix indicator (TPMI) fields in a codebook-based PUSCH transmission scheme; or the DCI may include two SRI fields in a nonCodebook-based PUSCH transmission scheme. In addition, the DCI may further include a special information field to indicate whether the PUSCH scheduled by the DCI is single transmission reception point (S-TRP) transmission or M-TRP transmission, and indicate to transmit towards which TRP during the S-TRP transmission.

Coding state indicator in information field for indicating S-TRP or M-TRP transmission in DCI, and correspondences between sounding reference signal (SRS) resource indicators (SRIs) and TPMIs corresponding to coding states and SRS resource set(s) configured by the base station for the terminal are shown in Table 1.

Table 1

| Codepoint | SRS resource set(s) | SRI (for both CB and NCB)/TPMI (CB only) field(s) |
|---|---|---|
| 00 | s-TRP mode with 1st SRS resource set | 1st SRI/TPMI field |
| | (TRP1) | (2nd field is unused) |
| 01 | s-TRP mode with 2nd SRS resource set (TRP2) | 1st SRI/TPMI field (2nd field is unused) |
| 10 | m-TRP mode with (TRP1,TRP2 order) 1st SRI/TPMI field: 1st SRS resource set 2nd SRI/TPMI field: 2nd SRS resource set | Both 1st and 2nd SRI/TPMI fields |
| 11 | m-TRP mode with (TRP2,TRP1 order) 1st SRI/TPMI field: FFS 2nd SRI/TPMI field: FFS | Both 1st and 2nd SRI/TPMI fields |

In Table 1, SRI (for both CB and NCB) field(s) indicates common SRI field(s) in the DCI applied in both the codebook-based PUSCH transmission scheme and nonCodebook-based PUSCH transmission scheme, and TPMI (CB only) field(s) indicates TPMI field(s) in the DCI that is only applied in the codebook-based PUSCH transmission scheme.

From Table 1, in case that the single-TRP PUSCH transmission is indicated, no matter which TRP is indicated, the terminal determines SRS resources corresponding to PUSCH transmission based on the first SRI field, that is, the 1st SRI field. A first SRS resource set, that is, the 1st SRS resource set, refers to an SRS resource set with a lowest ID. For example, if there are two SRS resource sets, the SRS resource set with the lower ID is the first SRS resource set, and another SRS resource set is a second resource set.

In addition, for nonCodebook-based PUSCH transmission, the first SRI field indicates the SRS resource and the number of transmission layers simultaneously in the prior art. The two TRPs have the same number of transmission layers. The second SRI field only indicates the SRS resources corresponding to its corresponding TRP. The overhead and coding scheme of the second SRI field are as follows.

The first SRI field is used for determining an indicator value of the second SRI field. The second SRI field only indicates SRI combination corresponding to a rank (also referred to as the number of layers) indicated by the first SRI field. A bit width $N_2$ of the second SRI field is determined based on a maximum value of numbers of code points corresponding to each rank among all ranks associated with the first SRI field. For any rank value x, the first $K_x$ code points are mapped to $K_x$ SRI values corresponding to the rank value x, and the remaining $(2^{N_2}-K_x)$ code points are reserved values.

For the first SRI field in the DCI, there is no method in the prior art for determining the bit width of the first SRI field in case that the DCI for scheduling the PUSCH includes two SRI fields. The current possible method is to determine the bit width $N_1$ of the first SRI field based on the number of SRS resources included in the SRS resource set corresponding to the first SRI field.

For example, $N_1$ is determined to be 0 in case that the first SRS resource set includes one SRS resource; $N_1$ is determined to be 2 in case that the first SRS resource set includes two SRS resources; $N_1$ is determined to be 3 in case that the first SRS resource set includes three SRS resources; and $N_1$ is determined to be 4 in case that the first SRS resource set includes four SRS resources.

However, the specific configuration for the two SRS resource sets is not specified in the prior art. In actual applications, the base station may configure two SRS resources for the first SRS resource set and four SRS resources for the second SRS resource set. Based on the above method of determining the bit width $N_1$ of the first SRI field, the bit width $N_1$ of the first SRI field is 2 bits, and the bit width $N_2$ of the second SRI field is 3 bits. The first SRI field cannot be used to indicate all SRI combinations corresponding to the second SRS resource set at any rank number. It is impossible to indicate any SRI combination in case that DCI indicates single-TRP PUSCH transmission, which affects PUSCH transmission performance.

Therefore, a method that may reasonably determine the bit width of the first SRI field is urgently needed, to solve the problem of limited SRI indicator during single TRP nonCodebook-based PUSCH transmission.

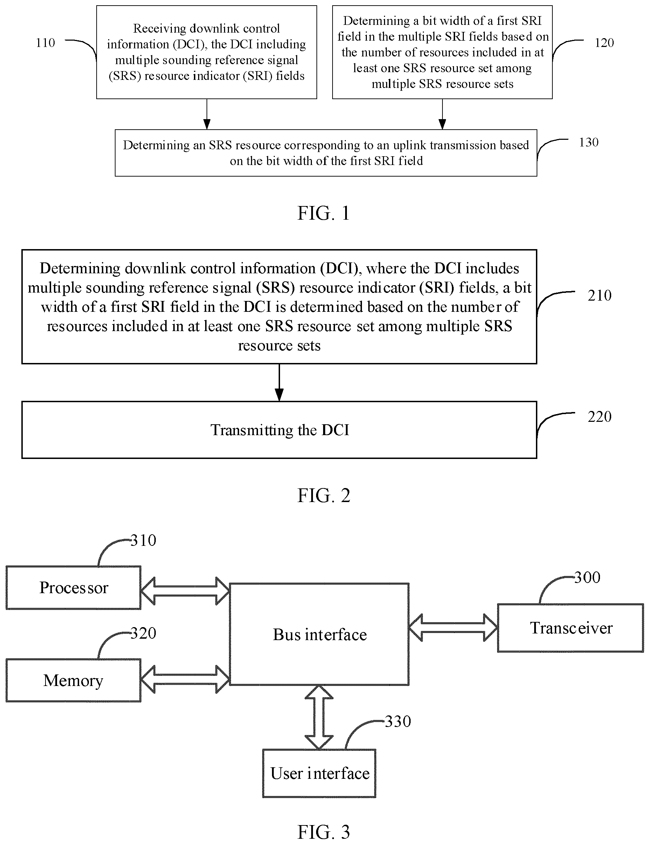

FIG. 1 is a first schematic flow chart of a resource indication method according to an embodiment of the present application. As shown in FIG. 1, the method is performed by a terminal. The method includes:

> step 110, receiving downlink control information (DCI), the DCI including multiple sounding reference signal (SRS) resource indicator (SRI) fields;
> step 120, determining a bit width of a first SRI field in the multiple SRI fields based on the number of resources included in at least one SRS resource set among multiple SRS resource sets; and
> step 130, determining an SRS resource corresponding to an uplink transmission based on the bit width of the first SRI field.

In an embodiment, the uplink transmission is PUSCH transmission.

In an embodiment, the multiple SRI fields include two SRI fields.

The DCI is transmitted to the terminal by the network side device, and the network side device here may be a base station. The DCI here may be DCI in the codebook-based PUSCH transmission scheme, or may be DCI in the nonCodebook-based PUSCH transmission scheme. DCI may be used to indicate S-TRP transmission or M-TRP transmission.

The DCI includes two or more SRI fields. The SRI field hereto referred includes a case where the bit width of the SRI field is 0. That is, among the two or more SRI fields included in DCI, the bit width of one or more SRI fields may be 0. It should be noted that the bit width here may also be referred to as overhead or the number of bits.

For the case where the DCI includes multiple SRI fields, the first SRI field may be a first SRI field sorted in ascending order by ID among the above multiple SRI fields, that is, the SRI field with the lowest ID; or the first SRI field may be a first SRI field sorted by bits among the above multiple SRI fields, for example, a first SRI field among the multiple SRI fields that are sorted in an ascending order by the most significant bit (MSB) (i.e., a SRI field with the lowest MSB); or a first SRI field among the multiple SRI fields that are sorted in a descending order by the MSB (i.e., a SRI field with the highest MSB); or a first SRI field among the multiple SRI fields that are sorted in an ascending order by the least significant bit (LSB) (i.e., a SRI field with the lowest LSB); or a first SRI field among the multiple SRI fields that are sorted in a descending order by the LSB (i.e., a SRI field with the highest LSB); or the first SRI field is a first SRI field that ranks first among the above multiple SRI fields having an order of the information fields in the protocol. The first SRI field may be a first SRI field when solving the problem of limited SRI indicator during single TRP nonCodebook-based PUSCH transmission.

The bit width of the first SRI field may be determined based on the number of resources included in at least one SRS resource set among multiple SRS resource sets. Here, the multiple SRS resource sets may be multiple SRS resource sets corresponding to the PUSCH transmission scheme configured by the network side device for the terminal, and the multiple SRS resource sets are all options of the SRS resource set corresponding to the first SRI field. The number of resources included in the SRS resource set refers to the number of SRS resources included in the SRS resource set.

In case that the bit width of the first SRI field is determined based on the number of resources included in SRS resource set among multiple SRS resource sets, only the number of resources included in one SRS resource set among the multiple SRS resource sets may be used, or the number of resources included in two or more SRS resource sets among the multiple SRS resource sets may be used. In case that the bit width of the first SRI field is determined, the number of resources included in each of some or all of the above multiple SRS resource sets may be used.

Further, in case that the bit width of the first SRI field is determined by using the number of resources included in each of some SRS resource sets among the multiple SRS resource sets, the some SRS resource sets here may be one or more pre-specified SRS resource sets selected from the multiple SRS resource sets. The pre-specified SRS resource sets here may be SRS resource sets with a larger number of resources included in the above-mentioned multiple SRS resource sets. On this basis, the bit width of the first SRI field may be determined based on the number of resources included in the pre-specified SRS resource sets.

In case that the bit width of the first SRI field is determined by using the numbers of resources included in each of all SRS resource sets among the multiple SRS resource sets, a maximum value among the numbers of resources may be determined based on the numbers of resources included in the multiple SRS resource sets, and the bit width of the first SRI field may be determined based on the maximum value.

After determining the bit width of the first SRI field in the DCI, the terminal may parse the received DCI based on the bit width of the first SRI field to obtain the SRS resource indicated by the DCI, that is, the SRS resource corresponding to the uplink transmission, and then the terminal performs uplink data transmission based on the SRS resources corresponding to the uplink transmission.

It should be noted that the embodiments of the present application do not limit the performing order of step 110 and step 120. Step 110 may be performed before or after step 120, or may be performed simultaneously with step 120.

In the resource indication method provided by the embodiment of the present application, the bit width of the first SRI field is reasonably set by determining the bit width of the first SRI field in the DCI based on the number of resources included in at least one SRS resource set among multiple SRS resource sets, and the problem that it is impossible to indicate any SRI combination in case that the DCI indicates single-TRP based PUSCH transmission is solved and the PUSCH transmission performance is ensured.

According to the above embodiment, usage types of the multiple SRS resource sets are consistent.

In an embodiment, the usage types of the multiple SRS resource sets are all a first usage.

In an embodiment, the first usage is for uplink channel state information (CSI) acquisition. For example, the first usage is for CSI acquisition for the codebook-based PUSCH transmission. For another example, the first usage is for CSI acquisition for nonCodebook-based PUSCH transmission.

In an embodiment, the usage type of the SRS resource sets corresponds to the transmission scheme of the PUSCH scheduled by the DCI. The above multiple SRS resource sets may be multiple SRS resource sets corresponding to a PUSCH transmission scheme configured by the network side device for the terminal, and the usage types of the above multiple SRS resource sets are also consistent.

For example, if the PUSCH transmission scheme configured by the network side device for the terminal is the codebook-based PUSCH transmission scheme, the usage type of the multiple SRS resource sets is the first usage that is for CSI acquisition for the codebook-based PUSCH transmission. The multiple SRS resource sets are SRS resource sets with usage set to be "codebook".

For another example, if the PUSCH transmission scheme configured by the network side device for the terminal is the nonCodebook-based PUSCH transmission scheme, the usage type of the multiple SRS resource sets is the first usage that is for CSI acquisition for the nonCodebook-based PUSCH transmission. The multiple SRS resource sets are SRS resource sets with usage set to be "nonCodeBook".

In an embodiment, the multiple SRS resource sets are all SRS resource sets with usage type set to the first usage.

According to the above embodiment, uplink transmission schemes corresponding to the multiple SRS resource sets are consistent.

Here, the uplink transmission scheme corresponding to the multiple SRS resource sets may be the PUSCH transmission scheme, that is, the multiple SRS resource sets may be multiple SRS resource sets corresponding to a PUSCH transmission scheme configured by the network side device for the terminal.

For example, the PUSCH transmission scheme configured by the network side device for the terminal is the codebook-based PUSCH transmission scheme, and the above multiple SRS resource sets all correspond to the codebook-based PUSCH transmission scheme.

For another example, the PUSCH transmission scheme configured by the network side device for the terminal is the nonCodebook-based PUSCH transmission scheme, and the above multiple SRS resource sets all correspond to the nonCodebook-based PUSCH transmission scheme.

According to the above embodiment, the bit width of the first SRI field is determined based on the number of resources included in one SRS resource set among the multiple SRS resource sets.

In an embodiment, in case that the bit width of the first SRI field is determined, only the number of resources included in one SRS resource set among the multiple SRS resource sets may be considered. One SRS resource set hereto referred may be one pre-specified SRS resource set among the above-mentioned multiple SRS resource sets. The one pre-specified SRS resource set may be an SRS resource set with the largest number of resources among the above-mentioned multiple SRS resource sets, or an SRS resource set corresponding to the first SRI field among the above multiple SRS resource sets.

In addition, in case that the above-mentioned multiple SRS resource sets include the same number of resources, the one SRS resource set hereto referred may be any one of the above-mentioned multiple SRS resource sets. In this case, it does no need to determine whether there is a pre-specified SRS resource set, an SRS resource set is randomly selected and the number of resources included in the SRS resource set is determined.

Based on the above embodiment, step 120 includes:

determining the bit width of the first SRI field based on the number of resources included in an SRS resource set corresponding to the first SRI field among the multiple SRS resource sets.

The correspondence between the first SRI field and one of the above-mentioned multiple SRS resource sets may be pre-defined, and the SRS resource set corresponding to the first SRI field among the above-mentioned multiple SRS resource sets may be located based on the correspondence between the first SRI field and the multiple SRS resource sets. The correspondence here may be obtained through an ID of the SRS resource set, a sequence number of the SRS resource set in the SRS resource set list, etc. For example, the first SRI field may correspond to the SRS resource set with the highest ID or the lowest ID. The first SRI field may also correspond to an SRS resource set with a specified ID. The first SRI field may correspond to the SRS resource set with the lowest or highest sequence number in the SRS resource set list, or to the SRS resource set with a specified sequence number in the SRS resource set list.

Here, the correspondence between the first SRI field and the SRS resource set may be agreed in the protocol or configured by the network side device. For example, the correspondence may be configured through a media access control (MAC)-control element (CE), a radio resource control (RRC), the DCI or other signaling, the embodiments of the present application do not specifically limit thereto.

An example is that for a certain PUSCH transmission scheme, the above-mentioned multiple SRS resource sets have usage types corresponding to the PUSCH transmission scheme. The bit width of the first SRI field is

$\lceil log_2(N_{\text{SRS}}) \rceil$ , where $N_{\text{SRS}}$ represents the number of resources included in the SRS resource set corresponding to the first SRI field. For example, for the codebook-based PUSCH transmission, the above-mentioned multiple SRS resource sets are SRS resource sets with usage set to be "codebook". The bit width of the first SRI field may be

$\lceil log_2(N_{\text{SRS}}) \rceil$ , where $N_{\text{SRS}}$ represents the number of resources included in the SRS resource set corresponding to the first SRI field.

Assuming the SRS resource set corresponding to the first SRI field is the SRS resource set with the lowest ID among the above multiple SRS resource sets. In case that the SRS resource set with the lowest ID includes one SRS resource, the bit width of the first SRI field is 0; in case that the SRS resource set with the lowest ID includes two SRS resources, the bit width of the first SRI field is 1; in case that the SRS resource set with the lowest ID includes three SRS resources, the bit width of the first SRI field is 3; in case that the SRS resource set with the lowest ID includes four SRS resources, the bit width of the first SRI field is 4.

An example is that for a certain PUSCH transmission scheme, the above-mentioned multiple SRS resource sets have usage types corresponding to the PUSCH transmission scheme. The bit width of the first SRI field is

$\left\lceil log_2 \left( \sum_{k=1}^{N_{\text{SRS}}} \binom{N_{\text{SRS}}}{k} \right) \right\rceil$ , where $N_{\text{SRS}}$ represents the number of resources included in the SRS resource set corresponding to the first SRI field. NonCodebook-based PUSCH transmission is taken as an example, the above multiple SRS resource sets are SRS resource sets with usage set to be "nonCodeBook". The bit width of the first SRI field may be:

$$\left\lceil log_2 \left( \sum_{k=1}^{N_{\text{SRS}}} \binom{N_{\text{SRS}}}{k} \right) \right\rceil$$

where $N_{\text{SRS}}$ represents the number of resources included in the SRS resource set corresponding to the first SRI field.

In the method provided by the embodiments of the present application, the bit width of the first SRI field is determined based on the number of resources included in the SRS resource set corresponding to the first SRI field, and the method has the advantages of simple implementation and low terminal complexity.

According to the above embodiment, the number of resources included in the SRS resource set corresponding to the first SRI field is equal to or greater than the number of resources included in each of SRS resource sets other than the SRS resource set corresponding to the first SRI field among the multiple SRS resource sets.

In an embodiment, the number of resources included in the SRS resource set corresponding to the first SRI field is not less than the number of resources included in any one SRS resource set other than the SRS resource set corresponding to the first SRI field among the multiple SRS resource sets.

In case that the bit width of the first SRI field is determined only based on the number of resources included in the SRS resource set corresponding to the first SRI field among the multiple SRS resource sets, the SRS resource set corresponding to the first SRI field is configured with SRS resources having the number greater than or equal to the number of resources included in each of the other SRS resource sets in case that corresponding SRS resource sets are configured for the first SRI field, and thus the number of resources included in the SRS resource set corresponding to the first SRI field may reflect a maximum value among numbers of resources included in each of above multiple SRS resource sets, which ensures that DCI may indicate any SRI combination in case that the single-TRP PUSCH transmission is indicated by the DCI.

For example, the first SRI field may correspond to the SRS resource set with the lowest ID among the above multiple SRS resource sets, and the number of SRS resources included in the SRS resource set with the lowest ID among the above multiple SRS resource sets is not less than the number of SRS resources included in the SRS resource set with the higher ID, and it is ensured that the number of resources included in the SRS resource set corresponding to the first SRI field is greater than or equal to the number of resources included in each of the SRS resource sets other than the SRS resource set corresponding to the first SRI field among the above multiple SRS resource sets.

Based on the above embodiment, step 120 includes:

determining the bit width of the first SRI field based on the number of resources included in the SRS resource set corresponding to the first SRI field and at least one of a minimum value among numbers of resources included in each of the multiple SRS resource sets and a maximum number of transmission layers.

In an embodiment, the bit width of the first SRI field may be determined based on the number of resources included in the SRS resource set corresponding to the first SRI field and the maximum number of transmission layers. The bit width of the first SRI field may also be determined based on the number of resources included in the SRS resource set corresponding to the first SRI field, and a minimum value among the numbers of resources included in each of the above multiple SRS resource sets. The bit width of the first SRI field may also be determined based on the number of resources included in the SRS resource set corresponding to the first SRI field, the maximum number of transmission layers and a minimum value among the numbers of resources included in each of the above multiple SRS resource sets.

The maximum number of transmission layers $L_{max}$ may be configured by the network side device or determined based on capabilities of the terminal. For example, the maximum number of transmission layers $L_{max}$ may be obtained under the two following cases.

One case is that the terminal supports a maximum number of multiple input multiple output (MIMO) layers (operation with maxMIMO-Layer), and a higher layer signaling parameter maxMIMO-Layer in PUSCH-ServingCellConfig is configured, and the maximum number of transmission layers $L_{max}$ is obtained through the higher layer signaling parameter maxMIMO-Layer.

Another case is that the terminal does not support the operation with maxMIMO-Layer. In this case, the maximum number of transmission layers $L_{max}$ is a maximum number of PUSCH transmission layers supported by the terminal for the nonCodebook-based PUSCH transmission in a serving cell.

An example is that for a certain PUSCH transmission scheme, the above-mentioned multiple SRS resource sets have usage types corresponding to the PUSCH transmission scheme. The bit width of the first SRI field may be determined based on the number of resources included in the SRS resource set corresponding to the first SRI field and the maximum number of transmission layers by the following formula:

$$\left\lceil \log_2 \left( \sum_{k=1}^{\min\{L_{\max}, N_{\mathrm{SRS}}\}} \binom{N_{\mathrm{SRS}}}{k} \right) \right\rceil$$

where $N_{\mathrm{SRS}}$ represents the number of resources included in the SRS resource set corresponding to the first SRI field; and $L_{max}$ is the maximum number of transmission layers.

For example, for the nonCodebook-based PUSCH transmission, the above-mentioned multiple SRS resource sets are SRS resource sets with usage set to be "nonCodeBook". The bit width of the first SRI field may be determined based on the number of resources included in the SRS resource set corresponding to the first SRI field and the maximum number of transmission layers.

$$\left\lceil \log_2 \left( \sum_{k=1}^{\min\{L_{\max}, N_{\mathrm{SRS}}\}} \binom{N_{\mathrm{SRS}}}{k} \right) \right\rceil$$

where $N_{\mathrm{SRS}}$ represents the number of resources included in the SRS resource set corresponding to the first SRI field; and $L_{max}$ is the maximum number of transmission layers.

In a preferable embodiment, the SRS resource set corresponding to the first SRI field here may be the SRS resource set with the lowest ID among the above multiple SRS resource sets (that is, the SRS resource set with the lowest ID among the SRS resource sets with usage set to be "nonCodeBook"), at this time $N_{\mathrm{SRS}}$ is the number of resources included in the SRS resource set with the lowest ID.

In addition, considering that the number of layers of the two TRPs is equal, the minimum value among the numbers of resources included in each of all SRS resource sets may limit the maximum number of transmission layers. Therefore, the bit width of the first SRI field may be determined based on the minimum value among the numbers of resources included in each of the above multiple SRS resource sets, which saves overhead. In an embodiment, the bit width of the first SRI field may be determined based on the number of resources included in the SRS resource set corresponding to the first SRI field and the minimum value among the numbers of resources included in each of the multiple SRS resource sets, or based on the number of resources included in the SRS resource set corresponding to the first SRI field, the maximum number of transmission layers and the minimum value among the numbers of resources included in each of the multiple SRS resource sets.

An example is that for a certain PUSCH transmission scheme, the above-mentioned multiple SRS resource sets have usage types corresponding to the PUSCH transmission scheme. The bit width of the first SRI field may be determined based on the number of resources included in the SRS resource set corresponding to the first SRI field and the minimum value among the numbers of resources included in each of the multiple SRS resource sets by the following formula:

$$\left\lceil log_2\left(\sum_{k=1}^{N_{\mathrm{SRS,min}}} \binom{N_{\mathrm{SRS}}}{k}\right)\right\rceil$$

where $N_{\mathrm{SRS}}$ is the number of resources included in the SRS resource set corresponding to the first SRI field, and $N_{\mathrm{SRS},min}$ is the minimum value among the numbers of resources included in each of the above multiple SRS resource sets. NonCodebook-based PUSCH transmission is taken as an example. The above multiple SRS resource sets are SRS resource sets with usage set to be "nonCodeBook". The bit width of the first SRI field may be determined based on the number of resources included in the SRS resource set corresponding to the first SRI field, and the minimum value among the numbers of resources included in each of the multiple SRS resource sets by the following formula:

$$\left\lceil log_2\left(\sum_{k=1}^{N_{\mathrm{SRS,min}}} \binom{N_{\mathrm{SRS}}}{k}\right)\right\rceil$$

where $N_{\mathrm{SRS}}$ is the number of resources included in the SRS resource set corresponding to the first SRI field, and $N_{\mathrm{SRS},min}$ is the minimum value among the numbers of resources included in each of the above multiple SRS resource sets.

In a preferable embodiment, the SRS resource set corresponding to the first SRI field here may be the SRS resource set with the lowest ID among the above multiple SRS resource sets, at this time $N_{\mathrm{SRS}}$ is the number of resources included in the SRS resource set with the lowest ID.

An example is that for a certain PUSCH transmission scheme, the above-mentioned multiple SRS resource sets have usage types corresponding to the PUSCH transmission scheme. The bit width of the first SRI field may be determined based on the number of resources included in the SRS resource set corresponding to the first SRI field, the maximum number of transmission layers and the minimum value among the numbers of resources included in each of the multiple SRS resource sets by the following formula:

$$\left\lceil \log_2\left(\sum_{k=1}^{\min\{L_{\max},N_{\mathrm{SRS,min}}\}} \binom{N_{\mathrm{SRS}}}{k}\right)\right\rceil$$

where $N_{\mathrm{SRS}}$ is the number of resources included in the SRS resource set corresponding to the first SRI field, $L_{max}$ is the maximum number of transmission layers, and $N_{\mathrm{SRS},min}$ is the minimum value among the numbers of resources included in each of the above multiple SRS resource sets. For example, for non Code book-based PUSCH transmission, the above-mentioned multiple SRS resource sets are SRS resource sets with usage set to be "nonCodeBook". The bit width of the first SRI field may be determined based on the number of resources included in the SRS resource set corresponding to the first SRI field, the maximum number of transmission layers and the minimum value among the numbers of resources included in each of the multiple SRS resource sets by the following formula:

$$\left\lceil \log_2 \left( \sum_{k=1}^{\min\{L_{\max}, N_{\text{SRS,min}}\}} \binom{N_{\text{SRS}}}{k} \right) \right\rceil$$

where $N_{\text{SRS}}$ is the number of resources included in the SRS resource set corresponding to the first SRI field, $L_{max}$ is the maximum number of transmission layers, and $N_{\text{SRS},min}$ is the minimum value among the numbers of resources included in each of the above multiple SRS resource sets (resource sets with usage set to be "nonCodeBook").

In a preferable embodiment, the SRS resource set corresponding to the first SRI field here may be the SRS resource set with the lowest ID among the above multiple SRS resource sets, at this time $N_{\text{SRS}}$ is the number of resources included in the SRS resource set with the lowest ID.

According to the above embodiment, among the multiple SRI fields included in the DCI, a second SRI field indicates the number of transmission layers and SRS resources corresponding to the second SRI field, and SRI fields other than the second SRI field among the multiple SRI fields indicate SRS resources corresponding to the number of transmission layers; and

the number of resources included in the SRS resource set corresponding to the second SRI field is equal to or greater than the number of resources included in each of SRS resource sets other than the SRS resource set corresponding to the second SRI field among the multiple SRS resource sets.

In an embodiment, in order to ensure that DCI may indicate any SRI combination in case that the DCI indicates single-TRP based PUSCH transmission, the embodiment of the present application no longer limits the first SRI field to indicate both the SRS resource and the number of transmission layers, but the second SRI field to indicate both SRS resource and number of transmission layers.

Here, the second SRI field refers to the SRI field corresponding to the SRS resource set with the largest number of resources included among the multiple SRS resource sets. The second SRI field may be any one of the multiple SRI fields included in the DCI.

In case that the number of SRS resources configured in the SRS resource set corresponding to the first SRI field is greater than or equal to the number of resources included in each of the other SRS resource sets, the first SRI field may be determined as the second SRI field, and the first SRI field also indicates the number of transmission layers and the SRS resource corresponding to the first SRI field. In case that the number of SRS resources configured in the SRS resource set corresponding to the first SRI field is less than the number of resources included in one of the other SRS resource sets, the first SRI field is not the second SRI field, the second SRI field simultaneously indicates the number of transmission layers and the SRS resources corresponding to the second SRI field, and the first SRI field only indicates SRS resources corresponding to the number of transmission layers indicated by the second SRI field.

According to the above embodiment, the second SRI field is one of the first SRI fields.

It should be noted that the second SRI field indicating both the SRS resource and the number of transmission layers may be one of the first SRI fields. For example, in case that the SRS resource set corresponding to the first SRI field is configured as SRS resources having the number greater than or equal to the number of resources included in each of the other SRS resource sets, the first SRI field may be determined as the second SRI field.

Based on the above embodiment, step 120 includes:

determining the bit width of the first SRI field based on a maximum value among numbers of resources included in each of the multiple SRS resource sets.

In an embodiment, in case that the bit width of the first SRI field is determined, the number of resources included in all the SRS resource sets in the above multiple SRS resource sets may be fully considered, and a maximum number of resources included in each of all SRS resource sets may be determined. For example, there are two SRS resource sets. The number of resources included in the first SRS resource set is 2, and the number of resources included in another SRS resource set is 3. The maximum value among numbers of resources included in each of the two SRS resource sets is 3. The number 3 of resources may be determined as the bit width of the first SRI field.

For example, the bit width $N_1$ of the first SRI field is determined to be 0 in case that the maximum value among the numbers of resources included in all SRS resource sets is 1; the bit width $N_1$ of the first SRI field is determined to be 1 in case that the maximum value among the numbers of resources included in all SRS resource sets is 2; the bit width $N_1$ of the first SRI field is determined to be 3 in case that the maximum value among the numbers of resources included in all SRS resource sets is 3; the bit width $N_1$ of the first SRI field is determined to be 4 in case that the maximum value among the numbers of resources included in all SRS resource sets is 4.

For example, the bit width of the first SRI field may be $\lceil log_2(N_{\text{SRS,max}})\rceil$, where $N_{\text{SRS,max}}$ is the maximum value among the numbers of resources included in each of the above multiple SRS resource sets. For example, for the codebook-based PUSCH transmission, the above-mentioned multiple SRS resource sets are SRS resource sets with usage set to be "nonCodeBook". The bit width of the first SRI field may be $\lceil log_2(N_{\text{SRS,max}})\rceil$, where $N_{\text{SRS,max}}$ represents the maximum value among the numbers of resources included in each of the above multiple SRS resource sets. Two SRS resource sets are taken as an example, assuming that the numbers of SRS resources included in each of the two SRS resource sets are N1 and N2 respectively, then $N_{\text{SRS,max}}=\max (N1, N2)$.

As an example, the bit width of the first SRI field is:

$$\left\lceil log_2\left( \sum_{k=1}^{N_{\text{SRS,max}}} \binom{N_{\text{SRS,max}}}{k} \right) \right\rceil$$

where $N_{\text{SRS,max}}$ is the maximum value among the numbers of resources included in each of the above multiple SRS resource sets. NonCodebook-based PUSCH transmission is taken as an example, the above multiple SRS resource sets are SRS resource sets with usage set to be "nonCodeBook". The bit width of the first SRI field may be:

$$\left\lceil log_2\left( \sum_{k=1}^{N_{\text{SRS,max}}} \binom{N_{\text{SRS,max}}}{k} \right) \right\rceil$$

where $N_{\text{SRS,max}}$ is the maximum value among the numbers of resources included in each of the above multiple SRS resource sets. Two SRS resource sets are taken as an example, assuming that the numbers of SRS resources included in each of the two SRS resource sets are N1 and N2 respectively, then $N_{\text{SRS,max}}=\max (N1, N2)$.

In the resource indication method provided by the embodiment of the present application, the bit width of the first SRI field is determined by determining the maximum value among the numbers of resources included in each of the above multiple SRS resource sets, and the problem that it is impossible to indicate any SRI combination in case that the DCI indicates single-TRP based PUSCH transmission may be solved and the PUSCH transmission performance is ensured.

Based on the above embodiment, step 120 includes:
determining the bit width of the first SRI field based on the maximum value among the numbers of resources included in each of the multiple SRS resource sets and at least one of a minimum value among numbers of resources included in each of the multiple SRS resource sets and a maximum number of transmission layers.

In an embodiment, the bit width of the first SRI field may be determined based on the maximum value among numbers of resources included in each of the multiple SRS resource sets and the maximum number of transmission layers, or may also be determined based on the maximum value among numbers of resources included in each of the multiple SRS resource sets, and the minimum value among the numbers of resources included in each of the multiple SRS resource sets, and may also be determined based on the maximum value among numbers of resources included in each of the multiple SRS resource sets, the maximum number of transmission layers and the minimum value among the numbers of resources included in each of the multiple SRS resource sets.

Here, the reason why the bit width of the first SRI field may be determined based on the minimum value among the numbers of resources included in each of all SRS resource sets is considering that the number of layers of the two TRPs is equal, the minimum value among the numbers of resources included in each of all SRS resource sets may limit the maximum number of transmission layers. Therefore, the bit width of the first SRI field may be determined based on the minimum value among the numbers of resources included in each of the above multiple SRS resource sets, which saves overhead.

The maximum number of transmission layers $L_{max}$ may be configured by the network side device or determined based on capabilities of the terminal. For example, the maximum number of transmission layers $L_{max}$ may be obtained under the two following cases.

One case is that the terminal supports a maximum number of multiple input multiple output (MIMO) layers (operation with maxMIMO-Layers), and a higher layer signaling parameter maxMIMO-Layer in PUSCH-ServingCellConfig is configured, and the maximum number of transmission layers $L_{max}$ is obtained through the higher layer signaling parameter maxMIMO-Layer.

Another case is that the terminal does not support the operation with maxMIMO-Layers. In this case, the maximum number of transmission layers $L_{max}$ is a maximum number of PUSCH transmission layers supported by the terminal for the nonCodebook-based PUSCH transmission in a serving cell.

As an example, the bit width of the first SRI field is determined by the following formula:

$$\left\lceil \log_2 \left( \sum_{k=1}^{\min\{L_{\max}, N_{SRS,\max}\}} \binom{N_{SRS,\max}}{k} \right) \right\rceil$$

where $N_{SRS,max}$ is the maximum value among the numbers of resources included in each of the above multiple SRS resource sets, and $L_{max}$ is the maximum number of transmission layers. For example, for the nonCodebook-based PUSCH transmission, the above-mentioned multiple SRS resource sets are SRS resource sets with usage set to be "nonCodeBook". The bit width of the first SRI field may be determined based on the maximum value among the number of resources included in each of the above multiple SRS resource sets and the maximum number of transmission layers:

$$\left\lceil \log_2 \left( \sum_{k=1}^{\min\{L_{\max}, N_{SRS,\max}\}} \binom{N_{SRS,\max}}{k} \right) \right\rceil$$

where $N_{SRS,max}$ is the maximum value among the numbers of resources included in each of the above multiple SRS resource sets and $L_{max}$ is the maximum number of transmission layers. Two SRS resource sets are taken as an example, assuming that the numbers of SRS resources included in each of the two SRS resource sets are N1 and N2 respectively, then $N_{SRS,max}$=max (N1, N2). As another example, the bit width of the first SRI field is determined by the following formula:

$$\left\lceil \log_2 \left( \sum_{k=1}^{N_{SRS,\min}} \binom{N_{SRS,\max}}{k} \right) \right\rceil$$

where $N_{SRS,max}$ is the maximum value among the numbers of resources included in each of the above multiple SRS resource sets, and $N_{SRS,min}$ is the minimum value among the numbers of resources included in each of the above multiple SRS resource sets. For example, for nonCodebook-based PUSCH transmission, the above-mentioned multiple SRS resource sets are SRS resource sets with usage set to be "nonCodeBook". The bit width of the first SRI field may be determined based on the maximum value among the numbers of resources included in each of the above multiple SRS resource sets and the minimum value among the numbers of resources included in each of the above multiple SRS resource sets:

$$\left\lceil \log_2 \left( \sum_{k=1}^{N_{SRS,\min}} \binom{N_{SRS,\max}}{k} \right) \right\rceil$$

where $N_{SRS,max}$ is the maximum value among the numbers of resources included in each of the above multiple SRS resource sets, and $N_{SRS,min}$ is the minimum value among the numbers of resources included in each of the above multiple SRS resource sets. Two SRS resource sets are taken as an example, assuming that the numbers of SRS resources included in each of the two SRS resource sets are N1 and N2 respectively, then $N_{SRS,max}$=max (N1, N2) and $N_{SRS,min}$= min (N1, N2).

As another example, the bit width of the first SRI field is determined by the following formula:

$$\left\lceil \log_2 \left( \sum_{k=1}^{\min\{L_{\max}, N_{\mathrm{SRS,\ min}}\}} \binom{N_{\mathrm{SRS,max}}}{k} \right) \right\rceil$$

where $N_{\mathrm{SRS,max}}$ is the maximum value among the numbers of resources included in each of the above multiple SRS resource sets, $N_{\mathrm{SRS},min}$ is the minimum value among the numbers of resources included in each of the above multiple SRS resource sets, and $L_{max}$ is the maximum number of transmission layers.

For example, for nonCodebook-based PUSCH transmission, the above-mentioned multiple SRS resource sets are SRS resource sets with usage set to be "nonCodeBook". The bit width of the first SRI field may be determined based on the maximum value among the numbers of resources included in each of the above multiple SRS resource sets, the maximum number of transmission layers and the minimum value among the numbers of resources included in each of the above multiple SRS resource sets:

$$\left\lceil \log_2 \left( \sum_{k=1}^{\min\{L_{\max}, N_{\mathrm{SRS,\ min}}\}} \binom{N_{\mathrm{SRS,max}}}{k} \right) \right\rceil$$

where $N_{\mathrm{SRS,max}}$ is the maximum value among the numbers of resources included in each of the above multiple SRS resource sets, $N_{\mathrm{SRS},min}$ is the minimum value among the numbers of resources included in each of the above multiple SRS resource sets, and $L_{max}$ is the maximum number of transmission layers. Two SRS resource sets are taken as an example, assuming that the numbers of SRS resources included in each of the two SRS resource sets are N1 and N2 respectively, then $N_{\mathrm{SRS,max}}$=max (N1, N2) and $N_{\mathrm{SRS,min}}$= min (N1, N2).

According to the above embodiment, in case that numbers of resources included in the multiple SRS resource sets are the same, the bit width of the first SRI field is determined based on the number of resources included in one SRS resource set among the multiple SRS resource sets.

In an embodiment, for codebook-based PUSCH transmission, the above-mentioned multiple SRS resource sets are SRS resource sets with usage set to be "codeBook". Assuming that the above-mentioned multiple SRS resource sets include the same number of resources, the bit width of the first SRI field may be $\lceil log_2(N_{\mathrm{SRS}}) \rceil$, where $N_{\mathrm{SRS}}$ may be the number of resources included in any SRS resource set and a symbol $\lceil \ \rceil$ indicates rounding up to an integer.

For the nonCodebook-based PUSCH transmission, the above-mentioned multiple SRS resource sets are SRS resource sets with usage set to be "nonCodeBook". Assuming that the above-mentioned multiple SRS resource sets include the same number of resources, the bit width of the first SRI field may be:

$$\left\lceil log_2 \left( \sum_{k=1}^{N_{\mathrm{SRS}}} \binom{N_{\mathrm{SRS}}}{k} \right) \right\rceil$$

where $N_{\mathrm{SRS}}$ may be the number of resources included in any SRS resource set.

Further, in case that numbers of resources included in the multiple SRS resource sets are the same, the bit width of the first SRI field is determined based on the number of resources included in one SRS resource set among the multiple SRS resource sets and the maximum number of transmission layers.

The maximum number of transmission layers $L_{max}$ may be configured by the network side device or determined based on capabilities of the terminal. For example, the maximum number of transmission layers $L_{max}$ may be obtained under the two following cases.

One case is that the terminal supports a maximum number of multiple input multiple output (MIMO) layers (operation with maxMIMO-Layers), and a higher layer signaling parameter maxMIMO-Layer in PUSCH-ServingCellConfig is configured, and the maximum number of transmission layers $L_{max}$ is obtained through the higher layer signaling parameter maxMIMO-Layer.

Another case is that the terminal does not support the operation with maxMIMO-Layers. In this case, the maximum number of transmission layers $L_{max}$ is a maximum number of PUSCH transmission layers supported by the terminal for the nonCodebook-based PUSCH transmission in a serving cell.

In an embodiment, for the nonCodebook-based PUSCH transmission, assuming that numbers of resources included in the multiple SRS resource sets are the same, the bit width of the first SRI field may be determined based on the number of resources included in one SRS resource set among the multiple SRS resource sets and the maximum number of transmission layers:

$$\left\lceil \log_2 \left( \sum_{k=1}^{\min\{L_{\max}, N_{\mathrm{SRS}}\}} \binom{N_{\mathrm{SRS}}}{k} \right) \right\rceil$$

where $N_{\mathrm{SRS}}$ may be the number of resources included in any SRS resource set.

In the method provided by the embodiments of the present application, in case that numbers of resources included in the multiple SRS resource sets are the same, the bit width of the first SRI field may be determined based on the number of resources included in one SRS resource set among the multiple SRS resource sets, which has the advantages of simple implementation and low terminal complexity.

According to the above embodiment, a bit width of a third SRI field other than the first SRI field among the multiple SRI fields is determined based on at least one of the number of resources included in an SRS resource set corresponding to the third SRI field, a minimum value among the numbers of resources included in each of the multiple SRS resource sets, and the maximum number of transmission layers.

In an embodiment, SRI fields other than the first SRI field among the multiple SRI fields in the DCI may be used as the third SRI field. Here, the number of the third SRI fields may be one or multiple.

A preset correspondence may be present between the third SRI field in the DCI and the above multiple SRS resource sets. The correspondence here may be a one-to-one correspondence between each third SRI field and the SRS resource set, or one third SRI field corresponds to one or more SRS resource sets, or one SRS resource set corresponds to one or more third SRI fields, which is not specifically limited in the embodiments of the present application. The specific correspondence may be obtained through the ID of the SRS resource sets and the sequence number of the SRS resource set in the SRS resource set list, etc. For example, the third SRI field with the Nth sequence number or the Nth ID may correspond to an SRS resource set with the Nth lower ID or the Nth higher ID. For another example, the third SRI field with the Nth sequence number or the Nth ID may correspond to an SRS resource set with the Nth lower sequence number or the Nth higher sequence number.

The bit width of the third SRI field in the DCI may be determined based on the number of resources included in the SRS resource set corresponding to the third SRI field. For example, the SRS resource set corresponding to the third SRI field with the Nth sequence number or the Nth ID is the SRS resource set with the Nth lower ID among the above multiple SRS resource sets, and the bit width of the third SRI field with the Nth sequence number or the Nth ID may be determined based on the number of resources included in the SRS resource set with the Nth lower ID.

As an example, the bit width of the third SRI field is determined by the following formula: $\lceil log_2(N_{\mathrm{SRS\text{-}N}}) \rceil$, where $N_{\mathrm{SRS\text{-}N}}$ represents the number of resources included in the SRS resource set corresponding to the third SRI field.

For example, for the codebook-based PUSCH transmission, the above-mentioned multiple SRS resource sets are SRS resource sets with usage set to be "codeBook". The bit width of the third SRI field may be $\lceil log_2(N_{\mathrm{SRS\text{-}N}}) \rceil$, where $N_{\mathrm{SRS\text{-}N}}$ represents the number of resources included in the SRS resource set corresponding to the third SRI field. In a preferable embodiment, the SRS resource set corresponding to the third SRI field with the Nth sequence number or the Nth ID may be the SRS resource set with the Nth lower ID among the above multiple SRS resource sets.

As an example, the bit width of the third SRI field is determined by the following formula:

$$\left\lceil log_2 \left( \sum_{k=1}^{N_{\mathrm{SRS\text{-}N}}} \binom{N_{\mathrm{SRS\text{-}N}}}{k} \right) \right\rceil$$

where $N_{\mathrm{SRS\text{-}N}}$ represents the number of resources included in the SRS resource set corresponding to the third SRI field. For example, for the nonCodebook-based PUSCH transmission, the above multiple SRS resource sets are SRS resource sets with usage set to be "nonCodeBook". The bit width of the third SRI field may be:

$$\left\lceil log_2 \left( \sum_{k=1}^{N_{\text{SRS-N}}} \binom{N_{\text{SRS-N}}}{k} \right) \right\rceil$$

where $N_{\text{SRS-N}}$ represents the number of resources included in the SRS resource set corresponding to the third SRI field. In a preferable embodiment, the SRS resource set corresponding to the third SRI field with the Nth sequence number or the Nth ID may be the SRS resource set with the Nth lower ID among the above multiple SRS resource sets.

In addition, the bit width of the third SRI field may also be determined based on the number of resources included in the SRS resource set corresponding to the third SRI field and the number of transmission layers indicated by the first SRI field. One possible way is that: in case that the third SRI field corresponds to the SRS resource set with the Nth lower ID among the above multiple SRS resource sets, the bit width $N_N$ of the third SRI field is determined based on a maximum value among numbers of code points (codepoints) of the number of the SRS resources included in the SRS resource set with the Nth lower ID corresponding to each rank of all ranks that may be indicated by the first SRI field. For any rank value x, the first $K_x$ code points are mapped to $K_x$ SRI values corresponding to the rank value x, and the remaining ($2^{N_N} - K_x$) code points are reserved values.

In addition, the bit width of the third SRI field in the DCI may also be associated with the maximum number of transmission layers. For example, the bit width of the third SRI field may be determined based on the number of resources included in the SRS resource set corresponding to the third SRI field and the maximum number of transmission layers.

As an example, the bit width of the third SRI field is determined by the following formula:

$$\left\lceil \log_2 \left( \sum_{k=1}^{\min\{L_{\max}, N_{\text{SRS-N}}\}} \binom{N_{\text{SRS-N}}}{k} \right) \right\rceil$$

where $N_{\text{SRS-N}}$ represents the number of resources included in the SRS resource set corresponding to the third SRI field; and $L_{max}$ is the maximum number of transmission layers. For example, for the nonCodebook-based PUSCH transmission, the above-mentioned multiple SRS resource sets are SRS resource sets with usage set to be "non-CodeBook". The bit width of the third SRI field may be determined based on the number of resources included in the SRS resource set corresponding to the third SRI field and the maximum number of transmission layers by the following formula:

$$\left\lceil \log_2 \left( \sum_{k=1}^{\min\{L_{\max}, N_{\text{SRS-N}}\}} \binom{N_{\text{SRS-N}}}{k} \right) \right\rceil$$

where $N_{\text{SRS-N}}$ represents the number of resources included in the SRS resource set corresponding to the third SRI field; and $L_{max}$ is the maximum number of transmission layers. In a preferable embodiment, the SRS resource set corresponding to the third SRI field may be the SRS resource set with the Nth lower ID among the above multiple SRS resource sets.

Furthermore, the bit width of the third SRI field in the DCI may also be associated with a minimum value among the numbers of resources included in each of the above multiple SRS resource sets. For example, the bit width of the third SRI field may also be determined based on the number of resources included in the SRS resource set corresponding to the third SRI field, the maximum number of transmission layers and the minimum value among the numbers of resources included in each of the above multiple SRS resource sets.

As an example, the bit width of the third SRI field is determined by the following formula:

$$\left\lceil \log_2 \left( \sum_{k=1}^{\min\{L_{\max}, N_{\text{SRS,min}}\}} \binom{N_{\text{SRS-N}}}{k} \right) \right\rceil$$

where $N_{\text{SRS-N}}$ is the number of resources included in the SRS resource set corresponding to the third SRI field, $L_{max}$ is the maximum number of transmission layers, and $N_{\text{SRS},min}$ is the minimum value among the numbers of resources included in each of the above multiple SRS resource sets. For example, for nonCodebook-based PUSCH transmission, the above-mentioned multiple SRS resource sets all have usages set to be "nonCodeBook". The bit width of the third SRI field may be determined based on the number of resources included in the SRS resource set corresponding to the third SRI field, the maximum number of transmission layers and the minimum value among the numbers of resources included in each of the multiple SRS resource sets by the following formula:

$$\left\lceil \log_2 \left( \sum_{k=1}^{\min\{L_{\max}, N_{\text{SRS,min}}\}} \binom{N_{\text{SRS-N}}}{k} \right) \right\rceil$$

where $N_{\text{SRS-N}}$ is the number of resources included in the SRS resource set corresponding to the third SRI field, $L_{max}$ is the maximum number of transmission layers, and $N_{\text{SRS},min}$ is the minimum value among the numbers of resources included in each of the above multiple SRS resource sets. In a preferable embodiment, the SRS resource set corresponding to the third SRI field may be the SRS resource set with the Nth lower ID among the above multiple SRS resource sets.

The bit width of the third SRI field may also be determined based on the minimum value among the numbers of resources included in each of the above multiple SRS resource sets and the number of transmission layers indicated by the first SRI field. One possible way is that: the bit width $N_N$ of the third SRI field is determined based on a maximum value among numbers of code points (codepoints) of the number of resources included in the SRS resource set with the minimum number of resources included in all SRS resource sets corresponding to each rank of all ranks that may be indicated by the first SRI field. For any rank value x, the first $K_x$ code points are mapped to $K_x$ SRI values corresponding to the rank value x, and the remaining ($2^{N_N} - K_x$) code points are reserved values.

According to the above embodiment, the number of transmission layers that may be indicated by the first SRI field is determined based on the minimum value among the numbers of resources included in each of the multiple SRS resource sets and/or the maximum number of transmission layers.

In an embodiment, the number of transmission layers that may be indicated by the first SRI field may be determined based on the minimum value among the numbers of resources included in each of the multiple SRS resource sets. For example, the number of layers that may be indicated by the first SRI field is 1 to the minimum value among the numbers of resources included in each of the above-mentioned multiple SRS resource sets. Assuming that the minimum number of resources included in each of the above multiple SRS resource sets is 3, the number of transmission layers that may be indicated by the first SRI field includes 1, 2, and 3.

The number of transmission layers that may be indicated by the first SRI field may also be determined based on the maximum number of transmission layers. For example, the number of layers that may be indicated by the first SRI field is 1 to the maximum number of transmission layers. Assuming that the maximum number of transmission layers is 2, the number of transmission layers that may be indicated includes 1 and 2.

The number of transmission layers that may be indicated by the first SRI field may also be determined based on the minimum value among the numbers of resources included in each of the multiple SRS resource sets and the maximum number of transmission layers. For example, the number of layers that may be indicated by the first SRI field is 1 to $min\{L_{max}, N_{\text{SRS},min}\}$, where $L_{max}$ is the maximum number of transmission layers, and $N_{\text{SRS},min}$ is the minimum value among the numbers of resources included in each of the above-mentioned multiple SRS resource sets. Assuming that the minimum number of resources included in each of the above multiple SRS resource sets is 3 and the maximum number of transmission layers is 2, then the number of transmission layers that may be indicated by the first SRI field includes 1 and 2.

According to the above embodiment, the coding scheme of the first SRI field is determined based on the number of resources included in the SRS resource set to which the SRS resource indicated by the first SRI field belongs. In an embodiment, the coding scheme of the first SRI field may be reflected as a correspondence between each index field bit field mapped to index and SRI combinations, where the bit width of the first SRI field determines a maximum number of the SRI combinations that may be indicated by the first SRI field. For example, the first SRI field may indicate up to 4 SRI combinations in case that the bit width of the first SRI field is 2 and the first SRI field may indicate up to 8 SRI combinations in case that the bit width of the first SRI field is 3. The number of resources included in the SRS resource set to which the SRS resource indicated by the first SRI field belongs determines the number of valid SRI combinations that may be available from the first SRI field. For example, up to three valid SRI combinations may be formed in case that the number of resources included in the SRS resource set to which the SRS resource indicated by the first SRI field belongs is 2.

Redundant SRI combinations that may be indicated may be reserved in case that the maximum number of the SRI combinations that may be indicated by the first SRI field determined based on the bit width of the first SRI field is greater than the number of valid SRI combinations that may be available from the first SRI field determined based on the number of resources included in the SRS resource set to which the SRS resource indicated by the first SRI field belongs.

According to the above embodiment, the coding scheme of the first SRI field is determined based on the number of resources included in the SRS resource set to which the SRS resource indicated by the first SRI field belongs and at least one of the minimum value among the numbers of resources included in each of the multiple SRS resource sets and the maximum number of transmission layers.

In an embodiment, during actual coding, not only the number of resources included in the SRS resource set to which the SRS resource indicated by the first SRI field belongs needs to be considered, but also the maximum number of transmission layers and/or the minimum value among the numbers of resources included in each of the multiple SRS resource sets need to be considered. Both of them may limit the number of SRS resources in the SRI combination, which limits the number of valid SRI combinations. For example, the number of resources included in the SRS resource set to which the SRS resource indicated by the first SRI field belongs is 4, and the maximum number of transmission layers is 3, then the maximum value among the numbers of resources included in the valid SRI combination in the coding is 3.

According to the above embodiment, the multiple SRI fields in the DCI are in one-to-one correspondence with the multiple SRS resource sets.

Here, the correspondence between each SRI field in the DCI and each of the above multiple SRS resource sets may be that the Nth SRI field corresponds to the SRS resource set with the Nth lower ID or the Nth higher ID. For another example, the Nth SRI field corresponds to the SRS resource set with the Nth lower sequence number or the Nth higher sequence number, etc.

The Nth SRI field corresponding to the SRS resource set with the Nth lower ID is taken as an example. On this basis, in case that each SRS resource set is configured, the number of resources included in the SRS resource set with the lowest ID is configured to be not less than the number of resources included in each of the remaining SRS resource sets. That is, it ensures that the bit width of the first SRI field does not limit the PUSCH transmission performance. Alternatively, after the configuration for each SRS resource set is completed, the SRI field corresponding to the SRS resource set including the most SRS resources is determined as the first SRI field, and the first SRI field indicates both the SRS resources and the number of transmission layers, and the limitation to the PUSCH transmission performance may be avoided.

For example, DCI includes two SRI fields. The first SRI field corresponds to the first SRS resource set. The bit width of the first SRI field is determined based on the number of resources included in the first SRS resource set. The another SRI field corresponds to the second SRS resource set. The bit width of the another SRI field is determined based on the number of resources included in the second SRS resource set.

According to the above embodiment, Embodiment one is provided for a case where the first SRI field corresponds to the SRS resource set with the lowest ID, and the number of resources included in the SRS resource set with the lowest ID is greater than or equal to the number of resources included in each of the other SRS resource sets.

Embodiment one: Assuming that the network side device configures two SRS resource sets with usage set to "nonCodeBook" for the terminal. The terminal expects that the number of resources included in the first SRS resource set is greater than the number of resources included in the second SRS resource set.

The bit width and coding scheme of the two SRS fields in the DCI include one or a combination of the following:

> (1) The SRS resource set with the lowest ID (or the smallest ID) includes one SRS resource, and the another SRS resource set includes one SRS resource.
> The bit width of the first SRI field and the another SRI field are both 0.
> (2) The SRS resource set with the lowest ID (or the smallest ID) includes two SRS resources, and the another SRS resource set includes one SRS resource.

In case that $L_{max}=1$, the bit width of the first SRI field is 1 (in an embodiment, which is obtained by the formula:

$$\left\lceil \log_2 \left( \sum_{k=1}^{\min\{L_{\max}, N_{SRS}\}} \binom{N_{SRS}}{k} \right) \right\rceil$$ );

in case that $L_{max}$= 2 or $L_{max}$ = 3 or $L_{max}$= 4, the bit width of the first SRI field is 2 (in an embodiment, which is obtained

$$\left\lceil \log_2 \left( \sum_{k=1}^{\min\{L_{\max}, N_{\mathrm{SRS}}\}} \binom{N_{\mathrm{SRS}}}{k} \right) \right\rceil$$

by the formula:                                                    );
the bit width of the another SRI field is 0.

In an embodiment, in case that $L_{max}$=1,
in case that a PUSCH transmission scheduled by the DCI is associated with the SRS resource set with the lowest ID, the coding scheme of the first SRI field is shown in Table 2. In case that the PUSCH transmission scheduled by the DCI is only associated with the SRS resource set with the higher ID, all states of the first SRI field are reserved.

Table 2

| Bit field mapped to index | SRI(s) |
|---|---|
| 0 | 0 |
| 1 | 1 |

In an embodiment, in case that $L_{max}$=2 or $L_{max}$=3 or $L_{max}$=4,
in case that the PUSCH transmission scheduled by the DCI is associated with the SRS resource set with the lowest ID, the coding scheme of the first SRI field is shown in Table 3. In case that the PUSCH transmission scheduled by the DCI is only associated with the SRS resource set with the higher ID, all states of the first SRI field are reserved.

Table 3

| Bit field mapped to index | SRI(s) |
|---|---|
| 0 | 0 |
| 1 | 1 |
| 2 | 0, 1 |
| 3 | reserved |

(3) The SRS resource set with the lowest ID (or the smallest ID) includes three SRS resources, and the another SRS resource set includes one SRS resource.
In case that $L_{max}$=1, the bit width of the first SRI field is 2 (in an embodiment, which is obtained by the formula:

$$\left\lceil \log_2 \left( \sum_{k=1}^{\min\{L_{\max}, N_{\mathrm{SRS}}\}} \binom{N_{\mathrm{SRS}}}{k} \right) \right\rceil$$

);

in case that $L_{max}$=2, the bit width of the first SRI field is 3 (in an embodiment, which is obtained by the formula:

$$\left\lceil \log_2 \left( \sum_{k=1}^{\min\{L_{\max}, N_{\mathrm{SRS}}\}} \binom{N_{\mathrm{SRS}}}{k} \right) \right\rceil$$

);

in case that $L_{max}$=3 or $L_{max}$=4, the bit width of the first SRI field is 3 (in an embodiment, which is obtained by the

formula:
$$\left\lceil \log_2 \left( \sum_{k=1}^{\min\{L_{\max}, N_{\mathrm{SRS}}\}} \binom{N_{\mathrm{SRS}}}{k} \right) \right\rceil$$

);

the bit width of the another SRI field is 0.

In an embodiment, in case that $L_{max}$=1,
in case that the PUSCH transmission scheduled by the DCI is associated with the SRS resource set with the lowest ID, the coding scheme of the first SRI field is shown in Table 4. In case that the PUSCH transmission scheduled by the DCI is only associated with the SRS resource set with the higher ID, all states of the first SRI field are reserved.

Table 4

| Bit field mapped to index | SRI(s), $N_{SRS}$=3 |
| --- | --- |
| 0 | 0 |
| 1 | 1 |
| 2 | 2 |
| 3 | reserved |

In an embodiment, in case that $L_{max}$=2,
in case that the PUSCH transmission scheduled by the DCI is associated with the SRS resource set with the lowest ID, the coding scheme of the first SRI field is shown in Table 5. In case that the PUSCH transmission scheduled by the DCI is only associated with the SRS resource set with the higher ID, all states of the first SRI field are reserved.

Table 5

| Bit field mapped to index | SRI(s), $N_{SRS}$=3 |
| --- | --- |
| 0 | 0 |
| 1 | 1 |
| 2 | 2 |
| 3 | 0, 1 |
| 4 | 0, 2 |
| 5 | 1, 2 |
| 6-7 | reserved |

In an embodiment, in case that $L_{max}$=3 or $L_{max}$=4,
in case that the PUSCH transmission scheduled by the DCI is associated with the SRS resource set with the lowest ID, the coding scheme of the first SRI field is shown in Table 6. In case that the PUSCH transmission scheduled by the DCI is only associated with the SRS resource set with the higher ID, all states of the first SRI field are reserved.

Table 6

| Bit field mapped to index | SRI(s), $N_{SRS}$=3 |
| --- | --- |
| 0 | 0 |
| 1 | 1 |
| 2 | 2 |
| 3 | 0, 1 |
| 4 | 0, 2 |
| 5 | 1, 2 |
| 6 | 0, 1, 2 |
| 7 | reserved |

(4) The SRS resource set with the lowest ID (or the smallest ID) includes four SRS resources, and the another SRS resource set includes one SRS resource.

In case that $L_{max}=1$, the bit width of the first SRI field is 2 (in an embodiment, which is obtained by the formula:

$$\left\lceil \log_2\left(\sum_{k=1}^{\min\{L_{max},N_{SRS}\}} \binom{N_{SRS}}{k}\right)\right\rceil$$
);

in case that $L_{max}=2$, the bit width of the first SRI field is 4 (in an embodiment, which is obtained by the formula:

$$\left\lceil \log_2\left(\sum_{k=1}^{\min\{L_{max},N_{SRS}\}} \binom{N_{SRS}}{k}\right)\right\rceil$$
);

in case that $L_{max}=3$, the bit width of the first SRI field is 4 (in an embodiment, which is obtained by the formula:

$$\left\lceil \log_2\left(\sum_{k=1}^{\min\{L_{max},N_{SRS}\}} \binom{N_{SRS}}{k}\right)\right\rceil$$
);

in case that $L_{max}=4$, the bit width of the first SRI field is 4 (in an embodiment, which is obtained by the formula:

$$\left\lceil \log_2\left(\sum_{k=1}^{\min\{L_{max},N_{SRS}\}} \binom{N_{SRS}}{k}\right)\right\rceil$$
);

the bit width of the another SRI field is 0.

In an embodiment, in case that $L_{max}=1$, in case that the PUSCH transmission scheduled by the DCI is associated with the SRS resource set with the lowest ID, the coding scheme of the first SRI field is shown in Table 7. In case that the PUSCH transmission scheduled by the DCI is only associated with the SRS resource set with the higher ID, all states of the first SRI field are reserved.

Table 7

| Bit field mapped to index | SRI(s), $N_{SRS}=4$ |
| --- | --- |
| 0 | 0 |
| 1 | 1 |
| 2 | 2 |
| 3 | 3 |

In an embodiment, in case that $L_{max}=2$, in case that the PUSCH transmission scheduled by the DCI is associated with the SRS resource set with the lowest ID, the coding scheme of the first SRI field is shown in Table 8. In case that the PUSCH transmission scheduled by the DCI is only associated with the SRS resource set with the higher ID, all states of the first SRI field are reserved.

Table 8

| Bit field mapped to index | SRI(s), $N_{SRS}=4$ |
| --- | --- |
| 0 | 0 |

(continued)

| Bit field mapped to index | SRI(s), $N_{SRS}=4$ |
|---|---|
| 1 | 1 |
| 2 | 2 |
| 3 | 3 |
| 4 | 0, 1 |
| 5 | 0, 2 |
| 6 | 0, 3 |
| 7 | 1, 2 |
| 8 | 1, 3 |
| 9 | 2, 3 |
| 10-15 | reserved |

In an embodiment, in case that $L_{max}=3$,
in case that the PUSCH transmission scheduled by the DCI is associated with the SRS resource set with the lowest ID, the coding scheme of the first SRI field is shown in Table 9. In case that the PUSCH transmission scheduled by the DCI is only associated with the SRS resource set with the higher ID, all states of the first SRI field are reserved.

Table 9

| Bit field mapped to index | SRI(s), $N_{SRS}=4$ |
|---|---|
| 0 | 0 |
| 1 | 1 |
| 2 | 2 |
| 3 | 3 |
| 4 | 0, 1 |
| 5 | 0, 2 |
| 6 | 0, 3 |
| 7 | 1, 2 |
| 8 | 1, 3 |
| 9 | 2, 3 |
| 10 | 0, 1, 2 |
| 11 | 0, 1, 3 |
| 12 | 0, 2, 3 |
| 13 | 1, 2, 3 |
| 14-15 | reserved |

In an embodiment, in case that $L_{max}=4$,
in case that the PUSCH transmission scheduled by the DCI is associated with the SRS resource set with the lowest ID, the coding scheme of the first SRI field is shown in Table 10. In case that the PUSCH transmission scheduled by the DCI is only associated with the SRS resource set with the higher ID, all states of the first SRI field are reserved.

Table 10

| Bit field mapped to index | SRI(s), $N_{SRS}$=4 |
|---|---|
| 0 | 0 |
| 1 | 1 |
| 2 | 2 |
| 3 | 3 |
| 4 | 0, 1 |
| 5 | 0, 2 |
| 6 | 0, 3 |
| 7 | 1, 2 |
| 8 | 1, 3 |
| 9 | 2, 3 |
| 10 | 0, 1, 2 |
| 11 | 0, 1, 3 |
| 12 | 0, 2, 3 |
| 13 | 1,2,3 |
| 14 | 0, 1, 2, 3 |
| 15 | reserved |

(5) The SRS resource set with the lowest ID (or the smallest ID) includes two SRS resources, and the another SRS resource set includes two SRS resources.

In case that $L_{max}$=1, the bit width of the first SRI field is 1 (in an embodiment, which is obtained by the formula:

$$\left\lceil \log_2 \left( \sum_{k=1}^{\min\{L_{max}, N_{SRS}\}} \binom{N_{SRS}}{k} \right) \right\rceil$$

);

in case that $L_{max}$=2 or $L_{max}$=3 or $L_{max}$=4, the bit width of the first SRI field is 2 (in an embodiment, which is obtained

by the formula:
$$\left\lceil \log_2 \left( \sum_{k=1}^{\min\{L_{max}, N_{SRS}\}} \binom{N_{SRS}}{k} \right) \right\rceil$$
);

the bit width of the another SRI field is 1.

In an embodiment, in case that $L_{max}$ =1,
in case that the PUSCH transmission scheduled by the DCI is associated with the SRS resource set with the lowest ID or the SRS resource set with a higher ID, the coding scheme of the first SRI field is shown in Table 2.

In an embodiment, in case that $L_{max}$=2 or $L_{max}$=3 or $L_{max}$=4,
in case that the PUSCH transmission scheduled by the DCI is associated with the SRS resource set with the lowest ID or the SRS resource set with a higher ID, the coding scheme of the first SRI field is shown in Table 3.

In an embodiment, in case that the DCI indicates that the PUSCH transmission corresponds to two SRS resource sets, the coding scheme of the another SRI field is as follows:
- in case that the first SRI field indicates one SRS resource (or in case that the number of layers indicated by the first SRI field is 1), the coding scheme of the another SRI field is shown in Table 2;
- in case that the first SRI field indicates two SRS resources (or in case that the number of layers indicated by the first SRI field is 2), the coding scheme of the another SRI field is shown in Table 11.

Table 11

| Bit field mapped to index | SRI(s) |
| --- | --- |
| 0 | 0, 1 |
| 1 | Reserved |

(6) The SRS resource set with the lowest ID (or the smallest ID) includes four SRS resources, and the another SRS resource set includes two SRS resources.

In case that $L_{max}$=1, the bit width of the first SRI field is 2 (in an embodiment, which is obtained by the formula:

$$\left\lceil \log_2\left(\sum_{k=1}^{\min\{L_{\max},N_{SRS}\}}\binom{N_{SRS}}{k}\right)\right\rceil$$

);

in case that $L_{max}$=2, the bit width of the first SRI field is 4 (in an embodiment, which is obtained by the formula:

$$\left\lceil \log_2\left(\sum_{k=1}^{\min\{L_{\max},N_{SRS}\}}\binom{N_{SRS}}{k}\right)\right\rceil$$

);

in case that $L_{max}$=3, the bit width of the first SRI field is 4 (in an embodiment, which is obtained by the formula:

$$\left\lceil \log_2\left(\sum_{k=1}^{\min\{L_{\max},N_{SRS}\}}\binom{N_{SRS}}{k}\right)\right\rceil$$

);

in case that $L_{max}$=4, the bit width of the first SRI field is 4 (in an embodiment, which is obtained by the formula:

$$\left\lceil \log_2\left(\sum_{k=1}^{\min\{L_{\max},N_{SRS}\}}\binom{N_{SRS}}{k}\right)\right\rceil$$

);

the bit width of the another SRI field is 1.

In an embodiment, in case that $L_{max}$=1, in case that the PUSCH transmission scheduled by the DCI is associated with the SRS resource set with the lowest ID, the coding scheme of the first SRI field is shown in Table 7. In case that the PUSCH transmission scheduled by the DCI is only associated with the SRS resource set with the higher ID, the coding scheme of the first SRI field is shown in Table 18:

Table 18

| Bit field mapped to index | SRI(s), $N_{SRS}$=4 |
| --- | --- |
| 0 | 0 |
| 1 | 1 |
| 2-3 | Reserved |

In an embodiment, in case that $L_{max}$=2,
in case that the PUSCH transmission scheduled by the DCI is associated with the SRS resource set with the lowest ID, the coding scheme of the first SRI field is shown in Table 8. In case that the PUSCH transmission scheduled by the DCI is only associated with the SRS resource set with the higher ID, the coding scheme of the first SRI field is shown in Table 19;

Table 19

| Bit field mapped to index | SRI(s), $N_{SRS}=4$ |
|---|---|
| 0 | 0 |
| 1 | 1 |
| 2 | 0, 1 |
| 3-15 | reserved |

In an embodiment, in case that $L_{max}=3$,
in case that the PUSCH transmission scheduled by the DCI is associated with the SRS resource set with the lowest ID, the coding scheme of the first SRI field is shown in Table 9. In case that the PUSCH transmission scheduled by the DCI is only associated with the SRS resource set with the higher ID, the coding scheme of the first SRI field is shown in Table 19.
In an embodiment, in case that $L_{max}$ 4,
in case that the PUSCH transmission scheduled by the DCI is associated with the SRS resource set with the lowest ID, the coding scheme of the first SRI field is shown in Table 10. In case that the PUSCH transmission scheduled by the DCI is only associated with the SRS resource set with the higher ID, the coding scheme of the first SRI field is shown in Table 19.
In an embodiment, in case that the DCI indicates that the PUSCH transmission corresponds to two SRS resource sets, the coding scheme of the another SRI field is as follows:

- in case that the first SRI field indicates one SRS resource (or in case that the number of layers indicated by the first SRI field is 1), the coding scheme of the another SRI field is shown in Table 2;
- in case that the first SRI field indicates two SRS resources (or in case that the number of layers indicated by the first SRI field is 2), the coding scheme of the another SRI field is shown in Table 11.

(7) The SRS resource set with the lowest ID (or the smallest ID) includes three SRS resources, and the another SRS resource set includes two SRS resources.
In case that $L_{max}=1$, the bit width of the first SRI field is 2 (in an embodiment, which is obtained by the formula:

$$\left\lceil \log_2 \left( \sum_{k=1}^{\min\{L_{\max}, N_{SRS}\}} \binom{N_{SRS}}{k} \right) \right\rceil$$
);

in case that $L_{max}=2$, the bit width of the first SRI field is 3 (in an embodiment, which is obtained by the formula:

$$\left\lceil \log_2 \left( \sum_{k=1}^{\min\{L_{\max}, N_{SRS}\}} \binom{N_{SRS}}{k} \right) \right\rceil$$
);

in case that $L_{max}=3$ or $L_{max}=4$, the bit width of the first SRI field is 3 (in an embodiment, which is obtained by the

formula: $$\left\lceil \log_2 \left( \sum_{k=1}^{\min\{L_{\max}, N_{SRS}\}} \binom{N_{SRS}}{k} \right) \right\rceil$$
)

the bit width of the another SRI field is 1.

In an embodiment, in case that $L_{max}=1$,
in case that the PUSCH transmission scheduled by the DCI is associated with the SRS resource set with the lowest ID, the coding scheme of the first SRI field is shown in Table 4. In case that the PUSCH transmission scheduled by the DCI is only associated with the SRS resource set with the higher ID, the coding scheme of the first SRI field is shown in Table 18.
In an embodiment, in case that $L_{max}=2$,

26

in case that the PUSCH transmission scheduled by the DCI is associated with the SRS resource set with the lowest ID, the coding scheme of the first SRI field is shown in Table 5. In case that the PUSCH transmission scheduled by the DCI is only associated with the SRS resource set with the higher ID, the coding scheme of the first SRI field is shown in Table 20.

Table 20

| Bit field mapped to index | SRI(s) |
|---|---|
| 0 | 0 |
| 1 | 1 |
| 2 | 0, 1 |
| 3-7 | reserved |

In an embodiment, in case that $L_{max}$=3 or $L_{max}$=4,
in case that the PUSCH transmission scheduled by the DCI is associated with the SRS resource set with the lowest ID, the coding scheme of the first SRI field is shown in Table 6. In case that the PUSCH transmission scheduled by the DCI is only associated with the SRS resource set with the higher ID, the coding scheme of the first SRI field is shown in Table 20.

In an embodiment, in case that the DCI indicates that the PUSCH transmission corresponds to two SRS resource sets, the coding scheme of the another SRI field is as follows:

- in case that the first SRI field indicates one SRS resource (or in case that the number of layers indicated by the first SRI field is 1), the coding scheme of the another SRI field is shown in Table 2;
- in case that the first SRI field indicates two SRS resources (or in case that the number of layers indicated by the first SRI field is 2), the coding scheme of the another SRI field is shown in Table 11.

(8) The SRS resource set with the lowest ID (or the smallest ID) includes three SRS resources, and the another SRS resource set includes three SRS resources.

In case that $L_{max}$=1, the bit width of the first SRI field is 1 (in an embodiment, which is obtained by the formula:

$$\left\lceil \log_2 \left( \sum_{k=1}^{\min\{L_{\max},N_{\mathrm{SRS}}\}} \binom{N_{\mathrm{SRS}}}{k} \right) \right\rceil$$

);

in case that $L_{max}$=2, the bit width of the first SRI field is 3 (in an embodiment, which is obtained by the formula:

$$\left\lceil \log_2 \left( \sum_{k=1}^{\min\{L_{\max},N_{\mathrm{SRS}}\}} \binom{N_{\mathrm{SRS}}}{k} \right) \right\rceil$$

);

in case that $L_{max}$=3 or $L_{max}$=4, the bit width of the first SRI field is 3 (in an embodiment, which is obtained by the formula:

$$\left\lceil \log_2 \left( \sum_{k=1}^{\min\{L_{\max},N_{\mathrm{SRS}}\}} \binom{N_{\mathrm{SRS}}}{k} \right) \right\rceil$$

);

the bit width of the another SRI field is 2.

In an embodiment, in case that $L_{max}$=1,
in case that the PUSCH transmission scheduled by the DCI is associated with the SRS resource set with the lowest ID or the SRS resource set with a higher ID, the coding scheme of the first SRI field is shown in Table 4.

In an embodiment, in case that $L_{max}$=2,
in case that the PUSCH transmission scheduled by the DCI is associated with the SRS resource set with the lowest ID or the SRS resource set with a higher ID, the coding scheme of the first SRI field is shown in Table 5.

In an embodiment, in case that $L_{max}$=3 or $L_{max}$=4,

in case that the PUSCH transmission scheduled by the DCI is associated with the SRS resource set with the lowest ID or the SRS resource set with a higher ID, the coding scheme of the first SRI field is shown in Table 6;
in case that the first SRI field indicates one SRS resource (or in case that the number of layers indicated by the first SRI field is 1), the coding scheme of the another SRI field is shown in Table 4;
in case that the first SRI field indicates two SRS resources (or in case that the number of layers indicated by the first SRI field is 2), the coding scheme of the another SRI field is shown in Table 12.

Table 12

| Bit field mapped to index | SRI(s) |
| --- | --- |
| 0 | 0, 1 |
| 1 | 0, 2 |
| 2 | 1, 2 |
| 3 | reserved |

In case that the first SRI field indicates three SRS resources (or in case that the number of layers indicated by the first SRI field is 3), the coding scheme of the another SRI field is shown in Table 13.

Table 13

| Bit field mapped to index | SRI(s) |
| --- | --- |
| 0 | 0, 1, 2 |
| 1-3 | reserved |

(9) The SRS resource set with the lowest ID (or the smallest ID) includes four SRS resources, and the another SRS resource set includes three SRS resources.
In case that $L_{max}=1$, the bit width of the first SRI field is 2 (in an embodiment, which is obtained by the formula:

$$\left\lceil \log_2 \left( \sum_{k=1}^{\min\{L_{\max}, N_{\mathrm{SRS}}\}} \binom{N_{\mathrm{SRS}}}{k} \right) \right\rceil ;$$

in case that $L_{max}=2$, the bit width of the first SRI field is 4 (in an embodiment, which is obtained by the formula:

$$\left\lceil \log_2 \left( \sum_{k=1}^{\min\{L_{\max}, N_{\mathrm{SRS}}\}} \binom{N_{\mathrm{SRS}}}{k} \right) \right\rceil ;$$

in case that $L_{max}=3$, the bit width of the first SRI field is 4;

in case that $L_{max}=4$, the bit width of the first SRI field is 4 (in an embodiment, which is obtained by the formula:

$$\left\lceil \log_2 \left( \sum_{k=1}^{\min\{L_{\max}, N_{\mathrm{SRS}}\}} \binom{N_{\mathrm{SRS}}}{k} \right) \right\rceil ;$$

the bit width of the another SRI field is 2.

In an embodiment, in case that $L_{max}=1$,
in case that the PUSCH transmission scheduled by the DCI is associated with the SRS resource set with the lowest ID, the coding scheme of the first SRI field is shown in Table 7. In case that the PUSCH transmission scheduled by the DCI is only associated with the SRS resource set with the higher ID, the coding scheme of the first SRI field is shown in Table 4.

In an embodiment, in case that $L_{max}$=2,

in case that the PUSCH transmission scheduled by the DCI is associated with the SRS resource set with the lowest ID, the coding scheme of the first SRI field is shown in Table 8. In case that the PUSCH transmission scheduled by the DCI is only associated with the SRS resource set with the higher ID, the coding scheme of the first SRI field is shown in Table 21.

Table 21

| Bit field mapped to index | SRI(s), $N_{SRS}$=3 |
| --- | --- |
| 0 | 0 |
| 1 | 1 |
| 2 | 2 |
| 3 | 0, 1 |
| 4 | 0, 2 |
| 5 | 1, 2 |
| 6-15 | reserved |

In an embodiment, in case that $L_{max}$=3,

in case that the PUSCH transmission scheduled by the DCI is associated with the SRS resource set with the lowest ID, the coding scheme of the first SRI field is shown in Table 9. In case that the PUSCH transmission scheduled by the DCI is only associated with the SRS resource set with the higher ID, the coding scheme of the first SRI field is shown in Table 22.

Table 22

| Bit field mapped to index | SRI(s), $N_{SRS}$=3 |
| --- | --- |
| 0 | 0 |
| 1 | 1 |
| 2 | 2 |
| 3 | 0, 1 |
| 4 | 0, 2 |
| 5 | 1, 2 |
| 6 | 0, 1, 2 |
| 7-15 | reserved |

In an embodiment, in case that $L_{max}$=4,

in case that the PUSCH transmission scheduled by the DCI is associated with the SRS resource set with the lowest ID, the coding scheme of the first SRI field is shown in Table 10; in case that the PUSCH transmission scheduled by the DCI is only associated with the SRS resource set with the higher ID, the coding scheme of the first SRI field is shown in Table 22;

in case that the first SRI field indicates one SRS resource (or in case that the number of layers indicated by the first SRI field is 1), the coding scheme of the another SRI field is shown in Table 4;

in case that the first SRI field indicates two SRS resources (or in case that the number of layers indicated by the first SRI field is 2), the coding scheme of the another SRI field is shown in Table 12;

in case that the first SRI field indicates three SRS resources (or in case that the number of layers indicated by the first SRI field is 3), the coding scheme of the another SRI field is shown in Table 13.

(10) The SRS resource set with the lowest ID (or the smallest ID) includes four SRS resources, and the another SRS resource set includes four SRS resources.

In case that $L_{max}$=1, the bit width of the first SRI field is 2 (in an embodiment, which is obtained by the formula:

$$\left\lceil \log_2\left(\sum_{k=1}^{\min\{L_{\max}, N_{SRS}\}}\binom{N_{SRS}}{k}\right)\right\rceil$$
);

in case that $L_{max}$=2, the bit width of the first SRI field is 4 (in an embodiment, which is obtained by the formula:

$$\left\lceil \log_2\left(\sum_{k=1}^{\min\{L_{\max}, N_{SRS}\}}\binom{N_{SRS}}{k}\right)\right\rceil$$
);

in case that $L_{max}$=3, the bit width of the first SRI field is 4;

in case that $L_{max}$=4, the bit width of the first SRI field is 4 (in an embodiment, which is obtained by the formula:

$$\left\lceil \log_2\left(\sum_{k=1}^{\min\{L_{\max}, N_{SRS}\}}\binom{N_{SRS}}{k}\right)\right\rceil$$
);

the bit width of the another SRI field is 3.

In an embodiment, in case that $L_{max}$=1,
in case that the PUSCH transmission scheduled by the DCI is associated with the SRS resource set with the lowest ID or the SRS resource set with a higher ID, the coding scheme of the first SRI field is shown in Table 7.
In an embodiment, in case that $L_{max}$=2,
in case that the PUSCH transmission scheduled by the DCI is associated with the SRS resource set with the lowest ID or the SRS resource set with a higher ID, the coding scheme of the first SRI field is shown in Table 8.
In an embodiment, in case that $L_{max}$=3,
in case that the PUSCH transmission scheduled by the DCI is associated with the SRS resource set with the lowest ID or the SRS resource set with a higher ID, the coding scheme of the first SRI field is shown in Table 9.
In an embodiment, in case that $L_{max}$=4,
in case that the PUSCH transmission scheduled by the DCI is associated with the SRS resource set with the lowest ID or the SRS resource set with a higher ID, the coding scheme of the first SRI field is shown in Table 10.
In an embodiment, in case that the DCI indicates that the PUSCH transmission corresponds to two SRS resource sets, the coding scheme of the another SRI field is as follows:
in case that the first SRI field indicates one SRS resource (or in case that the number of layers indicated by the first SRI field is 1), the coding scheme of the another SRI field is shown in Table 7;
in case that the first SRI field indicates two SRS resources (or in case that the number of layers indicated by the first SRI field is 2), the coding scheme of the another SRI field is shown in Table 15;

Table 15

| Bit field mapped to index | SRI(s), $N_{SRS}$=4 |
|---|---|
| 0 | 0, 1 |
| 1 | 0, 2 |
| 2 | 0, 3 |
| 3 | 1, 2 |
| 4 | 1, 3 |
| 5 | 2, 3 |
| 6-7 | reserved |

- in case that the first SRI field indicates three SRS resources (or in case that the number of layers indicated by the first SRI field is 3), the coding scheme of the another SRI field is shown in Table 16;

Table 16

| Bit field mapped to index | SRI(s), $N_{SRS}$=4 |
| --- | --- |
| 0 | 0,1,2 |
| 1 | 0,1,3 |
| 2 | 0,2,3 |
| 3 | 1,2,3 |
| 4-7 | reserved |

in case that the first SRI field indicates four SRS resources (or in case that the number of layers indicated by the first SRI field is 4), the coding scheme of the another SRI field is shown in Table 17.

Table 17

| Bit field mapped to index | SRI(s), $N_{SRS}$=4 |
| --- | --- |
| 0 | 0, 1, 2, 3 |
| 1-7 | reserved |

It should be noted that, regardless of whether the DCI indicates that PUSCH transmission corresponds to one SRS resource set or multiple SRS resource sets, the bit width of the first SRI field may be determined using the method for determining the bit width of the first SRI field provided by the above embodiments of the present application, the same bit width is obtained, but the coding schemes may be different.

In an embodiment, in case that the DCI indicates that PUSCH transmission corresponds to one SRS resource set, the first $n$ states of the first SRI field in the DCI indicate the $n$ states of the SRI combination corresponding to the SRS resource set indicated by the DCI, and the remaining states are reserved.

According to the above embodiment, Embodiment two is provided for the case where the bit width of the first SRI field is determined based on the maximum value among the numbers of resources included in each of multiple SRS resource sets.

Embodiment two: The network side device configures two SRS resource sets with usage set to "nonCodeBook" for the terminal.

In case that the DCI indicates that PUSCH transmission corresponds to two SRS resource sets, the bit width and coding scheme of the two SRS fields in the DCI include one or a combination of the following.

(1) In case that one SRS resource set includes one SRS resource and the another SRS resource set includes one SRS resource, the bit widths of two SRI fields are 0.

(2) One SRS resource set includes two SRS resources, and the another SRS resource set includes one SRS resource.

In case that $L_{max}$=1, the bit width of the first SRI field is 1;

in case that $L_{max}$=2 or $L_{max}$=3 or $L_{max}$=4, the bit width of the first SRI field is 2;
the bit width of the another SRI field is 0.

In an embodiment, in case that $L_{max}$=1,
in case that a PUSCH transmission scheduled by the DCI is associated with the SRS resource set with the number of resources of 2, the coding scheme is shown in Table 2. In case that the PUSCH transmission scheduled by the DCI is only associated with the SRS resource set with the number of resources of 1, all states of the first SRI field are reserved.

In an embodiment, in case that $L_{max}$=2 or $L_{max}$=3 or $L_{max}$=4,
in case that a PUSCH transmission scheduled by the DCI is associated with the SRS resource set with the number of resources of 2, the coding scheme is shown in Table 3. In case that the PUSCH transmission scheduled by the DCI is only associated with the SRS resource set with the number of resources of 1, all states of the first SRI field are reserved.

(3) One SRS resource set includes three SRS resources, and the another SRS resource set includes one SRS resource.

In case that $L_{max}$=1, the bit width of the first SRI field is 2;

in case that $L_{max}$=2, the bit width of the first SRI field is 3;
in case that $L_{max}$=3 or $L_{max}$=4, the bit width of the first SRI field is 3;
the bit width of the another SRI field is 0.

In an embodiment, in case that $L_{max}$=1,
in case that a PUSCH transmission scheduled by the DCI is associated with the SRS resource set with the number of resources of 3, the coding scheme is shown in Table 4. In case that the PUSCH transmission scheduled by the DCI is only associated with the SRS resource set with the number of resources of 1, all states of the first SRI field are reserved.
In an embodiment, in case that $L_{max}$=2,
in case that a PUSCH transmission scheduled by the DCI is associated with the SRS resource set with the number of resources of 3, the coding scheme is shown in Table 5. In case that the PUSCH transmission scheduled by the DCI is only associated with the SRS resource set with the number of resources of 1, all states of the first SRI field are reserved.
In an embodiment, in case that $L_{max}$=3 or $L_{max}$=4,
in case that a PUSCH transmission scheduled by the DCI is associated with the SRS resource set with the number of resources of 3, the coding scheme is shown in Table 6. In case that the PUSCH transmission scheduled by the DCI is only associated with the SRS resource set with the number of resources of 1, all states of the first SRI field are reserved.
(4) One SRS resource set includes four SRS resources, and the another SRS resource set includes one SRS resource.
In case that $L_{max}$=1, the bit width of the first SRI field is 2;

in case that $L_{max}$=2, the bit width of the first SRI field is 4;
in case that $L_{max}$=3, the bit width of the first SRI field is 4;
in case that $L_{max}$=4, the bit width of the first SRI field is 4;
the bit width of the another SRI field is 0.

In an embodiment, in case that $L_{max}$=1,
in case that a PUSCH transmission scheduled by the DCI is associated with the SRS resource set with the number of resources of 4, the coding scheme is shown in Table 7. In case that the PUSCH transmission scheduled by the DCI is only associated with the SRS resource set with the number of resources of 1, all states of the first SRI field are reserved.
In an embodiment, in case that $L_{max}$=2,
in case that a PUSCH transmission scheduled by the DCI is associated with the SRS resource set with the number of resources of 4, the coding scheme is shown in Table 8. In case that the PUSCH transmission scheduled by the DCI is only associated with the SRS resource set with the number of resources of 1, all states of the first SRI field are reserved.
In an embodiment, in case that $L_{max}$=3,
in case that a PUSCH transmission scheduled by the DCI is associated with the SRS resource set with the number of resources of 4, the coding scheme is shown in Table 9. In case that the PUSCH transmission scheduled by the DCI is only associated with the SRS resource set with the number of resources of 1, all states of the first SRI field are reserved.
In an embodiment, in case that $L_{max}$=4,
in case that a PUSCH transmission scheduled by the DCI is associated with the SRS resource set with the number of resources of 4, the coding scheme is shown in Table 10. In case that the PUSCH transmission scheduled by the DCI is only associated with the SRS resource set with the number of resources of 1, all states of the first SRI field are reserved.
(5) One SRS resource set includes two SRS resources, and the another SRS resource set includes two SRS resources.
In case that $L_{max}$=1, the bit width of the first SRI field is 1;

in case that $L_{max}$=2 or $L_{max}$=3 or $L_{max}$=4, the bit width of the first SRI field is 2;
the bit width of the another SRI field is 1.

In an embodiment, in case that $L_{max}$=1,
in case that the PUSCH transmission scheduled by the DCI is associated with any one of the two SRS resource sets, the coding scheme of the first SRI field is shown in Table 2.
In an embodiment, in case that $L_{max}$=2 or $L_{max}$=3 or $L_{max}$=4,
in case that the PUSCH transmission scheduled by the DCI is associated with any one of the two SRS resource sets, the coding scheme of the first SRI field is shown in Table 3;

- in case that the first SRI field indicates one SRS resource (or in case that the number of layers indicated by the first SRI field is 1), the coding scheme of the another SRI field is shown in Table 2;

- in case that the first SRI field indicates two SRS resources (or in case that the number of layers indicated by the first SRI field is 2), the coding scheme of the another SRI field is shown in Table 11.

(6) One SRS resource set includes four SRS resources, and the another SRS resource set includes two SRS resources.

In case that $L_{max}$=1, the bit width of the first SRI field is 2;

in case that $L_{max}$=2, the bit width of the first SRI field is 4;
in case that $L_{max}$=3, the bit width of the first SRI field is 4;
in case that $L_{max}$=4, the bit width of the first SRI field is 4;
the bit width of the another SRI field is 1.

In an embodiment, in case that $L_{max}$=1,
in case that a PUSCH transmission scheduled by the DCI is associated with the SRS resource set with the number of resources of 4, the coding scheme is shown in Table 7. In case that the PUSCH transmission scheduled by the DCI is only associated with the SRS resource set with the number of resources of 2, SRI combination states corresponding to the index fields 2 and 3 in Table 7 are all reserved.

In an embodiment, in case that $L_{max}$=2,
in case that a PUSCH transmission scheduled by the DCI is associated with the SRS resource set with the number of resources of 4, the coding scheme is shown in Table 8. In case that the PUSCH transmission scheduled by the DCI is only associated with the SRS resource set with the number of resources of 2, SRI combination states corresponding to the index fields 2 and 3 as well as 5 to 15 in Table 8 are all reserved.

In an embodiment, in case that $L_{max}$=3,
in case that a PUSCH transmission scheduled by the DCI is associated with the SRS resource set with the number of resources of 4, the coding scheme is shown in Table 9. In case that the PUSCH transmission scheduled by the DCI is only associated with the SRS resource set with the number of resources of 2, SRI combination states corresponding to the index fields 2 and 3 as well as 5 to 15 in Table 9 are all reserved.

In an embodiment, in case that $L_{max}$=4,
in case that a PUSCH transmission scheduled by the DCI is associated with the SRS resource set with the number of resources of 4, the coding scheme is shown in Table 10. In case that the PUSCH transmission scheduled by the DCI is only associated with the SRS resource set with the number of resources of 2, SRI combination states corresponding to the index fields 2 and 3 as well as 5 to 15 in Table 10 are all reserved.

In an embodiment, in case that the DCI indicates that the PUSCH transmission corresponds to two SRS resource sets, the coding scheme of the another SRI field is as follows:

in case that the first SRI field indicates one SRS resource (or in case that the number of layers indicated by the first SRI field is 1), the coding scheme of the another SRI field is shown in Table 2;
in case that the first SRI field indicates two SRS resources (or in case that the number of layers indicated by the first SRI field is 2), the coding scheme of the another SRI field is shown in Table 11.

(7) One SRS resource set includes three SRS resources, and the another SRS resource set includes two SRS resources.

In case that $L_{max}$=1, the bit width of the first SRI field is 1;

in case that $L_{max}$=2, the bit width of the first SRI field is 3;
in case that $L_{max}$=3 or $L_{max}$=4, the bit width of the first SRI field is 3;
the bit width of the another SRI field is 1.

In an embodiment, in case that $L_{max}$=1,
in case that a PUSCH transmission scheduled by the DCI is associated with the SRS resource set with the number of resources of 3, the coding scheme of the first SRI field is shown in Table 4. In case that the PUSCH transmission scheduled by the DCI is only associated with the SRS resource set with the number of resources of 2, SRI combination states corresponding to the index fields 2 and 3 in Table 4 are all reserved.

In an embodiment, in case that $L_{max}$=2,
in case that a PUSCH transmission scheduled by the DCI is associated with the SRS resource set with the number of resources of 3, the coding scheme of the first SRI field is shown in Table 5. In case that the PUSCH transmission scheduled by the DCI is only associated with the SRS resource set with the number of resources of 2, SRI combination states corresponding to the index fields 2 and 4 to 7 in Table 5 are all reserved.

In an embodiment, in case that $L_{max}$=3 or $L_{max}$=4, in case that a PUSCH transmission scheduled by the DCI is associated with the SRS resource set with the number of resources of 3, the coding scheme of the first SRI field is shown in Table 6. In case that the PUSCH transmission scheduled by the DCI is only associated with the SRS resource set with the number of resources of 2, SRI combination states corresponding to the index fields 2 and 4 to 7 in Table 6 are all reserved.

In an embodiment, in case that the DCI indicates that the PUSCH transmission corresponds to two SRS resource sets, the coding scheme of the another SRI field is as follows:

in case that the first SRI field indicates one SRS resource (or in case that the number of layers indicated by the first SRI field is 1), the coding scheme of the another SRI field is shown in Table 2;
in case that the first SRI field indicates two SRS resources (or in case that the number of layers indicated by the first SRI field is 2), the coding scheme of the another SRI field is shown in Table 11.

(8) One SRS resource set includes three SRS resources, and the another SRS resource set includes three SRS resources.

In case that $L_{max}$=1, the bit width of the first SRI field is 1;

in case that $L_{max}$=2, the bit width of the first SRI field is 3;
in case that $L_{max}$=3 or $L_{max}$=4, the bit width of the first SRI field is 3;
the bit width of the another SRI field is 2.

In an embodiment, in case that $L_{max}$=1, in case that the PUSCH transmission scheduled by the DCI is associated with any one of the two SRS resource sets, the coding scheme of the first SRI field is shown in Table 4.

In an embodiment, in case that $L_{max}$=2, in case that the PUSCH transmission scheduled by the DCI is associated with any one of the two SRS resource sets, the coding scheme of the first SRI field is shown in Table 5.

In an embodiment, in case that $L_{max}$=3 or $L_{max}$=4, in case that the PUSCH transmission scheduled by the DCI is associated with any one of the two SRS resource sets, the coding scheme of the first SRI field is shown in Table 6.

In an embodiment, in case that the DCI indicates that the PUSCH transmission corresponds to two SRS resource sets, the coding scheme of the another SRI field is as follows:

in case that the first SRI field indicates one SRS resource (or in case that the number of layers indicated by the first SRI field is 1), the coding scheme of the another SRI field is shown in Table 4;
in case that the first SRI field indicates two SRS resources (or in case that the number of layers indicated by the first SRI field is 2), the coding scheme of the another SRI field is shown in Table 12;
in case that the first SRI field indicates three SRS resources (or in case that the number of layers indicated by the first SRI field is 3), the coding scheme of the another SRI field is shown in Table 13.

(9) One SRS resource set includes four SRS resources, and the another SRS resource set includes three SRS resources.

In case that $L_{max}$=1, the bit width of the first SRI field is 2;

in case that $L_{max}$=2, the bit width of the first SRI field is 4;
in case that $L_{max}$=3, the bit width of the first SRI field is 4;
in case that $L_{max}$=4, the bit width of the first SRI field is 4;
the bit width of the another SRI field is 2.

In an embodiment, in case that $L_{max}$=1, in case that a PUSCH transmission scheduled by the DCI is associated with the SRS resource set with the number of resources of 4, the coding scheme of the first SRI field is shown in Table 7. In case that the PUSCH transmission scheduled by the DCI is only associated with the SRS resource set with the number of resources of 3, SRI combination states corresponding to an index field 3 in Table 7 are all reserved.

In an embodiment, in case that $L_{max}$=2, in case that a PUSCH transmission scheduled by the DCI is associated with the SRS resource set with the number of resources of 4, the coding scheme of the first SRI field is shown in Table 8. In case that the PUSCH transmission scheduled by the DCI is only associated with the SRS resource set with the number of resources of 3, SRI combination states corresponding to index fields 3, 6 and 8 to 15 in Table 8 are all reserved.

In an embodiment, in case that $L_{max}$=3,
in case that a PUSCH transmission scheduled by the DCI is associated with the SRS resource set with the number of resources of 4, the coding scheme of the first SRI field is shown in Table 9. In case that the PUSCH transmission scheduled by the DCI is only associated with the SRS resource set with the number of resources of 3, SRI combination states corresponding to index fields 3, 6, 8, 9 and 11 to 15 in Table 9 are all reserved.

In an embodiment, in case that $L_{max}$=4,
in case that a PUSCH transmission scheduled by the DCI is associated with the SRS resource set with the number of resources of 4, the coding scheme of the first SRI field is shown in Table 10. In case that the PUSCH transmission scheduled by the DCI is only associated with the SRS resource set with the number of resources of 3, SRI combination states corresponding to index fields 3, 6, 8, 10 and 11 to 15 in Table 10 are all reserved.

In an embodiment, in case that the DCI indicates that the PUSCH transmission corresponds to two SRS resource sets, the coding scheme of the another SRI field is as follows:

in case that the first SRI field indicates one SRS resource (or in case that the number of layers indicated by the first SRI field is 1), the coding scheme of the another SRI field is shown in Table 4;
in case that the first SRI field indicates two SRS resources (or in case that the number of layers indicated by the first SRI field is 2), the coding scheme of the another SRI field is shown in Table 12;
in case that the first SRI field indicates three SRS resources (or in case that the number of layers indicated by the first SRI field is 3), the coding scheme of the another SRI field is shown in Table 13.

(10) One SRS resource set includes four SRS resources, and the another SRS resource set includes four SRS resources.

In case that $L_{max}$=1, the bit width of the first SRI field is 2;

in case that $L_{max}$=2, the bit width of the first SRI field is 4;
in case that $L_{max}$=3, the bit width of the first SRI field is 4;
in case that $L_{max}$=4, the bit width of the first SRI field is 4;
the bit width of the another SRI field is 3.

In an embodiment, in case that $L_{max}$=1,
in case that the PUSCH transmission scheduled by the DCI is associated with any one of the two SRS resource sets, the coding scheme of the first SRI field is shown in Table 7.

In an embodiment, in case that $L_{max}$=2,
in case that the PUSCH transmission scheduled by the DCI is associated with any one of the two SRS resource sets, the coding scheme of the first SRI field is shown in Table 8.

In an embodiment, in case that $L_{max}$=3,
in case that the PUSCH transmission scheduled by the DCI is associated with any one of the two SRS resource sets, the coding scheme of the first SRI field is shown in Table 9.

In an embodiment, in case that $L_{max}$=4,
in case that the PUSCH transmission scheduled by the DCI is associated with any one of the two SRS resource sets, the coding scheme of the first SRI field is shown in Table 10.

In an embodiment, in case that the DCI indicates that the PUSCH transmission corresponds to two SRS resource sets, the coding scheme of the another SRI field is as follows:

in case that the first SRI field indicates one SRS resource (or in case that the number of layers indicated by the first SRI field is 1), the coding scheme of the another SRI field is shown in Table 7;
in case that the first SRI field indicates two SRS resources (or in case that the number of layers indicated by the first SRI field is 2), the coding scheme of the another SRI field is shown in Table 15;
in case that the first SRI field indicates three SRS resources (or in case that the number of layers indicated by the first SRI field is 3), the coding scheme of the another SRI field is shown in Table 16; and
in case that the first SRI field indicates four SRS resources (or in case that the number of layers indicated by the first SRI field is 4), the coding scheme of the another SRI field is shown in Table 17.

It should be noted that, regardless of whether the DCI indicates that PUSCH transmission corresponds to one SRS resource set or multiple SRS resource sets, the bit width of the first SRI field may be determined using the method for determining the bit width of the first SRI field provided by the above embodiments of the present application, the same bit width is obtained, but the coding schemes may be different.

In an embodiment, in case that the DCI indicates that PUSCH transmission corresponds to one SRS resource set, the first *n* states of the first SRI field in the DCI indicate the *n* states of the SRI combination corresponding to the SRS resource set indicated by the DCI, and the remaining states are reserved.

According to the above embodiment, Embodiment three is provided for the case where the bit width of the first SRI field is determined based on the maximum value among the numbers of resources included in each of multiple SRS resource sets.

Embodiment three: The network side device configures two SRS resource sets with usage set to "nonCodeBook" for the terminal.

The bit width and coding scheme of the two SRS fields in the DCI include one or a combination of the following.

(1) The SRS resource set with the lowest ID (or the smallest ID) includes one SRS resource, and the another SRS resource set includes one SRS resource.
Both bit widths of the two SRI fields are 0.
(2) The SRS resource set with the lowest ID (or the smallest ID) includes two SRS resources, and the another SRS resource set includes one SRS resource.

In case that $L_{max}=1$, the bit width of the first SRI field is 1;

in case that $L_{max}=2$ or $L_{max}=3$ or $L_{max}=4$, the bit width of the first SRI field is 2;
the bit width of the another SRI field is 0.

In an embodiment, in case that $L_{max}=1$,
in case that the PUSCH transmission scheduled by the DCI is associated with the SRS resource set with the lowest ID, the coding scheme is shown in Table 2. In case that the PUSCH transmission scheduled by the DCI is only associated with the SRS resource set with the higher ID, all states of the first SRI field are reserved.

In an embodiment, in case that $L_{max}=2$ or $L_{max}=3$ or $L_{max}=4$,
in case that the PUSCH transmission scheduled by the DCI is associated with the SRS resource set with the lowest ID, the coding scheme of the first SRI field is shown in Table 3. In case that the PUSCH transmission scheduled by the DCI is only associated with the SRS resource set with the higher ID, all states of the first SRI field are reserved.

(3) The SRS resource set with the lowest ID (or the smallest ID) includes one SRS resource, and the another SRS resource set includes two SRS resources.

In case that $L_{max}=1$, the bit width of the first SRI field is 1;

in case that $L_{max}=2$ or $L_{max}=3$ or $L_{max}=4$, the bit width of the first SRI field is 2;
the bit width of the another SRI field is 1.

In an embodiment, in case that $L_{max}=1$,
in case that the PUSCH transmission scheduled by the DCI is associated with the SRS resource set with a higher ID, the coding scheme is shown in Table 2. In case that the PUSCH transmission scheduled by the DCI is only associated with the SRS resource set with the lowest ID, all states of the first SRI field are reserved.

In an embodiment, in case that $L_{max}=2$ or $L_{max}=3$ or $L_{max}=4$,
in case that the PUSCH transmission scheduled by the DCI is associated with the SRS resource set with the higher ID, the coding scheme of the first SRI field is shown in Table 3. In case that the PUSCH transmission scheduled by the DCI is only associated with the SRS resource set with the lowest ID, all states of the first SRI field are reserved.

In an embodiment, in case that the DCI indicates that the PUSCH transmission corresponds to two SRS resource sets, the coding scheme of the another SRI field is shown in Table 2, otherwise the another SRI field is not used.

(4) The SRS resource set with the lowest ID (or the smallest ID) includes three SRS resources, and the another SRS resource set includes one SRS resource.

In case that $L_{max}=1$, the bit width of the first SRI field is 2;

in case that $L_{max}=2$, the bit width of the first SRI field is 3;
in case that $L_{max}=3$ or $L_{max}=4$, the bit width of the first SRI field is 3;
the bit width of the another SRI field is 0.

In an embodiment, in case that $L_{max}=1$,
in case that the PUSCH transmission scheduled by the DCI is associated with the SRS resource set with the lowest ID, the coding scheme of the first SRI field is shown in Table 4. In case that the PUSCH transmission scheduled by the DCI is only associated with the SRS resource set with the higher ID, all states of the first SRI field are reserved.

In an embodiment, in case that $L_{max}$=2, in case that the PUSCH transmission scheduled by the DCI is associated with the SRS resource set with the lowest ID, the coding scheme of the first SRI field is shown in Table 5. In case that the PUSCH transmission scheduled by the DCI is only associated with the SRS resource set with the higher ID, all states of the first SRI field are reserved.

In an embodiment, in case that $L_{max}$=3 or $L_{max}$=4, in case that the PUSCH transmission scheduled by the DCI is associated with the SRS resource set with the lowest ID, the coding scheme of the first SRI field is shown in Table 6. In case that the PUSCH transmission scheduled by the DCI is only associated with the SRS resource set with the higher ID, all states of the first SRI field are reserved.

(5) The SRS resource set with the lowest ID (or the smallest ID) includes one SRS resource, and the another SRS resource set includes three SRS resources.

In case that $L_{max}$=1, the bit width of the first SRI field is 2;

in case that $L_{max}$=2, the bit width of the first SRI field is 3;
in case that $L_{max}$=3 or $L_{max}$=4, the bit width of the first SRI field is 3;
the bit width of the another SRI field is 2.

In an embodiment, in case that $L_{max}$=1, in case that the PUSCH transmission scheduled by the DCI is associated with the SRS resource set with the higher ID, the coding scheme of the first SRI field is shown in Table 4. In case that the PUSCH transmission scheduled by the DCI is only associated with the SRS resource set with the lowest ID, all states of the first SRI field are reserved.

In an embodiment, in case that $L_{max}$=2, in case that the PUSCH transmission scheduled by the DCI is associated with the SRS resource set with the higher ID, the coding scheme of the first SRI field is shown in Table 5. In case that the PUSCH transmission scheduled by the DCI is only associated with the SRS resource set with the lowest ID, all states of the first SRI field are reserved.

In an embodiment, in case that $L_{max}$=3 or $L_{max}$=4, in case that the PUSCH transmission scheduled by the DCI is associated with the SRS resource set with the higher ID, the coding scheme of the first SRI field is shown in Table 6. In case that the PUSCH transmission scheduled by the DCI is only associated with the SRS resource set with the lowest ID, all states of the first SRI field are reserved.

In an embodiment, in case that the DCI indicates that the PUSCH transmission corresponds to two SRS resource sets, the coding scheme of the another SRI field is shown in Table 4, otherwise the another SRI field is not used.

(6) The SRS resource set with the lowest ID (or the smallest ID) includes four SRS resources, and the another SRS resource set includes one SRS resource.

In case that $L_{max}$=1, the bit width of the first SRI field is 2;

in case that $L_{max}$=2, the bit width of the first SRI field is 4;
in case that $L_{max}$=3, the bit width of the first SRI field is 4;
in case that $L_{max}$=4, the bit width of the first SRI field is 4;
the bit width of the another SRI field is 0.

In an embodiment, in case that $L_{max}$=1, in case that the PUSCH transmission scheduled by the DCI is associated with the SRS resource set with the lowest ID, the coding scheme of the first SRI field is shown in Table 7. In case that the PUSCH transmission scheduled by the DCI is only associated with the SRS resource set with the higher ID, all states of the first SRI field are reserved.

In an embodiment, in case that $L_{max}$=2, in case that the PUSCH transmission scheduled by the DCI is associated with the SRS resource set with the lowest ID, the coding scheme of the first SRI field is shown in Table 8. In case that the PUSCH transmission scheduled by the DCI is only associated with the SRS resource set with the higher ID, all states of the first SRI field are reserved.

In an embodiment, in case that $L_{max}$=3, in case that the PUSCH transmission scheduled by the DCI is associated with the SRS resource set with the lowest ID, the coding scheme of the first SRI field is shown in Table 9. In case that the PUSCH transmission scheduled by the DCI is only associated with the SRS resource set with the higher ID, all states of the first SRI field are reserved.

In an embodiment, in case that $L_{max}$=4, in case that the PUSCH transmission scheduled by the DCI is associated with the SRS resource set with the lowest ID, the coding scheme of the first SRI field is shown in Table 10. In case that the PUSCH transmission scheduled by the DCI is only associated with the SRS resource set with the higher ID, all states of the first SRI field are reserved.

(7) The SRS resource set with the lowest ID (or the smallest ID) includes one SRS resource, and the another SRS resource set includes four SRS resources.

In case that $L_{max}$=1, the bit width of the first SRI field is 2;

in case that $L_{max}$=2, the bit width of the first SRI field is 4;
in case that $L_{max}$=3, the bit width of the first SRI field is 4;
in case that $L_{max}$=4, the bit width of the first SRI field is 4;
the bit width of the another SRI field is 2.

In an embodiment, in case that $L_{max}$=1,
in case that the PUSCH transmission scheduled by the DCI is associated with the SRS resource set with the higher ID, the coding scheme of the first SRI field is shown in Table 7. In case that the PUSCH transmission scheduled by the DCI is only associated with the SRS resource set with the lowest ID, all states of the first SRI field are reserved.

In an embodiment, in case that $L_{max}$=2,
in case that the PUSCH transmission scheduled by the DCI is associated with the SRS resource set with the higher ID, the coding scheme of the first SRI field is shown in Table 8. In case that the PUSCH transmission scheduled by the DCI is only associated with the SRS resource set with the lowest ID, all states of the first SRI field are reserved.

In an embodiment, in case that $L_{max}$=3,
in case that the PUSCH transmission scheduled by the DCI is associated with the SRS resource set with the higher ID, the coding scheme of the first SRI field is shown in Table 9. In case that the PUSCH transmission scheduled by the DCI is only associated with the SRS resource set with the lowest ID, all states of the first SRI field are reserved.

In an embodiment, in case that $L_{max}$=4,
in case that the PUSCH transmission scheduled by the DCI is associated with the SRS resource set with the higher ID, the coding scheme of the first SRI field is shown in Table 10. In case that the PUSCH transmission scheduled by the DCI is only associated with the SRS resource set with the lowest ID, all states of the first SRI field are reserved.

In an embodiment, in case that the DCI indicates that the PUSCH transmission corresponds to two SRS resource sets, the coding scheme of the another SRI field is shown in Table 7, otherwise the another SRI field is not used.

(8) The SRS resource set with the lowest ID (or the smallest ID) includes two SRS resources, and the another SRS resource set includes two SRS resources.

In case that $L_{max}$=1, the bit width of the first SRI field is 1;

in case that $L_{max}$=2 or $L_{max}$=3 or $L_{max}$=4, the bit width of the first SRI field is 2;
the bit width of the another SRI field is 1.

In an embodiment, in case that $L_{max}$=1,
in case that the PUSCH transmission scheduled by the DCI is associated with the SRS resource set with the lowest ID or the SRS resource set with a higher ID, the coding scheme of the first SRI field is shown in Table 2.

In an embodiment, in case that $L_{max}$=2 or $L_{max}$=3 or $L_{max}$=4,
in case that the PUSCH transmission scheduled by the DCI is associated with the SRS resource set with the lowest ID or the SRS resource set with a higher ID, the coding scheme of the first SRI field is shown in Table 3.

In an embodiment, in case that the DCI indicates that the PUSCH transmission corresponds to two SRS resource sets,

- in case that the first SRI field indicates one SRS resource (or in case that the number of layers indicated by the first SRI field is 1), the coding scheme of the another SRI field is shown in Table 2;
- in case that the first SRI field indicates two SRS resources (or in case that the number of layers indicated by the first SRI field is 2), the coding scheme of the another SRI field is shown in Table 11.

(9) The SRS resource set with the lowest ID (or the smallest ID) includes four SRS resources, and the another SRS resource set includes two SRS resources.

In case that $L_{max}$=1, the bit width of the first SRI field is 2;

in case that $L_{max}$=2, the bit width of the first SRI field is 4;
in case that $L_{max}$=3, the bit width of the first SRI field is 4;
in case that $L_{max}$=4, the bit width of the first SRI field is 4;
the bit width of the another SRI field is 1.

In an embodiment, in case that $L_{max}$=1,
in case that a PUSCH transmission scheduled by the DCI is associated with the SRS resource set with the lowest ID, the coding scheme of the first SRI field is shown in Table 7. In case that the PUSCH transmission scheduled by the DCI is only associated with the SRS resource set with the higher ID, SRI combination states corresponding to the index fields 2 and 3 in Table 7 are all reserved.

In an embodiment, in case that $L_{max}$=2,
in case that a PUSCH transmission scheduled by the DCI is associated with the SRS resource set with the lowest ID, the coding scheme of the first SRI field is shown in Table 8. In case that the PUSCH transmission scheduled by the DCI is only associated with the SRS resource set with the higher ID, SRI combination states corresponding to the index fields 2, 3 and 5 to 15 in Table 8 are all reserved.

In an embodiment, in case that $L_{max}$=3,
in case that a PUSCH transmission scheduled by the DCI is associated with the SRS resource set with the lowest ID, the coding scheme of the first SRI field is shown in Table 9. In case that the PUSCH transmission scheduled by the DCI is only associated with the SRS resource set with the higher ID, SRI combination states corresponding to the index fields 2, 3 and 5 to 15 in Table 9 are all reserved.

In an embodiment, in case that $L_{max}$=4,
in case that a PUSCH transmission scheduled by the DCI is associated with the SRS resource set with the lowest ID, the coding scheme of the first SRI field is shown in Table 10. In case that the PUSCH transmission scheduled by the DCI is only associated with the SRS resource set with the higher ID, SRI combination states corresponding to the index fields 2, 3 and 5 to 15 in Table 10 are all reserved.

In an embodiment, in case that the DCI indicates that the PUSCH transmission corresponds to two SRS resource sets,

- in case that the first SRI field indicates one SRS resource (or in case that the number of layers indicated by the first SRI field is 1), the coding scheme of the another SRI field is shown in Table 2;
- in case that the first SRI field indicates two SRS resources (or in case that the number of layers indicated by the first SRI field is 2), the coding scheme of the another SRI field is shown in Table 11.

(10) The SRS resource set with the lowest ID (or the smallest ID) includes two SRS resources, and the another SRS resource set includes four SRS resources.

In case that $L_{max}$=1, the bit width of the first SRI field is 2;

in case that $L_{max}$=2, the bit width of the first SRI field is 4;
in case that $L_{max}$=3, the bit width of the first SRI field is 4;
in case that $L_{max}$=4, the bit width of the first SRI field is 4;
the bit width of the another SRI field is 2.

In an embodiment, in case that $L_{max}$=1,
in case that a PUSCH transmission scheduled by the DCI is associated with the SRS resource set with higher ID, the coding scheme of the first SRI field is shown in Table 7. In case that the PUSCH transmission scheduled by the DCI is only associated with the SRS resource set with the lowest ID, SRI combination states corresponding to the index fields 2 and 3 in Table 7 are all reserved.

In an embodiment, in case that $L_{max}$=2,
in case that a PUSCH transmission scheduled by the DCI is associated with the SRS resource set with higher ID, the coding scheme of the first SRI field is shown in Table 8. In case that the PUSCH transmission scheduled by the DCI is only associated with the SRS resource set with the lowest ID, SRI combination states corresponding to the index fields 2, 3 and 5 to 15 in Table 8 are all reserved.

In an embodiment, in case that $L_{max}$=3,
in case that a PUSCH transmission scheduled by the DCI is associated with the SRS resource set with higher ID, the coding scheme of the first SRI field is shown in Table 9. In case that the PUSCH transmission scheduled by the DCI is only associated with the SRS resource set with the lowest ID, SRI combination states corresponding to the index fields 2, 3 and 5 to 15 in Table 9 are all reserved.

In an embodiment, in case that $L_{max}$=4,
in case that a PUSCH transmission scheduled by the DCI is associated with the SRS resource set with higher ID, the coding scheme of the first SRI field is shown in Table 10. In case that the PUSCH transmission scheduled by the DCI is only associated with the SRS resource set with the lowest ID, SRI combination states corresponding to the index fields 2, 3 and 5 to 15 in Table 10 are all reserved.

In an embodiment, in case that the DCI indicates that the PUSCH transmission corresponds to two SRS resource sets, the coding scheme of the another SRI field is shown in Table 8, otherwise the another SRI field is not used.

(11) The SRS resource set with the lowest ID (or the smallest ID) includes three SRS resources, and the another SRS resource set includes two SRS resources.

In case that $L_{max}$=1, the bit width of the first SRI field is 1;

in case that $L_{max}$=2, the bit width of the first SRI field is 3;
in case that $L_{max}$=3 or $L_{max}$=4, the bit width of the first SRI field is 3;
the bit width of the another SRI field is 1.

In an embodiment, in case that $L_{max}$=1,
in case that a PUSCH transmission scheduled by the DCI is associated with the SRS resource set with the lowest ID, the coding scheme of the first SRI field is shown in Table 4. In case that the PUSCH transmission scheduled by the DCI is only associated with the SRS resource set with the higher ID, SRI combination states corresponding to the index fields 2 and 3 in Table 4 are all reserved.

In an embodiment, in case that $L_{max}$=2,
in case that a PUSCH transmission scheduled by the DCI is associated with the SRS resource set with the lowest ID, the coding scheme of the first SRI field is shown in Table 5. In case that the PUSCH transmission scheduled by the DCI is only associated with the SRS resource set with the higher ID, SRI combination states corresponding to the index fields 2 and 4 to 7 in Table 5 are all reserved.

In an embodiment, in case that $L_{max}$=3 or $L_{max}$=4,
in case that a PUSCH transmission scheduled by the DCI is associated with the SRS resource set with the lowest ID, the coding scheme of the first SRI field is shown in Table 6. In case that the PUSCH transmission scheduled by the DCI is only associated with the SRS resource set with the higher ID, SRI combination states corresponding to the index fields 2 and 4 to 7 in Table 6 are all reserved.

In an embodiment, in case that the DCI indicates that the PUSCH transmission corresponds to two SRS resource sets,

- in case that the first SRI field indicates one SRS resource (or in case that the number of layers indicated by the first SRI field is 1), the coding scheme of the another SRI field is shown in Table 2;
- in case that the first SRI field indicates two SRS resources (or in case that the number of layers indicated by the first SRI field is 2), the coding scheme of the another SRI field is shown in Table 11.

(12) The SRS resource set with the lowest ID (or the smallest ID) includes two SRS resources, and the another SRS resource set includes three SRS resources.

In case that $L_{max}$=1, the bit width of the first SRI field is 1;

in case that $L_{max}$=2, the bit width of the first SRI field is 3;
in case that $L_{max}$=3 or $L_{max}$=4, the bit width of the first SRI field is 3;
the bit width of the another SRI field is 2.

In an embodiment, in case that $L_{max}$=1,
in case that a PUSCH transmission scheduled by the DCI is associated with the SRS resource set with higher ID, the coding scheme of the first SRI field is shown in Table 4. In case that the PUSCH transmission scheduled by the DCI is only associated with the SRS resource set with the lowest ID, SRI combination states corresponding to the index fields 2 and 3 in Table 4 are all reserved.

In an embodiment, in case that $L_{max}$=2,
in case that a PUSCH transmission scheduled by the DCI is associated with the SRS resource set with higher ID, the coding scheme of the first SRI field is shown in Table 5. In case that the PUSCH transmission scheduled by the DCI is only associated with the SRS resource set with the lowest ID, SRI combination states corresponding to the index fields 2 and 4 to 7 in Table 5 are all reserved.

In an embodiment, in case that $L_{max}$=3 or $L_{max}$=4,
in case that a PUSCH transmission scheduled by the DCI is associated with the SRS resource set with higher ID, the coding scheme of the first SRI field is shown in Table 6. In case that the PUSCH transmission scheduled by the DCI is only associated with the SRS resource set with the lowest ID, SRI combination states corresponding to the index fields 2 and 4 to 7 in Table 6 are all reserved.

In an embodiment, in case that the DCI indicates that the PUSCH transmission corresponds to two SRS resource sets, the coding scheme of the another SRI field is shown in Table 12, otherwise the another SRI field is not used.

(13) The SRS resource set with the lowest ID (or the smallest ID) includes three SRS resources, and the another SRS resource set includes three SRS resources.

In case that $L_{max}$=1, the bit width of the first SRI field is 1;

in case that $L_{max}$=2, the bit width of the first SRI field is 3;
in case that $L_{max}$=3 or $L_{max}$=4, the bit width of the first SRI field is 3;
the bit width of the another SRI field is 2.

In an embodiment, in case that $L_{max}$=1,
in case that the PUSCH transmission scheduled by the DCI is associated with the SRS resource set with the lowest ID or the SRS resource set with a higher ID, the coding scheme of the first SRI field is shown in Table 4.

In an embodiment, in case that $L_{max}$=2,
in case that the PUSCH transmission scheduled by the DCI is associated with the SRS resource set with the lowest ID or the SRS resource set with a higher ID, the coding scheme of the first SRI field is shown in Table 5.

In an embodiment, in case that $L_{max}$=3 or $L_{max}$=4,
in case that the PUSCH transmission scheduled by the DCI is associated with the SRS resource set with the lowest ID or the SRS resource set with a higher ID, the coding scheme of the first SRI field is shown in Table 6.

In an embodiment, in case that the DCI indicates that the PUSCH transmission corresponds to two SRS resource sets,

- in case that the first SRI field indicates one SRS resource (or in case that the number of layers indicated by the first SRI field is 1), the coding scheme of the another SRI field is shown in Table 4;
- in case that the first SRI field indicates two SRS resources (or in case that the number of layers indicated by the first SRI field is 2), the coding scheme of the another SRI field is shown in Table 12;
- in case that the first SRI field indicates three SRS resources (or in case that the number of layers indicated by the first SRI field is 3), the coding scheme of the another SRI field is shown in Table 13.

(14) The SRS resource set with the lowest ID (or the smallest ID) includes four SRS resources, and the another SRS resource set includes three SRS resources.

In case that $L_{max}$=1, the bit width of the first SRI field is 2;

in case that $L_{max}$=2, the bit width of the first SRI field is 4;
in case that $L_{max}$=3, the bit width of the first SRI field is 4;
in case that $L_{max}$=4, the bit width of the first SRI field is 4;
the bit width of the another SRI field is 2.

In an embodiment, in case that $L_{max}$=1,
in case that a PUSCH transmission scheduled by the DCI is associated with the SRS resource set with the lowest ID, the coding scheme of the first SRI field is shown in Table 7. In case that the PUSCH transmission scheduled by the DCI is only associated with the SRS resource set with the higher ID, SRI combination states corresponding to the index field 3 in Table 7 are all reserved.

In an embodiment, in case that $L_{max}$=2,
in case that a PUSCH transmission scheduled by the DCI is associated with the SRS resource set with the lowest ID, the coding scheme of the first SRI field is shown in Table 8. In case that the PUSCH transmission scheduled by the DCI is only associated with the SRS resource set with the higher ID, SRI combination states corresponding to the index fields 3, 6 and 8 to 15 in Table 8 are all reserved.

In an embodiment, in case that $L_{max}$=3,
in case that a PUSCH transmission scheduled by the DCI is associated with the SRS resource set with the lowest ID, the coding scheme of the first SRI field is shown in Table 9. In case that the PUSCH transmission scheduled by the DCI is only associated with the SRS resource set with the higher ID, SRI combination states corresponding to the index fields 3, 6, 8, 9 and 11 to 15 in Table 9 are all reserved.

In an embodiment, in case that $L_{max}$=4,
in case that a PUSCH transmission scheduled by the DCI is associated with the SRS resource set with the lowest ID, the coding scheme of the first SRI field is shown in Table 10. In case that the PUSCH transmission scheduled by the DCI is only associated with the SRS resource set with the higher ID, SRI combination states corresponding to the index fields 3, 6, 8, 9 and 11 to 15 in Table 10 are all reserved.

In an embodiment, in case that the DCI indicates that the PUSCH transmission corresponds to two SRS resource sets,

- in case that the first SRI field indicates one SRS resource (or in case that the number of layers indicated by the first SRI field is 1), the coding scheme of the another SRI field is shown in Table 4;

in case that the first SRI field indicates two SRS resources (or in case that the number of layers indicated by the first SRI field is 2), the coding scheme of the another SRI field is shown in Table 12;

in case that the first SRI field indicates three SRS resources (or in case that the number of layers indicated by the first SRI field is 3), the coding scheme of the another SRI field is shown in Table 13.

(15) The SRS resource set with the lowest ID (or the smallest ID) includes three SRS resources, and the another SRS resource set includes four SRS resources.

In case that $L_{max}$=1, the bit width of the first SRI field is 2;

in case that $L_{max}$=2, the bit width of the first SRI field is 4;
in case that $L_{max}$=3, the bit width of the first SRI field is 4;
in case that $L_{max}$=4, the bit width of the first SRI field is 4;
the bit width of the another SRI field is 3.

In an embodiment, in case that $L_{max}$=1,
in case that a PUSCH transmission scheduled by the DCI is associated with the SRS resource set with higher ID, the coding scheme of the first SRI field is shown in Table 7. In case that the PUSCH transmission scheduled by the DCI is only associated with the SRS resource set with the lowest ID, SRI combination states corresponding to the index field 3 in Table 7 are all reserved.

In an embodiment, in case that $L_{max}$=2,
in case that a PUSCH transmission scheduled by the DCI is associated with the SRS resource set with higher ID, the coding scheme of the first SRI field is shown in Table 8. In case that the PUSCH transmission scheduled by the DCI is only associated with the SRS resource set with the lowest ID, SRI combination states corresponding to the index fields 3, 6 and 8 to 15 in Table 8 are all reserved.

In an embodiment, in case that $L_{max}$=3,
in case that a PUSCH transmission scheduled by the DCI is associated with the SRS resource set with higher ID, the coding scheme of the first SRI field is shown in Table 9. In case that the PUSCH transmission scheduled by the DCI is only associated with the SRS resource set with the lowest ID, SRI combination states corresponding to the index fields 3, 6, 8, 9 and 11 to 15 in Table 9 are all reserved.

In an embodiment, in case that $L_{max}$=4,
in case that a PUSCH transmission scheduled by the DCI is associated with the SRS resource set with higher ID, the coding scheme of the first SRI field is shown in Table 10. In case that the PUSCH transmission scheduled by the DCI is only associated with the SRS resource set with the lowest ID, SRI combination states corresponding to the index fields 3, 6, 8, 9 and 11 to 15 in Table 10 are all reserved.

In an embodiment, in case that the DCI indicates that the PUSCH transmission corresponds to two SRS resource sets, the coding scheme of the another SRI field is shown in Table 12, otherwise the another SRI field is not used.

(16) The SRS resource set with the lowest ID (or the smallest ID) includes four SRS resources, and the another SRS resource set includes four SRS resources.

In case that $L_{max}$=1, the bit width of the first SRI field is 2;

in case that $L_{max}$=2, the bit width of the first SRI field is 4;
in case that $L_{max}$=3, the bit width of the first SRI field is 4;
in case that $L_{max}$=4, the bit width of the first SRI field is 4;
the bit width of the another SRI field is 3.

In an embodiment, in case that $L_{max}$=1,
in case that the PUSCH transmission scheduled by the DCI is associated with the SRS resource set with the lowest ID or the SRS resource set with a higher ID, the coding scheme of the first SRI field is shown in Table 7.

In an embodiment, in case that $L_{max}$=2,
in case that the PUSCH transmission scheduled by the DCI is associated with the SRS resource set with the lowest ID or the SRS resource set with a higher ID, the coding scheme of the first SRI field is shown in Table 8.

In an embodiment, in case that $L_{max}$=3,
in case that the PUSCH transmission scheduled by the DCI is associated with the SRS resource set with the lowest ID or the SRS resource set with a higher ID, the coding scheme of the first SRI field is shown in Table 9.

In an embodiment, in case that $L_{max}$=4,
in case that the PUSCH transmission scheduled by the DCI is associated with the SRS resource set with the lowest ID or the SRS resource set with a higher ID, the coding scheme of the first SRI field is shown in Table 10.

In an embodiment, in case that the DCI indicates that the PUSCH transmission corresponds to two SRS resource sets,

- in case that the first SRI field indicates one SRS resource (or in case that the number of layers indicated by the first SRI field is 1), the coding scheme of the another SRI field is shown in Table 7;
- in case that the first SRI field indicates two SRS resources (or in case that the number of layers indicated by the first SRI field is 2), the coding scheme of the another SRI field is shown in Table 15;
- in case that the first SRI field indicates three SRS resources (or in case that the number of layers indicated by the first SRI field is 3), the coding scheme of the another SRI field is shown in Table 16;
- in case that the first SRI field indicates four SRS resources (or in case that the number of layers indicated by the first SRI field is 4), the coding scheme of the another SRI field is shown in Table 17.

It should be noted that, regardless of whether the DCI indicates that PUSCH transmission corresponds to one SRS resource set or multiple SRS resource sets, the bit width of the first SRI field may be determined using the method for determining the bit width of the first SRI field provided by the above embodiments of the present application, the same bit width is obtained, but the coding schemes may be different.

In an embodiment, in case that the DCI indicates that PUSCH transmission corresponds to one SRS resource set, the first $n$ states of the first SRI field in the DCI indicate the $n$ states of the SRI combination corresponding to the SRS resource set indicated by the DCI, and the remaining states are reserved.

According to the above embodiment, among the multiple SRI fields included in the DCI, the second SRI field indicates SRS resources and the number of transmission layers. The number of resources included in the SRS resource set corresponding to the second SRI field is greater than or equal to the number of resources included in each of other SRS resource sets among the multiple SRS resource sets.

The bit width and coding scheme for the first SRI field applied in Embodiment one, Embodiment two and Embodiment three provided in the above embodiments are all applicable to the second SRI field in the embodiments of the present application, and only the "first SRI field" in Embodiment one, Embodiment two and Embodiment three needs to be replaced with the "second SRI field".

In addition, in case that N=2, the bit width and coding scheme that may be used for the another SRI field other than the first SRI field in Embodiment one, Embodiment two and Embodiment three are also applicable to the SRI fields other than the second SRI field. The embodiments of the present application will not be described again in detail.

According to the above embodiments, FIG. 2 is a second schematic flow chart of a resource indication method according to an embodiment of the present application. As shown in FIG. 2, the method is performed by a network side device. The method includes:

step 210, determining downlink control information (DCI), where the DCI includes multiple sounding reference signal (SRS) resource indicator (SRI) fields, a bit width of a first SRI field in the DCI is determined based on the number of resources included in at least one SRS resource set among multiple SRS resource sets; and
step 220: transmitting the DCI.

The DCI is transmitted to the terminal by the network side device, and the network side device here may be a base station. The DCI here may be DCI in the codebook-based PUSCH transmission scheme, or may be DCI in the nonCodebook-based PUSCH transmission scheme. DCI may be used to indicate S-TRP transmission or M-TRP transmission.

The DCI includes two or more SRI fields. The SRI field hereto referred includes a case where the bit width of the SRI field is 0. That is, among the two or more SRI fields included in DCI, the bit width of one or more SRI fields may be 0. It should be noted that the bit width here may also be referred to as overhead or the number of bits.

For the case where the DCI includes multiple SRI fields, the first SRI field may be a first SRI field sorted in ascending order by ID among the above multiple SRI fields, that is, the SRI field with the lowest ID; or the first SRI field may be a first SRI field sorted by bits among the above multiple SRI fields, for example, a first SRI field among the multiple SRI fields that are sorted in an ascending order by the most significant bit (MSB) (i.e., a SRI field with the lowest MSB); or a first SRI field among the multiple SRI fields that are sorted in a descending order by the MSB (i.e., a SRI field with the highest MSB); or a first SRI field among the multiple SRI fields that are sorted in an ascending order by the least significant bit (LSB) (i.e., a SRI field with the lowest LSB); or a first SRI field among the multiple SRI fields that are sorted in a descending order by the LSB (i.e., a SRI field with the highest LSB); or the first SRI field is a first SRI field that ranks first among the above multiple SRI fields having an order of the information fields in the protocol. The first SRI field may be a first SRI field when solving the problem of limited SRI indicator during single TRP nonCodebook-based PUSCH transmission.

The bit width of the first SRI field may be determined based on the number of resources included in at least one SRS resource set among multiple SRS resource sets. Here, the multiple SRS resource sets may be multiple SRS resource sets corresponding to the PUSCH transmission scheme configured by the network side device for the terminal, and the multiple SRS resource sets are all options of the SRS resource set corresponding to the first SRI field. The number of resources included in the SRS resource set refers to the number of SRS resources included in the SRS resource set.

In case that the bit width of the first SRI field is determined based on the number of resources included in SRS resource set among multiple SRS resource sets, only the number of resources included in one SRS resource set among the multiple SRS resource sets may be used, or the number of resources included in two or more SRS resource sets among the multiple SRS resource sets may be used. In case that the bit width of the first SRI field is determined, the number of resources included in each of some or all of the above multiple SRS resource sets may be used.

Further, in case that the bit width of the first SRI field is determined by using the number of resources included in each of some SRS resource sets among the multiple SRS resource sets. the some SRS resource sets here may be one or more pre-specified SRS resource sets selected from the multiple SRS resource sets. The pre-specified SRS resource sets here may be SRS resource sets with a larger number of resources included in the above-mentioned multiple SRS resource sets. On this basis, the bit width of the first SRI field may be determined based on the number of resources included in the pre-specified SRS resource sets.

In case that the bit width of the first SRI field is determined by using the numbers of resources included in each of all SRS resource sets among the multiple SRS resource sets, a maximum value among the numbers of resources may be determined based on the numbers of resources included in the multiple SRS resource sets, and the bit width of the first SRI field may be determined based on the maximum value.

After determining the bit width of the first SRI field in the DCI, the terminal may parse the received DCI based on the bit width of the first SRI field to obtain the SRS resource indicated by the DCI, that is, the SRS resource corresponding to the uplink transmission, and then the terminal performs uplink data transmission based on the SRS resources corresponding to the uplink transmission.

In the resource indication method provided by the embodiment of the present application, the bit width of the first SRI field is reasonably set by determining the bit width of the first SRI field in the DCI based on the number of resources included in at least one SRS resource set among multiple SRS resource sets, and the problem that it is impossible to indicate any SRI combination in case that the DCI indicates single-TRP based PUSCH transmission is solved and the PUSCH transmission performance is ensured.

According to the above embodiment, usage types of the multiple SRS resource sets are consistent.

In an embodiment, the usage types of the multiple SRS resource sets are all a first usage.

In an embodiment, the first usage is for uplink channel state information (CSI) acquisition. For example, the first usage is for CSI acquisition for the codebook-based PUSCH transmission. For another example, the first usage is for CSI acquisition for nonCodebook-based PUSCH transmission.

In an embodiment, the usage type of the SRS resource sets corresponds to the transmission scheme of the PUSCH scheduled by the DCI. The above multiple SRS resource sets may be multiple SRS resource sets corresponding to a PUSCH transmission scheme configured by the network side device for the terminal, and the usage types of the above multiple SRS resource sets are also consistent.

For example, if the PUSCH transmission scheme configured by the network side device for the terminal is the codebook-based PUSCH transmission scheme, the usage type of the multiple SRS resource sets is the first usage that is for CSI acquisition for the codebook-based PUSCH transmission. The multiple SRS resource sets are SRS resource sets with usage set to be "codeBook".

For another example, if the PUSCH transmission scheme configured by the network side device for the terminal is the nonCodebook-based PUSCH transmission scheme, the usage type of the multiple SRS resource sets is the first usage that is for CSI acquisition for the nonCodebook-based PUSCH transmission. The multiple SRS resource sets are SRS resource sets with usage set to be "nonCodeBook".

In an embodiment, the multiple SRS resource sets are all SRS resource sets with usage type set to the first usage.

According to the above embodiment, uplink transmission schemes corresponding to the multiple SRS resource sets are consistent.

Here, the uplink transmission scheme corresponding to the multiple SRS resource sets may be the PUSCH transmission scheme, that is, the multiple SRS resource sets may be multiple SRS resource sets corresponding to a PUSCH transmission scheme configured by the network side device for the terminal.

For example, the PUSCH transmission scheme configured by the network side device for the terminal is the codebook-based PUSCH transmission scheme, and the above multiple SRS resource sets all correspond to the codebook-based PUSCH transmission scheme.

For another example, the PUSCH transmission scheme configured by the network side device for the terminal is the nonCodebook-based PUSCH transmission scheme, and the above multiple SRS resource sets all correspond to the nonCodebook-based PUSCH transmission scheme.

According to the above embodiment, the bit width of the first SRI field is determined based on the number of resources included in one SRS resource set among the multiple SRS resource sets.

In an embodiment, in case that the bit width of the first SRI field is determined, only the number of resources included in one SRS resource set among the multiple SRS resource sets may be considered. One SRS resource set hereto referred may be one pre-specified SRS resource set among the above-mentioned multiple SRS resource sets. The one pre-specified SRS resource set may be an SRS resource set with the largest number of resources among the above-mentioned multiple SRS resource sets, or an SRS resource set corresponding to the first SRI field among the above multiple SRS resource sets.

In addition, in case that the above-mentioned multiple SRS resource sets include the same number of resources, the one SRS resource set hereto referred may be any one of the above-mentioned multiple SRS resource sets. In this case, it does no need to determine whether there is a pre-specified SRS resource set, an SRS resource set is randomly selected and the number of resources included in the SRS resource set is determined.

According to the above embodiment, the bit width of the first SRI field is determined based on the number of resources included in the SRS resource set corresponding to the first SRI field among the multiple SRS resource sets.

The correspondence between the first SRI field and one of the above-mentioned multiple SRS resource sets may be pre-defined, and the SRS resource set corresponding to the first SRI field among the above-mentioned multiple SRS resource sets may be located based on the correspondence between the first SRI field and the multiple SRS resource sets. The correspondence here may be obtained through an ID of the SRS resource set, a sequence number of the SRS resource set in the SRS resource set list, etc. For example, the first SRI field may correspond to the SRS resource set with the highest ID or the lowest ID. The first SRI field may also correspond to an SRS resource set with a specified ID. The first SRI field may correspond to the SRS resource set with the lowest or highest sequence number in the SRS resource set list, or to the SRS resource set with a specified sequence number in the SRS resource set list.

Here, the correspondence between the first SRI field and the SRS resource set may be agreed in the protocol or configured by the network side device. For example, it may be configured through a media access control (MAC)-control element (CE), a radio resource control (RRC), the DCI or other signaling, the embodiments of the present application do not specifically limit thereto.

An example is that for a certain PUSCH transmission scheme, the above-mentioned multiple SRS resource sets have usage types corresponding to the PUSCH transmission scheme. The bit width of the first SRI field is $\lceil log_2(N_{\text{SRS}}) \rceil$, where $N_{\text{SRS}}$ represents the number of resources included in the SRS resource set corresponding to the first SRI field. For example, for the codebook-based PUSCH transmission, the above-mentioned multiple SRS resource sets are SRS resource sets with usage set to be "codeBook". The bit width of the first SRI field may be $\lceil log_2(N_{\text{SRS}}) \rceil$, where $N_{\text{SRS}}$ represents the number of resources included in the SRS resource set corresponding to the first SRI field.

Assuming the SRS resource set corresponding to the first SRI field is the SRS resource set with the lowest ID among the above multiple SRS resource sets. In case that the SRS resource set with the lowest ID includes one SRS resource, the bit width of the first SRI field is 0; in case that the SRS resource set with the lowest ID includes two SRS resources, the bit width of the first SRI field is 1; in case that the SRS resource set with the lowest ID includes three SRS resources, the bit width of the first SRI field is 3; in case that the SRS resource set with the lowest ID includes four SRS resources, the bit width of the first SRI field is 4.

An example is that for a certain PUSCH transmission scheme, the above-mentioned multiple SRS resource sets have usage types corresponding to the PUSCH transmission scheme. The bit width of the first SRI field is $\left\lceil log_2\left(\sum_{k=1}^{N_{\text{SRS}}} \binom{N_{\text{SRS}}}{k}\right)\right\rceil$, where $N_{\text{SRS}}$ represents the number of resources included in the SRS resource set corresponding to the first SRI field. NonCodebook-based PUSCH transmission is taken as an example, the above multiple SRS resource sets are SRS resource sets with usage set to be "nonCodeBook". The bit width of the first SRI field may be:

$$\left\lceil log_2\left(\sum_{k=1}^{N_{\text{SRS}}} \binom{N_{\text{SRS}}}{k}\right)\right\rceil$$

where $N_{\text{SRS}}$ represents the number of resources included in the SRS resource set corresponding to the first SRI field.

In the method provided by the embodiments of the present application, the bit width of the first SRI field is determined based on the number of resources included in the SRS resource set corresponding to the first SRI field, and the method has the advantages of simple implementation and low terminal complexity.

According to the above embodiment, the number of resources included in the SRS resource set corresponding to the first SRI field is equal to or greater than the number of resources included in each of SRS resource sets other than the SRS resource set corresponding to the first SRI field among the multiple SRS resource sets.

In an embodiment, the number of resources included in the SRS resource set corresponding to the first SRI field is not less than the number of resources included in any one SRS resource set other than the SRS resource set corresponding to the first SRI field among the multiple SRS resource sets.

In case that the bit width of the first SRI field is determined only based on the number of resources included in the SRS resource set corresponding to the first SRI field among the multiple SRS resource sets, the SRS resource set corresponding to the first SRI field is configured with SRS resources having the number greater than or equal to the number of resources included in each of the other SRS resource sets in case that corresponding SRS resource sets are configured for the first SRI field, and thus the number of resources included in the SRS resource set corresponding to the first SRI field may reflect a maximum value among numbers of resources included in each of above multiple SRS resource sets, which ensures that DCI may indicate any SRI combination in case that the single-TRP PUSCH transmission is indicated by the DCI.

For example, the first SRI field may correspond to the SRS resource set with the lowest ID among the above multiple SRS resource sets, and the number of SRS resources included in the SRS resource set with the lowest ID among the above multiple SRS resource sets is not less than the number of SRS resources included in the SRS resource set with the higher ID, and it is ensured that the number of resources included in the SRS resource set corresponding to the first SRI field is greater than or equal to the number of resources included in each of the SRS resource sets other than the SRS resource set corresponding to the first SRI field among the above multiple SRS resource sets.

According to the above embodiment, the bit width of the first SRI field is determined based on the number of resources included in the SRS resource corresponding to the first SRI field and at least one of the minimum value among the numbers of resources included in each of the multiple SRS resource sets and the maximum number of transmission layers.

In an embodiment, the bit width of the first SRI field may be determined based on the number of resources included in the SRS resource set corresponding to the first SRI field and the maximum number of transmission layers. The bit width of the first SRI field may also be determined based on the number of resources included in the SRS resource set corresponding to the first SRI field, and a minimum value among the numbers of resources included in each of the above multiple SRS resource sets. The bit width of the first SRI field may also be determined based on the number of resources included in the SRS resource set corresponding to the first SRI field, the maximum number of transmission layers and a minimum value among the numbers of resources included in each of the above multiple SRS resource sets.

The maximum number of transmission layers $L_{max}$ may be configured by the network side device or determined based on capabilities of the terminal. For example, the maximum number of transmission layers $L_{max}$ may be obtained under the two following cases.

One case is that the terminal supports a maximum number of multiple input multiple output (MIMO) layers (operation with maxMIMO-Layers), and a higher layer signaling parameter maxMIMO-Layer in PUSCH-ServingCellConfig is configured, and the maximum number of transmission layers $L_{max}$ is obtained through the higher layer signaling parameter maxMIMO-Layer.

Another case is that the terminal does not support the operation with maxMIMO-Layers. In this case, the maximum number of transmission layers $L_{max}$ is a maximum number of PUSCH transmission layers supported by the terminal for the nonCodebook-based PUSCH transmission in a serving cell.

An example is that for a certain PUSCH transmission scheme, the above-mentioned multiple SRS resource sets have usage types corresponding to the PUSCH transmission scheme. The bit width of the first SRI field may be determined based on the number of resources included in the SRS resource set corresponding to the first SRI field and the maximum number of transmission layers by the following formula:

$$\left\lceil \log_2 \left( \sum_{k=1}^{\min\{L_{max}, N_{SRS}\}} \binom{N_{SRS}}{k} \right) \right\rceil$$

where $N_{SRS}$ represents the number of resources included in the SRS resource set corresponding to the first SRI field; and $L_{max}$ is the maximum number of transmission layers.

For example, for the nonCodebook-based PUSCH transmission, the above-mentioned multiple SRS resource sets are SRS resource sets with usage set to be "nonCodeBook". The bit width of the first SRI field may be determined based on the number of resources included in the SRS resource set corresponding to the first SRI field and the maximum number of transmission layers.

$$\left\lceil \log_2\left( \sum_{k=1}^{\min\{L_{\max},N_{\mathrm{SRS}}\}} \binom{N_{\mathrm{SRS}}}{k} \right) \right\rceil$$

where $N_{\mathrm{SRS}}$ represents the number of resources included in the SRS resource set corresponding to the first SRI field; and $L_{max}$ is the maximum number of transmission layers.

In a preferable embodiment, the SRS resource set corresponding to the first SRI field here may be the SRS resource set with the lowest ID among the above multiple SRS resource sets (that is, the SRS resource set with the lowest ID among the SRS resource sets with usage set to be "nonCodeBook"), at this time $N_{\mathrm{SRS}}$ is the number of resources included in the SRS resource set with the lowest ID.

In addition, considering that the number of layers of the two TRPs is equal, the minimum value among the numbers of resources included in each of all SRS resource sets may limit the maximum number of transmission layers. Therefore, the bit width of the first SRI field may be determined based on the minimum value among the numbers of resources included in each of the above multiple SRS resource sets, which saves overhead. In an embodiment, the bit width of the first SRI field may be determined based on the number of resources included in the SRS resource set corresponding to the first SRI field and the minimum value among the numbers of resources included in each of the multiple SRS resource sets, or based on the number of resources included in the SRS resource set corresponding to the first SRI field, the maximum number of transmission layers and the minimum value among the numbers of resources included in each of the multiple SRS resource sets.

An example is that for a certain PUSCH transmission scheme, the above-mentioned multiple SRS resource sets have usage types corresponding to the PUSCH transmission scheme. The bit width of the first SRI field may be determined based on the number of resources included in the SRS resource set corresponding to the first SRI field and the minimum value among the numbers of resources included in each of the multiple SRS resource sets by the following formula:

$$\left\lceil \log_2\left( \sum_{k=1}^{N_{\mathrm{SRS,min}}} \binom{N_{\mathrm{SRS}}}{k} \right) \right\rceil$$

where $N_{\mathrm{SRS}}$ is the number of resources included in the SRS resource set corresponding to the first SRI field, and $N_{\mathrm{SRS},min}$ is the minimum value among the numbers of resources included in each of the above multiple SRS resource sets. NonCodebook-based PUSCH transmission is taken as an example. The above multiple SRS resource sets are SRS resource sets with usage set to be "nonCodeBook". The bit width of the first SRI field may be determined based on the number of resources included in the SRS resource set corresponding to the first SRI field, and the minimum value among the numbers of resources included in each of the multiple SRS resource sets by the following formula:

$$\left\lceil \log_2\left( \sum_{k=1}^{N_{\mathrm{SRS,min}}} \binom{N_{\mathrm{SRS}}}{k} \right) \right\rceil$$

where $N_{\mathrm{SRS}}$ is the number of resources included in the SRS resource set corresponding to the first SRI field, and $N_{\mathrm{SRS},min}$ is the minimum value among the numbers of resources included in each of the above multiple SRS resource sets.

In a preferable embodiment, the SRS resource set corresponding to the first SRI field here may be the SRS resource set with the lowest ID among the above multiple SRS resource sets, at this time $N_{\mathrm{SRS}}$ is the number of resources included in the SRS resource set with the lowest ID.

An example is that for a certain PUSCH transmission scheme, the above-mentioned multiple SRS resource sets have usage types corresponding to the PUSCH transmission scheme. The bit width of the first SRI field may be determined based on the number of resources included in the SRS resource set corresponding to the first SRI field, the maximum number of transmission layers and the minimum value among the numbers of resources included in each of the multiple SRS resource sets by the following formula:

$$\left\lceil \log_2 \left( \sum_{k=1}^{\min\{L_{\max}, N_{\mathrm{SRS,min}}\}} \binom{N_{\mathrm{SRS}}}{k} \right) \right\rceil$$

where $N_{\mathrm{SRS}}$ is the number of resources included in the SRS resource set corresponding to the first SRI field, $L_{max}$ is the maximum number of transmission layers, and $N_{\mathrm{SRS},min}$ is the minimum value among the numbers of resources included in each of the above multiple SRS resource sets. For example, for non Code book-based PUSCH transmission, the above-mentioned multiple SRS resource sets are SRS resource sets with usage set to be "nonCodeBook". The bit width of the first SRI field may be determined based on the number of resources included in the SRS resource set corresponding to the first SRI field, the maximum number of transmission layers and the minimum value among the numbers of resources included in each of the multiple SRS resource sets by the following formula:

$$\left\lceil \log_2 \left( \sum_{k=1}^{\min\{L_{\max}, N_{\mathrm{SRS,min}}\}} \binom{N_{\mathrm{SRS}}}{k} \right) \right\rceil$$

where $N_{\mathrm{SRS}}$ is the number of resources included in the SRS resource set corresponding to the first SRI field, $L_{max}$ is the maximum number of transmission layers, and $N_{\mathrm{SRS},min}$ is the minimum value among the numbers of resources included in each of the above multiple SRS resource sets (resource sets with usage set to be "nonCodeBook").

In a preferable embodiment, the SRS resource set corresponding to the first SRI field here may be the SRS resource set with the lowest ID among the above multiple SRS resource sets, at this time $N_{\mathrm{SRS}}$ is the number of resources included in the SRS resource set with the lowest ID.

Based on the above embodiment, among the multiple SRI fields included in the DCI, a second SRI field indicates the number of transmission layers and SRS resources corresponding to the second SRI field, and SRI fields other than the second SRI field among the multiple SRI fields indicate SRS resources corresponding to the number of transmission layers; and

the number of resources included in the SRS resource set corresponding to the second SRI field is equal to or greater than the number of resources included in each of SRS resource sets other than the SRS resource set corresponding to the second SRI field among the multiple SRS resource sets.

In an embodiment, in order to ensure that DCI may indicate any SRI combination in case that the DCI indicates single-TRP based PUSCH transmission, the embodiment of the present application no longer limits the first SRI field to indicate both the SRS resource and the number of transmission layers, but the second SRI field to indicate both SRS resource and number of transmission layers.

Here, the second SRI field refers to the SRI field corresponding to the SRS resource set with the largest number of resources included among the multiple SRS resource sets. The second SRI field may be any one of the multiple SRI fields included in the DCI.

In case that the number of SRS resources configured in the SRS resource set corresponding to the first SRI field is greater than or equal to the number of resources included in each of the other SRS resource sets, the first SRI field may be determined as the second SRI field, and the first SRI field also indicates the number of transmission layers, and the SRS resource corresponding to the first SRI field. In case that the number of SRS resources configured in the SRS resource set corresponding to the first SRI field is less than the number of resources included in one of the other SRS resource sets, the first SRI field is not the second SRI field, the second SRI field simultaneously indicates the number of transmission layers and the SRS resources corresponding to the second SRI field, and the first SRI field only indicates SRS resources corresponding to the number of transmission layers indicated by the second SRI field.

According to the above embodiment, the second SRI field is one of the first SRI fields.

It should be noted that the second SRI field indicating both the SRS resource and the number of transmission layers may be one of the first SRI fields. For example, in case that the SRS resource set corresponding to the first SRI field is configured as SRS resources having the number greater than or equal to the number of resources included in each of the other SRS resource sets, the first SRI field may be determined as the second SRI field. Based on above embodiments, the bit width of the first SRI field is determined based on a maximum value among numbers of resources included in each of the multiple SRS resource sets.

In an embodiment, in case that the bit width of the first SRI field is determined, the number of resources included in all the SRS resource sets in the above multiple SRS resource sets may be fully considered, and a maximum number of resources included in each of all SRS resource sets may be determined. For example, there are two SRS resource sets. The number of resources included in the first SRS resource set is 2, and the number of resources included in another SRS resource set is 3. The maximum value among numbers of resources included in each of the two SRS resource sets is 3. The number 3 of resources may be determined as the bit width of the first SRI field.

For example, the bit width $N_1$ of the first SRI field is determined to be 0 in case that the maximum value among the numbers of resources included in all SRS resource sets is 1; the bit width $N_1$ of the first SRI field is determined to be 1 in case that the maximum value among the numbers of resources included in all SRS resource sets is 2; the bit width $N_1$ of the first SRI field is determined to be 3 in case that the maximum value among the numbers of resources included in all SRS resource sets is 3; the bit width $N_1$ of the first SRI field is determined to be 4 in case that the maximum value among the numbers of resources included in all SRS resource sets is 4.

For example, the bit width of the first SRI field may be $\lceil log_2(N_{SRS,max}) \rceil$ , where $N_{SRS,max}$ is the maximum value among the numbers of resources included in each of the above multiple SRS resource sets. For example, for the codebook-based PUSCH transmission, the above-mentioned multiple SRS resource sets are SRS resource sets with usage set to be "nonCodeBook". The bit width of the first SRI field may be $\lceil log_2(N_{SRS,max}) \rceil$ , where $N_{SRS,max}$ represents the maximum value among the numbers of resources included in each of the above multiple SRS resource sets. Two SRS resource sets are taken as an example, assuming that the numbers of SRS resources included in each of the two SRS resource sets are N1 and N2 respectively, then $N_{SRS,max}$=max (N1, N2).

As an example, the bit width of the first SRI field is:

$$\left\lceil log_2\left(\sum_{k=1}^{N_{SRS,max}} \binom{N_{SRS,max}}{k}\right)\right\rceil$$

where $N_{SRS,max}$ is the maximum value among the numbers of resources included in each of the above multiple SRS resource sets. NonCodebook-based PUSCH transmission is taken as an example, the above multiple SRS resource sets are SRS resource sets with usage set to be "nonCodeBook". The bit width of the first SRI field may be:

$$\left\lceil log_2\left(\sum_{k=1}^{N_{SRS,max}} \binom{N_{SRS,max}}{k}\right)\right\rceil$$

where $N_{SRS,max}$ is the maximum value among the numbers of resources included in each of the above multiple SRS resource sets. Two SRS resource sets are taken as an example, assuming that the numbers of SRS resources included in each of the two SRS resource sets are N1 and N2 respectively, then $N_{SRS,max}$=max (N1, N2).

In the resource indication method provided by the embodiment of the present application, the bit width of the first SRI field is determined by determining the maximum value among the numbers of resources included in each of the above multiple SRS resource sets, and the problem that it is impossible to indicate any SRI combination in case that the DCI indicates single-TRP based PUSCH transmission may be solved and the PUSCH transmission performance is ensured.

Based on above embodiments, the bit width of the first SRI field is determined based on the maximum value among the numbers of resources included in each of the multiple SRS resource sets and at least one of a minimum value among numbers of resources included in each of the multiple SRS resource sets and a maximum number of transmission layers.

In an embodiment, the bit width of the first SRI field may be determined based on the maximum value among numbers of resources included in each of the multiple SRS resource sets and the maximum number of transmission layers, or may also be determined based on the maximum value among numbers of resources included in each of the multiple SRS resource sets, and the minimum value among the numbers of resources included in each of the multiple SRS resource sets, and may also be determined based on the maximum value among numbers of resources included in each of the multiple SRS resource sets, the maximum number of transmission layers and the minimum value among the numbers of resources included in each of the multiple SRS resource sets.

Here, the reason why the bit width of the first SRI field may be determined based on the minimum value among the numbers of resources included in each of all SRS resource sets is considering that the number of layers of the two TRPs is equal, the minimum value among the numbers of resources included in each of all SRS resource sets may limit the maximum number of transmission layers. Therefore, the bit width of the first SRI field may be determined based on the minimum value among the numbers of resources included in each of the above multiple SRS resource sets, which saves overhead.

The maximum number of transmission layers $L_{max}$ may be configured by the network side device or determined based on capabilities of the terminal. For example, the maximum number of transmission layers $L_{max}$ may be obtained under the two following cases.

One case is that the terminal supports a maximum number of multiple input multiple output (MIMO) layers (operation with maxMIMO-Layers), and a higher layer signaling parameter maxMIMO-Layer in PUSCH-ServingCellConfig is configured, and the maximum number of transmission layers $L_{max}$ is obtained through the higher layer signaling parameter maxMIMO-Layer.

Another case is that the terminal does not support the operation with maxMIMO-Layers. In this case, the maximum number of transmission layers $L_{max}$ is a maximum number of PUSCH transmission layers supported by the terminal for the nonCodebook-based PUSCH transmission in a serving cell.

As an example, the bit width of the first SRI field is determined by the following formula:

$$\left\lceil \log_2 \left( \sum_{k=1}^{\min\{L_{max}, N_{SRS,max}\}} \binom{N_{SRS,max}}{k} \right) \right\rceil$$

where $N_{SRS,max}$ is the maximum value among the numbers of resources included in each of the above multiple SRS resource sets, and $L_{max}$ is the maximum number of transmission layers. For example, for the nonCodebook-based PUSCH transmission, the above-mentioned multiple SRS resource sets are SRS resource sets with usage set to be "nonCodeBook". The bit width of the first SRI field may be determined based on the maximum value among the number of resources included in each of the above multiple SRS resource sets and the maximum number of transmission layers:

$$\left\lceil \log_2 \left( \sum_{k=1}^{\min\{L_{max}, N_{SRS,max}\}} \binom{N_{SRS,max}}{k} \right) \right\rceil$$

where $N_{SRS,max}$ is the maximum value among the numbers of resources included in each of the above multiple SRS resource sets, and $L_{max}$ is the maximum number of transmission layers. Two SRS resource sets are taken as an example, assuming that the numbers of SRS resources included in each of the two SRS resource sets are N1 and N2 respectively, then $N_{SRS,max}$=max (N1, N2). As another example, the bit width of the first SRI field is determined by the following formula:

$$\left\lceil \log_2 \left( \sum_{k=1}^{N_{SRS,min}} \binom{N_{SRS,max}}{k} \right) \right\rceil$$

where $N_{SRS,max}$ is the maximum value among the numbers of resources included in each of the above multiple SRS resource sets, and $N_{SRS,min}$ is the minimum value among the numbers of resources included in each of the above multiple SRS resource sets. For example, for nonCodebook-based PUSCH transmission, the above-mentioned multiple SRS resource sets are SRS resource sets with usage set to be "nonCodeBook". The bit width of the first SRI field may be determined based on the maximum value among the numbers of resources included in each of the above multiple SRS resource sets and the minimum value among the numbers of resources included in each of the above multiple SRS resource sets:

$$\left\lceil log_2\left(\sum_{k=1}^{N_{\text{SRS,min}}}\binom{N_{\text{SRS,max}}}{k}\right)\right\rceil$$

where $N_{\text{SRS,max}}$ is the maximum value among the numbers of resources included in each of the above multiple SRS resource sets, and $N_{\text{SRS},min}$ is the minimum value among the numbers of resources included in each of the above multiple SRS resource sets. Two SRS resource sets are taken as an example, assuming that the numbers of SRS resources included in each of the two SRS resource sets are N1 and N2 respectively, then $N_{\text{SRS,max}}$=max (N1, N2) and $N_{\text{SRS},min}$= min (N1, N2).

As another example, the bit width of the first SRI field is determined by the following formula:

$$\left\lceil \log_2\left(\sum_{k=1}^{\min\{L_{\max},N_{\text{SRS, min}}\}}\binom{N_{\text{SRS,max}}}{k}\right)\right\rceil$$

where $N_{\text{SRS,max}}$ is the maximum value among the numbers of resources included in each of the above multiple SRS resource sets, $N_{\text{SRS},min}$ is the minimum value among the numbers of resources included in each of the above multiple SRS resource sets, and $L_{max}$ is the maximum number of transmission layers.

For example, for nonCodebook-based PUSCH transmission, the above-mentioned multiple SRS resource sets are SRS resource sets with usage set to be "nonCodeBook". The bit width of the first SRI field may be determined based on the maximum value among the numbers of resources included in each of the above multiple SRS resource sets, the maximum number of transmission layers and the minimum value among the numbers of resources included in each of the above multiple SRS resource sets:

$$\left\lceil \log_2\left(\sum_{k=1}^{\min\{L_{\max},N_{\text{SRS, min}}\}}\binom{N_{\text{SRS,max}}}{k}\right)\right\rceil$$

where $N_{\text{SRS,max}}$ is the maximum value among the numbers of resources included in each of the above multiple SRS resource sets, $N_{\text{SRS},min}$ is the minimum value among the numbers of resources included in each of the above multiple SRS resource sets, and $L_{max}$ is the maximum number of transmission layers. Two SRS resource sets are taken as an example, assuming that the numbers of SRS resources included in each of the two SRS resource sets are N1 and N2 respectively, then $N_{\text{SRS,max}}$=max (N1, N2) and $N_{\text{SRS},min}$= min (N1, N2).

Based on above embodiments, in case that numbers of resources included in the multiple SRS resource sets are the same, the bit width of the first SRI field in the multiple SRI fields is determined based on the number of resources included in one SRS resource set among the multiple SRS resource sets and the maximum number of transmission layers.

In an embodiment, for codebook-based PUSCH transmission, the above-mentioned multiple SRS resource sets are SRS resource sets with usage set to be "codeBook". Assuming that the above-mentioned multiple SRS resource sets include the same number of resources, the bit width of the first SRI field may be $\lceil log_2(N_{\text{SRS}})\rceil$, where $N_{\text{SRS}}$ may be the number of resources included in any SRS resource set and a symbol $\lceil\ \rceil$ indicates rounding up to an integer.

For the nonCodebook-based PUSCH transmission, the above-mentioned multiple SRS resource sets are SRS resource sets with usage set to be "nonCodeBook". Assuming that the above-mentioned multiple SRS resource sets include the same number of resources, the bit width of the first SRI field may be

$$\left\lceil log_2\left(\sum_{k=1}^{N_{\text{SRS}}}\binom{N_{\text{SRS}}}{k}\right)\right\rceil,$$

where $N_{\text{SRS}}$ may be the number of resources included in any SRS resource set.

Further, in case that numbers of resources included in the multiple SRS resource sets are the same, the bit width of the first SRI field is determined based on the number of resources included in one SRS resource set among the multiple SRS resource sets and the maximum number of transmission layers.

The maximum number of transmission layers $L_{max}$ may be configured by the network side device or determined based on capabilities of the terminal. For example, the maximum number of transmission layers $L_{max}$ may be obtained under the two following cases.

One case is that the terminal supports a maximum number of multiple input multiple output (MIMO) layers (operation with maxMIMO-Layers), and a higher layer signaling parameter maxMIMO-Layer in PUSCH-ServingCellConfig is configured, and the maximum number of transmission layers $L_{max}$ is obtained through the higher layer signaling parameter maxMIMO-Layer.

Another case is that the terminal does not support the operation with maxMIMO-Layers. In this case, the maximum number of transmission layers $L_{max}$ is a maximum number of PUSCH transmission layers supported by the terminal for the nonCodebook-based PUSCH transmission in a serving cell.

In an embodiment, for the nonCodebook-based PUSCH transmission, assuming that numbers of resources included in the multiple SRS resource sets are the same, the bit width of the first SRI field may be determined based on the number of resources included in one SRS resource set among the multiple SRS resource sets and the maximum number of transmission layers by the following formula:

$$\left\lceil \log_2 \left( \sum_{k=1}^{\min\{L_{\max}, N_{\text{SRS}}\}} \binom{N_{\text{SRS}}}{k} \right) \right\rceil$$

where $N_{\text{SRS}}$ may be the number of resources included in any SRS resource set.

In the method provided by the embodiments of the present application, in case that numbers of resources included in the multiple SRS resource sets are the same, the bit width of the first SRI field may be determined based on the number of resources included in one SRS resource set among the multiple SRS resource sets, which has the advantages of simple implementation.

Based on the above embodiment, a bit width of a third SRI field other than the first SRI field among the multiple SRI fields is determined based on at least one of the number of resources included in an SRS resource set corresponding to the third SRI field, a minimum value among the numbers of resources included in each of the multiple SRS resource sets, and the maximum number of transmission layers.

In an embodiment, SRI fields other than the first SRI field among the multiple SRI fields in the DCI may be used as the third SRI field. Here, the number of the third SRI fields may be one or multiple.

There may be a preset correspondence between the third SRI field in the DCI and the above multiple SRS resource sets. The correspondence here may be a one-to-one correspondence between each third SRI field and the SRS resource set, or one third SRI field corresponds to one or more SRS resource sets, or one SRS resource set corresponds to one or more third SRI fields, which is not specifically limited in the embodiments of the present application. The specific correspondence may be obtained through the ID of the SRS resource sets and the sequence number of the SRS resource set in the SRS resource set list, etc. For example, the third SRI field with the Nth sequence number or the Nth ID may correspond to an SRS resource set with the Nth lower ID or the Nth higher ID. For another example, the third SRI field with the Nth sequence number or the Nth ID may correspond to an SRS resource set with the Nth lower sequence number or the Nth higher sequence number.

The bit width of the third SRI field in the DCI may be determined based on the number of resources included in the SRS resource set corresponding to the third SRI field. For example, the SRS resource set corresponding to the third SRI field with the Nth sequence number or the Nth ID is the SRS resource set with the Nth lower ID among the above multiple SRS resource sets, and the bit width of the third SRI field with the Nth sequence number or the Nth ID may be determined based on the number of resources included in the SRS resource set with the Nth lower ID.

As an example, the bit width of the third SRI field is determined by the following formula:

$$\lceil log_2(N_{\text{SRS-N}}) \rceil$$

where $N_{\text{SRS-N}}$ represents the number of resources included in the SRS resource set corresponding to the third SRI field.

For example, for the codebook-based PUSCH transmission, the above-mentioned multiple SRS resource sets are SRS resource sets with usage set to be "codeBook". The bit width of the third SRI field may be $\lceil log_2(N_{\text{SRS-N}}) \rceil$,

where, $N_{\text{SRS-N}}$ represents the number of resources included in the SRS resource set corresponding to the third SRI field. In a preferable embodiment, the SRS resource set corresponding to the third SRI field with the Nth sequence number or the Nth ID may be the SRS resource set with the Nth lower ID among the above multiple SRS resource sets

As an example, the bit width of the third SRI field is determined by the following formula:

$$\lceil log_2(N_{\text{SRS-N}}) \rceil$$

where $N_{\text{SRS-N}}$ represents the number of resources included in the SRS resource set corresponding to the third SRI field. For example, for the nonCodebook-based PUSCH transmission, the above multiple SRS resource sets are SRS resource sets with usage set to be "nonCodeBook". The bit width of the third SRI field may be:

$$\left\lceil log_2\left( \sum_{k=1}^{N_{\text{SRS-N}}} \binom{N_{\text{SRS-N}}}{k} \right) \right\rceil$$

where $N_{\text{SRS-N}}$ represents the number of resources included in the SRS resource set corresponding to the third SRI field. In a preferable embodiment, the SRS resource set corresponding to the third SRI field with the Nth sequence number or the Nth ID may be the SRS resource set with the Nth lower ID among the above multiple SRS resource sets.

In addition, the bit width of the third SRI field may also be determined based on the number of resources included in the SRS resource set corresponding to the third SRI field and the number of transmission layers indicated by the first SRI field. One possible way is that: in case that the third SRI field corresponds to the SRS resource set with the Nth lower ID among the above multiple SRS resource sets, the bit width NN of the third SRI field is determined based on a maximum value among numbers of code points (codepoints) of the number of the SRS resources included in the SRS resource set with the Nth lower ID corresponding to each rank of all ranks that may be indicated by the first SRI field. For any rank value x, the first $K_x$ code points are mapped to $K_x$ SRI values corresponding to the rank value x, and the remaining ($2^{N_N} - K_x$) code points are reserved values.

In addition, the bit width of the third SRI field in the DCI may also be associated with the maximum number of transmission layers. For example, the bit width of the third SRI field may be determined based on the number of resources included in the SRS resource set corresponding to the third SRI field and the maximum number of transmission layers.

As an example, the bit width of the third SRI field is determined by the following formula:

$$\left\lceil \log_2\left( \sum_{k=1}^{\min\{L_{\max}, N_{\text{SRS-N}}\}} \binom{N_{\text{SRS-N}}}{k} \right) \right\rceil$$

where $N_{\text{SRS-N}}$ represents the number of resources included in the SRS resource set corresponding to the third SRI field; and $L_{max}$ is the maximum number of transmission layers. For example, for the nonCodebook-based PUSCH transmission, the above-mentioned multiple SRS resource sets are SRS resource sets with usage set to be "nonCodeBook". The bit width of the third SRI field may be determined based on the number of resources included in the SRS resource set corresponding to the third SRI field and the maximum number of transmission layers by the following formula.

$$\left\lceil \log_2\left( \sum_{k=1}^{\min\{L_{\max}, N_{\text{SRS-N}}\}} \binom{N_{\text{SRS-N}}}{k} \right) \right\rceil$$

where $N_{\text{SRS-N}}$ represents the number of resources included in the SRS resource set corresponding to the third SRI field; and $L_{max}$ is the maximum number of transmission layers. In a preferable embodiment, the SRS resource set corresponding to the third SRI field may be the SRS resource set with the Nth lower ID among the above multiple SRS resource sets.

Furthermore, the bit width of the third SRI field in the DCI may also be associated with a minimum value among the numbers of resources included in each of the above multiple SRS resource sets. For example, the bit width of the third SRI field may also be determined based on the number of resources included in the SRS resource set corresponding to the third SRI field, the maximum number of transmission layers and the minimum value among the numbers of resources included in each of the above multiple SRS resource sets.

As an example, the bit width of the third SRI field is determined by the following formula:

$$\left\lceil \log_2 \left( \sum_{k=1}^{\min\{L_{\max}, N_{\mathrm{SRS,min}}\}} \binom{N_{\mathrm{SRS-N}}}{k} \right) \right\rceil$$

where $N_{\mathrm{SRS-N}}$ is the number of resources included in the SRS resource set corresponding to the third SRI field, $L_{max}$ is the maximum number of transmission layers, and $N_{\mathrm{SRS,min}}$ is the minimum value among the numbers of resources included in each of the above multiple SRS resource sets. For example, for non Code book-based PUSCH transmission, the above-mentioned multiple SRS resource sets all have usages set to be "nonCodeBook". The bit width of the third SRI field may be determined based on the number of resources included in the SRS resource set corresponding to the third SRI field, the maximum number of transmission layers and the minimum value among the numbers of resources included in each of the multiple SRS resource sets by the following formula:

$$\left\lceil \log_2 \left( \sum_{k=1}^{\min\{L_{\max}, N_{\mathrm{SRS,min}}\}} \binom{N_{\mathrm{SRS-N}}}{k} \right) \right\rceil$$

where $N_{\mathrm{SRS-N}}$ is the number of resources included in the SRS resource set corresponding to the third SRI field, $L_{max}$ is the maximum number of transmission layers, and $N_{\mathrm{SRS,min}}$ is the minimum value among the numbers of resources included in each of the above multiple SRS resource sets. In a preferable embodiment, the SRS resource set corresponding to the third SRI field may be the SRS resource set with the Nth lower ID among the above multiple SRS resource sets.

The bit width of the third SRI field may also be determined based on the minimum value among the numbers of resources included in each of the above multiple SRS resource sets and the number of transmission layers indicated by the first SRI field. One possible way is that: the bit width NN of the third SRI field is determined based on a maximum value among numbers of code points (codepoints) of the number of resources included in the SRS resource set with the minimum number of resources included in all SRS resource sets corresponding to each rank of all ranks that may be indicated by the first SRI field. For any rank value x, the first $K_x$ code points are mapped to $K_x$ SRI values corresponding to the rank value x, and the remaining $(2^{N_N} - K_x)$ code points are reserved values.

Based on the above embodiment, the number of transmission layers that may be indicated by the first SRI field is determined based on the minimum value among the numbers of resources included in each of the multiple SRS resource sets and/or the maximum number of transmission layers.

In an embodiment, the number of transmission layers that may be indicated by the first SRI field may be determined based on the minimum value among the numbers of resources included in each of the multiple SRS resource sets. For example, the number of layers that may be indicated by the first SRI field is 1 to the minimum value among the numbers of resources included in each of the above-mentioned multiple SRS resource sets. Assuming that the minimum number of resources included in each of the above multiple SRS resource sets is 3, the number of transmission layers that may be indicated by the first SRI field includes 1, 2, and 3.

The number of transmission layers that may be indicated by the first SRI field may also be determined based on the maximum number of transmission layers. For example, the number of layers that may be indicated by the first SRI field is 1 to the maximum number of transmission layers. Assuming that the maximum number of transmission layers is 2, the number of transmission layers that may be indicated includes 1 and 2.

The number of transmission layers that may be indicated by the first SRI field may also be determined based on the minimum value among the numbers of resources included in each of the multiple SRS resource sets and the maximum number of transmission layers. For example, the number of layers that may be indicated by the first SRI field is 1 to $min\{L_{max}, N_{SRS,min}\}$, where $L_{max}$ is the maximum number of transmission layers, and $N_{SRS,min}$ is the minimum value among the numbers of resources included in each of the above-mentioned multiple SRS resource sets. Assuming that the minimum number of resources included in each of the above multiple SRS resource sets is 3, and the maximum number of transmission layers is 2, then the number of transmission layers that may be indicated by the first SRI field includes 1 and 2.

According to the above embodiment, the coding scheme of the first SRI field is determined based on the number of resources included in the SRS resource set to which the SRS resource indicated by the first SRI field belongs. In an embodiment, the coding scheme of the first SRI field may be reflected as a correspondence between each index field bit field mapped to index and SRI combinations, where the bit width of the first SRI field determines a maximum number of the SRI combinations that may be indicated by the first SRI field. For example, the first SRI field may indicate up to 4 SRI combinations in case that the bit width of the first SRI field is 2 and the first SRI field may indicate up to 8 SRI combinations in case that the bit width of the first SRI field is 3. The number of resources included in the SRS resource set to which the SRS resource indicated by the first SRI field belongs determines the number of valid SRI combinations that may be available from the first SRI field. For example, up to three valid SRI combinations may be formed in case that the number of resources included in the SRS resource set to which the SRS resource indicated by the first SRI field belongs is 2.

Redundantly SRI combinations that may be indicated may be reserved in case that the maximum number of the SRI combinations that may be indicated by the first SRI field determined based on the bit width of the first SRI field is greater than the number of valid SRI combinations that may be available from the first SRI field determined based on the number of resources included in the SRS resource set to which the SRS resource indicated by the first SRI field belongs.

According to the above embodiment, the coding scheme of the first SRI field is determined based on the number of resources included in the SRS resource set to which the SRS resource indicated by the first SRI field belongs and at least one of the minimum value among the numbers of resources included in each of the multiple SRS resource sets and the maximum number of transmission layers.

In an embodiment, during actual coding, not only the number of resources included in the SRS resource set to which the SRS resource indicated by the first SRI field belongs needs to be considered, but also the maximum number of transmission layers and/or the minimum value among the numbers of resources included in each of the multiple SRS resource sets need to be considered. Both of them may limit the number of SRS resources in the SRI combination, which limits the number of valid SRI combinations. For example, the number of resources included in the SRS resource set to which the SRS resource indicated by the first SRI field belongs is 4, and the maximum number of transmission layers is 3, then the maximum value among the numbers of resources included in the valid SRI combination in the coding is 3.

Based on the above embodiment, the multiple SRI fields in the DCI are in one-to-one correspondence with the multiple SRS resource sets.

Here, the correspondence between each SRI field in the DCI and each of the above multiple SRS resource sets may be that the Nth SRI field corresponds to the SRS resource set with the Nth lower ID or the Nth higher ID. For another example, the Nth SRI field corresponds to the SRS resource set with the Nth lower sequence number or the Nth higher sequence number, etc.

The Nth SRI field corresponding to the SRS resource set with the Nth lower ID is taken as an example. On this basis, in case that each SRS resource set is configured, the number of resources included in the SRS resource set with the lowest ID is configured to be not less than the number of resources included in each of the remaining SRS resource sets. That is, it ensures that the bit width of the first SRI field does not limit the PUSCH transmission performance. Alternatively, after the configuration for each SRS resource set is completed, the SRI field corresponding to the SRS resource set including the most SRS resources is determined as the first SRI field, and the first SRI field indicates both the SRS resources and the number of transmission layers, and the limitation to the PUSCH transmission performance may be avoided.

For example, DCI includes two SRI fields. The first SRI field corresponds to the first SRS resource set. The bit width of the first SRI field is determined based on the number of resources included in the first SRS resource set. The another SRI field corresponds to the second SRS resource set. the bit width of the another SRI field is determined based on the number of resources included in the second SRS resource set.

FIG. 3 is a schematic structural diagram of a terminal according to an embodiment of the present application. As shown in FIG. 3, the terminal includes a memory 320, a transceiver 300, and a processor 310, and:

the memory 320 is used to store a computer program; the transceiver 300 is used to transmit and receive data under control of the processor 310; the processor 310 is used to read the computer program in the memory 320. The computer program, in case that executed by the processor, causes the terminal to perform the following operations:

receiving downlink control information (DCI), the DCI including multiple sounding reference signal (SRS) resource indicator (SRI) fields;
determining a bit width of a first SRI field in the multiple SRI fields based on the number of resources included in at least one SRS resource set among multiple SRS resource sets; and

determining an SRS resource corresponding to an uplink transmission based on the bit width of the first SRI field.

The transceiver 300 is used to receive and transmit data under control of the processor 310.

In FIG. 3, a bus architecture may include any number of interconnected buses and bridges, which are linked together through various circuits of one or more processors represented by processor 310 and one or more memories represented by the memory 320. The bus architecture may also link together various other circuits, such as peripherals, voltage regulators, and power management circuits. The bus interface provides an interface. The transceiver 300 may be multiple elements, i.e., including a transmitter and a receiver, units for providing communication with various other devices over transmission media including wireless channels, wired channels, fiber optic cables, and the like. For different user equipment, the user interface 330 may also be an interface capable of externally or internally connecting the required equipment, and the connected equipment includes, but not limited to, a keypad, a display, a speaker, a microphone, a joystick, and the like.

The processor 310 is responsible for managing the bus architecture and general processing, and the memory 320 may store data used by the processor 310 in case that performing operations.

In an embodiment, the processor 310 may be a central processing unit (CPU), an application specific integrated circuit (ASIC), a field-programmable gate array (FPGA), or a complex programmable logic device (CPLD), the processor may also use a multi-core architecture.

The processor is configured to perform any one of the methods of the embodiments of the present application based on the obtained executable instructions by invoking the computer program stored in the memory. The processor and memory may also be physically separated.

In an embodiment, determining the bit width of the first SRI field in the multiple SRI fields based on the number of resources included in at least one SRS resource set among multiple SRS resource sets, includes:

determining the bit width of the first SRI field based on the number of resources included in an SRS resource set corresponding to the first SRI field among the multiple SRS resource sets.

In an embodiment, the number of resources included in the SRS resource set corresponding to the first SRI field is equal to or greater than the number of resources included in each of SRS resource sets other than the SRS resource set corresponding to the first SRI field among the multiple SRS resource sets.

In an embodiment, determining the bit width of the first SRI field based on the number of resources included in the SRS resource set corresponding to the first SRI field among the multiple SRS resource sets includes:

determining the bit width of the first SRI field based on the number of resources included in the SRS resource set corresponding to the first SRI field and at least one of a minimum value among numbers of resources included in each of the multiple SRS resource sets and a maximum number of transmission layers.

In an embodiment, among the multiple SRI fields included in the DCI, a second SRI field indicates the number of transmission layers and SRS resources corresponding to the second SRI field, and SRI fields other than the second SRI field among the multiple SRI fields indicate SRS resources corresponding to the number of transmission layers; and the number of resources included in the SRS resource set corresponding to the second SRI field is equal to or greater than the number of resources included in each of SRS resource sets other than the SRS resource set corresponding to the second SRI field among the multiple SRS resource sets.

In an embodiment, the second SRI field is one of the first SRI fields. In an embodiment, determining a bit width of a first SRI field in the multiple SRI fields based on the number of resources included in at least one SRS resource set among multiple SRS resource sets, includes:

determining the bit width of the first SRI field based on a maximum value among numbers of resources included in each of the multiple SRS resource sets.

In an embodiment, determining the bit width of the first SRI field based on the maximum value among numbers of resources included in each of the multiple SRS resource sets includes:

determining the bit width of the first SRI field based on the maximum value among the numbers of resources included in each of the multiple SRS resource sets and at least one of a minimum value among numbers of resources included in each of the multiple SRS resource sets and a maximum number of transmission layers.

In an embodiment, determining the bit width of the first SRI field in the multiple SRI fields based on the number of resources included in at least one SRS resource set among multiple SRS resource sets, includes:

in case that numbers of resources included in the multiple SRS resource sets are the same, determining the bit width of the first SRI field in the multiple SRI fields based on the number of resources included in one SRS resource set among the multiple SRS resource sets and a maximum number of transmission layers.

In an embodiment, a bit width of a third SRI field other than the first SRI field among the multiple SRI fields is determined based on at least one of the number of resources included in an SRS resource set corresponding to the third SRI field, a minimum value among the numbers of resources included in each of the multiple SRS resource sets, and the maximum number of transmission layers.

In an embodiment, the coding scheme of the first SRI field is determined based on the number of resources included in the SRS resource set to which the SRS resource indicated by the first SRI field belongs and at least one of the minimum value among the numbers of resources included in each of the multiple SRS resource sets and the maximum number of transmission layers.

In an embodiment, the multiple SRI fields in the DCI are in one-to-one correspondence with the multiple SRS resource sets.

In an embodiment, usage types of the multiple SRS resource sets are consistent; or
uplink transmission schemes corresponding to the multiple SRS resource sets are consistent.

It should be noted here that the above-mentioned terminal according to the embodiments of the present application may implement all the method steps implemented by the above-mentioned method embodiments performed by the terminal, and may achieve the same effect. The same parts and beneficial effects as the same method embodiments are not repeated in the present application.

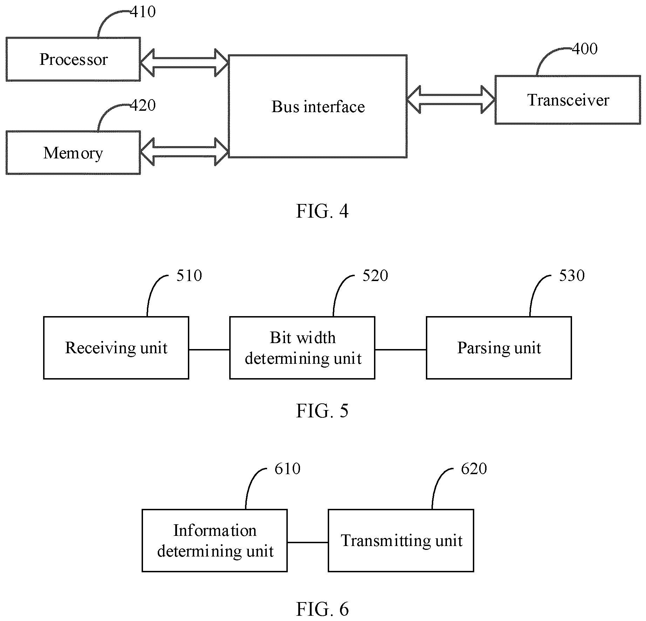

FIG. 4 is a schematic structural diagram of a network side device according to an embodiment of the present application. As shown in FIG. 4, the network side device includes a memory 420, a transceiver 400, and a processor 410, and:

the memory 420, is used to store a computer program; the transceiver 400 is used to transmit and receive data under control of the processor; the computer program, in case that executed by the processor 410, causes the network side device to perform the following operations:

    determining downlink control information (DCI), where the DCI includes multiple sounding reference signal (SRS) resource indicator (SRI) fields, a bit width of a first SRI field in the multiple SRI fields is determined based on the number of resources included in at least one SRS resource set among multiple SRS resource sets; and
    transmitting the DCI.

In FIG. 4, a bus architecture may include any number of interconnected buses and bridges, which are linked together through various circuits of one or more processors represented by processor 410 and one or more memories represented by the memory 420. The bus architecture may also link together various other circuits, such as peripherals, voltage regulators, and power management circuits. The bus interface provides an interface. The transceiver 400 may be multiple elements, i.e., including a transmitter and a receiver, units for providing communication with various other devices over transmission media including wireless channels, wired channels, fiber optic cables, and the like.

The processor 410 is responsible for managing the bus architecture and general processing, and the memory 420 may store data used by the processor 410 in case that performing operations.

In an embodiment, the processor 410 may be a central processing unit (CPU), an application specific integrated circuit (ASIC), a field-programmable gate array (FPGA), or a complex programmable logic device (CPLD), the processor may also use a multi-core architecture.

The processor is configured to perform any one of the methods of the embodiments of the present application based on the obtained executable instructions by invoking the computer program stored in the memory. The processor and memory may also be physically separated.

In an embodiment, the bit width of the first SRI field is determined based on the number of resources included in the SRS resource set corresponding to the first SRI field among the multiple SRS resource sets.

In an embodiment, the number of resources included in the SRS resource set corresponding to the first SRI field is equal to or greater than the number of resources included in each of SRS resource sets other than the SRS resource set corresponding to the first SRI field among the multiple SRS resource sets.

In an embodiment, the bit width of the first SRI field is determined based on the number of resources included in the SRS resource set to which the SRS resource corresponding to the first SRI field belongs and at least one of the minimum value among the numbers of resources included in each of the multiple SRS resource sets and the maximum number of transmission layers.

In an embodiment, among the multiple SRI fields included in the DCI, a second SRI field indicates the number of transmission layers and SRS resources corresponding to the second SRI field, and SRI fields other than the second SRI field among the multiple SRI fields indicate SRS resources corresponding to the number of transmission layers; and the number of resources included in the SRS resource set corresponding to the second SRI field is equal to or greater than the number of resources included in each of SRS resource sets other than the SRS resource set corresponding to the second SRI field among the multiple SRS resource sets.

In an embodiment, the second SRI field is one of the first SRI fields.

In an embodiment, the bit width of the first SRI field is determined based on a maximum value among numbers of resources included in each of the multiple SRS resource sets.

In an embodiment, the bit width of the first SRI field is determined based on the maximum value among the numbers of resources included in each of the multiple SRS resource sets and at least one of a minimum value among numbers of resources included in each of the multiple SRS resource sets and a maximum number of transmission layers.

In an embodiment, in case that numbers of resources included in the multiple SRS resource sets are the same, the bit width of the first SRI field is determined based on the number of resources included in one SRS resource set among the multiple SRS resource sets and a maximum number of transmission layers.

In an embodiment, a bit width of a third SRI field other than the first SRI field among the multiple SRI fields is determined based on at least one of the number of resources included in an SRS resource set corresponding to the third SRI field, a minimum value among the numbers of resources included in each of the multiple SRS resource sets, and the maximum number of transmission layers.

In an embodiment, the coding scheme of the first SRI field is determined based on the number of resources included in the SRS resource set to which the SRS resource indicated by the first SRI field belongs and at least one of the minimum value among the numbers of resources included in each of the multiple SRS resource sets and the maximum number of transmission layers.

In an embodiment, the multiple SRI fields in the DCI are in one-to-one correspondence with the multiple SRS resource sets.

In an embodiment, usage types of the multiple SRS resource sets are consistent, or uplink transmission schemes corresponding to the multiple SRS resource sets are consistent.

It should be noted here that the above-mentioned network side device according to the embodiments of the present application may implement all the method steps implemented by the above-mentioned method embodiments performed by the network side device, and may achieve the same effect. The same parts and beneficial effects as the same method embodiments is not repeated in the present application.

FIG. 5 is a first schematic structural diagram of a resource indication apparatus according to an embodiment of the present application. The resource indication apparatus includes:

a receiving unit 510, for receiving downlink control information (DCI), the DCI including multiple sounding reference signal (SRS) resource indicator (SRI) fields;

a bit width determining unit 520, for determining a bit width of a first SRI field in the multiple SRI fields based on the number of resources included in at least one SRS resource set among multiple SRS resource sets; and

a parsing unit 530, for determining an SRS resource corresponding to an uplink transmission based on the bit width of the first SRI field.

In an embodiment, the bit width determining unit 520 is used for:
determining the bit width of the first SRI field based on the number of resources included in an SRS resource set corresponding to the first SRI field among the multiple SRS resource sets.

In an embodiment, the number of resources included in the SRS resource set corresponding to the first SRI field is equal to or greater than the number of resources included in each of SRS resource sets other than the SRS resource set corresponding to the first SRI field among the multiple SRS resource sets.

In an embodiment, the bit width determining unit 520 is used for:
determining the bit width of the first SRI field based on the number of resources included in the SRS resource set corresponding to the first SRI field and at least one of a minimum value among numbers of resources included in each of the multiple SRS resource sets and a maximum number of transmission layers.

In an embodiment, among the multiple SRI fields included in the DCI, a second SRI field indicates the number of transmission layers and SRS resources corresponding to the second SRI field, and SRI fields other than the second SRI field among the multiple SRI fields indicate SRS resources corresponding to the number of transmission layers; and the number of resources included in the SRS resource set corresponding to the second SRI field is equal to or greater than the number of resources included in each of SRS resource sets other than the SRS resource set corresponding to the second SRI field among the multiple SRS resource sets.

In an embodiment, the second SRI field is one of the first SRI fields.

In an embodiment, the bit width determining unit 520 is used for:
determining the bit width of the first SRI field based on a maximum value among numbers of resources included in each of the multiple SRS resource sets.

In an embodiment, the bit width determining unit 520 is used for:
determining the bit width of the first SRI field based on the maximum value among the numbers of resources included in each of the multiple SRS resource sets and at least one of a minimum value among numbers of resources included in each of the multiple SRS resource sets and a maximum number of transmission layers.

In an embodiment, the bit width determining unit 520 is used for:
in case that numbers of resources included in the multiple SRS resource sets are the same, determining the bit width of the first SRI field in the multiple SRI fields based on the number of resources included in one SRS resource set among the multiple SRS resource sets and a maximum number of transmission layers.

**EP 4 383 891 A1**

In an embodiment, a bit width of a third SRI field other than the first SRI field among the multiple SRI fields is determined based on at least one of the number of resources included in an SRS resource set corresponding to the third SRI field, a minimum value among the numbers of resources included in each of the multiple SRS resource sets, and the maximum number of transmission layers.

In an embodiment, the coding scheme of the first SRI field is determined based on the number of resources included in the SRS resource set to which the SRS resource indicated by the first SRI field belongs and at least one of the minimum value among the numbers of resources included in each of the multiple SRS resource sets and the maximum number of transmission layers.

In an embodiment, the multiple SRI fields in the DCI are in one-to-one correspondence with the multiple SRS resource sets.

In an embodiment, usage types of the multiple SRS resource sets are consistent, or uplink transmission schemes corresponding to the multiple SRS resource sets are consistent.

The above-mentioned resource indication apparatus according to the embodiments of the present application may implement all the method steps implemented by the above-mentioned method embodiments performed by the terminal and may achieve the same effect. The same parts and beneficial effects as the same method embodiments are not repeated here.

FIG. 6 is a second schematic structural diagram of a resource indication apparatus according to an embodiment of the present application. The resource indication apparatus includes:

an information determining unit 610, for determining downlink control information (DCI), where the DCI includes multiple sounding reference signal (SRS) resource indicator (SRI) fields, a bit width of a first SRI field in the multiple SRI fields is determined based on the number of resources included in at least one SRS resource set among multiple SRS resource sets; and
a transmitting unit 620 for transmitting the DCI.

In an embodiment, the bit width of the first SRI field is determined based on the number of resources included in the SRS resource set corresponding to the first SRI field among the multiple SRS resource sets.

In an embodiment, the number of resources included in the SRS resource set corresponding to the first SRI field is equal to or greater than the number of resources included in each of SRS resource sets other than the SRS resource set corresponding to the first SRI field among the multiple SRS resource sets.

In an embodiment, the bit width of the first SRI field is determined based on the number of resources included in the SRS resource set corresponding to the first SRI field and at least one of the minimum value among the numbers of resources included in each of the multiple SRS resource sets and the maximum number of transmission layers.

In an embodiment, among the multiple SRI fields included in the DCI, a second SRI field indicates the number of transmission layers and SRS resources corresponding to the second SRI field, and SRI fields other than the second SRI field among the multiple SRI fields indicate SRS resources corresponding to the number of transmission layers; and the number of resources included in the SRS resource set corresponding to the second SRI field is equal to or greater than the number of resources included in each of SRS resource sets other than the SRS resource set corresponding to the second SRI field among the multiple SRS resource sets.

In an embodiment, the second SRI field is one of the first SRI fields.

In an embodiment, the bit width of the first SRI field is determined based on a maximum value among numbers of resources included in each of the multiple SRS resource sets.

In an embodiment, the bit width of the first SRI field is determined based on the maximum value among the numbers of resources included in each of the multiple SRS resource sets and at least one of a minimum value among numbers of resources included in each of the multiple SRS resource sets and a maximum number of transmission layers.

In an embodiment, in case that numbers of resources included in the multiple SRS resource sets are the same, the bit width of the first SRI field in the multiple SRI fields is determined based on the number of resources included in one SRS resource set among the multiple SRS resource sets and a maximum number of transmission layers.

In an embodiment, a bit width of a third SRI field other than the first SRI field among the multiple SRI fields is determined based on at least one of the number of resources included in an SRS resource set corresponding to the third SRI field, a minimum value among the numbers of resources included in each of the multiple SRS resource sets, and the maximum number of transmission layers.

In an embodiment, the coding scheme of the first SRI field is determined based on the number of resources included in the SRS resource set to which the SRS resource indicated by the first SRI field belongs and at least one of the minimum value among the numbers of resources included in each of the multiple SRS resource sets and the maximum number of transmission layers.

In an embodiment, the multiple SRI fields in the DCI are in one-to-one correspondence with the multiple SRS resource sets.

59

In an embodiment, usage types of the multiple SRS resource sets are consistent, or uplink transmission schemes corresponding to the multiple SRS resource sets are consistent.

It should be noted here that the above-mentioned network side device according to the embodiments of the present application may implement all the method steps implemented by the above-mentioned method embodiments performed by the network side device, and may achieve the same effect. The same parts and beneficial effects as the same method embodiments are not repeated in the present application.

It should be noted that, the division of units/modules in the embodiments of the present disclosure is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a computer readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network side device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or optical disk.

An embodiment of the present application further provides a processor-readable storage medium storing a computer program, in case that executed by a processor, to cause the processor to perform the steps of the methods described above, which includes:

receiving downlink control information (DCI), the DCI including multiple sounding reference signal (SRS) resource indicator (SRI) fields;

determining a bit width of a first SRI field in the multiple SRI fields based on the number of resources included in at least one SRS resource set among multiple SRS resource sets; and

determining an SRS resource corresponding to an uplink transmission based on the bit width of the first SRI field; or includes:

determining downlink control information (DCI), where the DCI includes multiple sounding reference signal (SRS) resource indicator (SRI) fields, a bit width of a first SRI field in the multiple SRI fields is determined based on the number of resources included in at least one SRS resource set among multiple SRS resource sets; and transmitting the DCI.

It should be noted that the computer readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, nonvolatile memory (NAND FLASH), solid-state drive (SSD)), etc.

In addition, the solutions according to the embodiments of the present application may be applicable to various systems, especially 5G systems. For example, applicable systems may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network side device. The system may also include a core network part, such as an evolved packet system (EPS), a 5G system (5GS), and the like.

The terminal in the embodiments of the present application may be a device that provides voice and/or data connectivity to a user, a handheld device with a wireless connection function, or other processing device connected to a wireless modem. In different systems, the names of the terminal may be different. For example, in the 5G system, the terminal may be called as user equipment (UE). A radio terminal may communicate with one or more core networks (CN) via a radio access network (RAN), and the radio terminal may be a mobile terminal, such as a mobile phone (or cellular phone) and computers with mobile terminal, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A radio terminal may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network side device involved in the embodiments of the present application may be a base station, and the base station may include a plurality of cells providing services for the terminal. Depending on the specific application, the network side device may also be called an access point, or may be a device in the access network that communicates with wireless terminal through one or more sectors on the air interface, or other names. The network side device may be used to exchange received air frames with Internet Protocol (IP) packets, and act as a router between radio terminal and the rest of the access network, and the rest of the access network may include an IP communication network. The network side device may also coordinate attribute management for the air interface. For example, the network side device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network side device may include a centralized unit (CU) node and a distributed unit (DU) node, and the centralized unit and the distributed unit may also be geographically separated.

Multi-input multi-output (MIMO) transmission may be performed between the network side device and the terminal using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

**Claims**

**1.** A resource indication method, comprising:

receiving downlink control information (DCI), the DCI comprising multiple sounding reference signal (SRS) resource indicator (SRI) fields;
determining a bit width of a first SRI field in the multiple SRI fields based on the number of resources comprised in at least one SRS resource set among multiple SRS resource sets; and

determining an SRS resource corresponding to an uplink transmission based on the bit width of the first SRI field.

2. The resource indication method of claim 1, wherein determining the bit width of the first SRI field in the multiple SRI fields based on the number of resources comprised in at least one SRS resource set among multiple SRS resource sets comprises:
determining the bit width of the first SRI field based on the number of resources comprised in an SRS resource set corresponding to the first SRI field among the multiple SRS resource sets.

3. The resource indication method of claim 2, wherein the number of resources comprised in the SRS resource set corresponding to the first SRI field is equal to or greater than the number of resources comprised in each of SRS resource sets other than the SRS resource set corresponding to the first SRI field among the multiple SRS resource sets.

4. The resource indication method of claim 2 or 3, wherein determining the bit width of the first SRI field based on the number of resources comprised in the SRS resource set corresponding to the first SRI field among the multiple SRS resource sets comprises:
determining the bit width of the first SRI field based on the number of resources comprised in the SRS resource set corresponding to the first SRI field and at least one of a minimum value among numbers of resources comprised in each of the multiple SRS resource sets and a maximum number of transmission layers.

5. The resource indication method of claim 2, wherein among the multiple SRI fields comprised in the DCI, a second SRI field indicates the number of transmission layers and SRS resources corresponding to the second SRI field, and SRI fields other than the second SRI field among the multiple SRI fields indicate SRS resources corresponding to the number of transmission layers; and
the number of resources comprised in the SRS resource set corresponding to the second SRI field is equal to or greater than the number of resources comprised in each of SRS resource sets other than the SRS resource set corresponding to the second SRI field among the multiple SRS resource sets.

6. The resource indication method of claim 5, wherein the second SRI field is one of the first SRI fields.

7. The resource indication method of any one of claims 1 to 6, wherein determining the bit width of the first SRI field in the multiple SRI fields based on the number of resources comprised in at least one SRS resource set among multiple SRS resource sets comprises:
determining the bit width of the first SRI field based on a maximum value among numbers of resources comprised in each of the multiple SRS resource sets.

8. The resource indication method of claim 7, wherein determining the bit width of the first SRI field based on the maximum value among numbers of resources comprised in each of the multiple SRS resource sets comprises:
determining the bit width of the first SRI field based on the maximum value among the numbers of resources comprised in each of the multiple SRS resource sets and at least one of a minimum value among numbers of resources comprised in each of the multiple SRS resource sets and a maximum number of transmission layers.

9. The resource indication method of any one of claims 1 to 6, wherein determining the bit width of the first SRI field in the multiple SRI fields based on the number of resources comprised in at least one SRS resource set among multiple SRS resource sets comprises:
in case that numbers of resources comprised in the multiple SRS resource sets are the same, determining the bit width of the first SRI field in the multiple SRI fields based on the number of resources comprised in one SRS resource set among the multiple SRS resource sets and a maximum number of transmission layers.

10. The resource indication method of any one of claims 1 to 9, wherein a bit width of a third SRI field other than the first SRI field among the multiple SRI fields is determined based on at least one of the number of resources comprised in an SRS resource set corresponding to the third SRI field, a minimum value among the numbers of resources comprised in each of the multiple SRS resource sets, and a maximum number of transmission layers.

11. The resource indication method of any one of claims 1 to 9, wherein a coding scheme of the first SRI field is determined based on the number of resources comprised in the SRS resource set to which the SRS resource indicated by the first SRI field belongs and at least one of a minimum value among numbers of resources comprised in each of the multiple SRS resource sets and a maximum number of transmission layers.

**12.** The resource indication method of any one of claims 1 to 9, wherein the multiple SRI fields in the DCI are in one-to-one correspondence with the multiple SRS resource sets.

**13.** The resource indication method of any one of claims 1 to 9, wherein usage types of the multiple SRS resource sets are consistent; or
uplink transmission schemes corresponding to the multiple SRS resource sets are consistent.

**14.** A resource indication method, comprising:

determining downlink control information (DCI), wherein the DCI comprises multiple sounding reference signal (SRS) resource indicator (SRI) fields, a bit width of a first SRI field in the multiple SRI fields is determined based on the number of resources comprised in at least one SRS resource set among multiple SRS resource sets; and
transmitting the DCI.

**15.** The resource indication method of claim 14, wherein the bit width of the first SRI field is determined based on the number of resources comprised in the SRS resource set corresponding to the first SRI field among the multiple SRS resource sets.

**16.** The resource indication method of claim 14, wherein the number of resources comprised in the SRS resource set corresponding to the first SRI field is equal to or greater than the number of resources comprised in each of SRS resource sets other than the SRS resource set corresponding to the first SRI field among the multiple SRS resource sets.

**17.** The resource indication method of claim 15 or 16, wherein the bit width of the first SRI field is determined based on the number of resources comprised in the SRS resource set corresponding to the first SRI field and at least one of a minimum value among numbers of resources comprised in each of the multiple SRS resource sets and a maximum number of transmission layers.

**18.** The resource indication method of claim 15, wherein among the multiple SRI fields comprised in the DCI, a second SRI field indicates the number of transmission layers and SRS resources corresponding to the second SRI field, and SRI fields other than the second SRI field among the multiple SRI fields indicate SRS resources corresponding to the number of transmission layers; and
the number of resources comprised in the SRS resource set corresponding to the second SRI field is equal to or greater than the number of resources comprised in each of SRS resource sets other than the SRS resource set corresponding to the second SRI field among the multiple SRS resource sets.

**19.** The resource indication method of claim 18, wherein the second SRI field is one of the first SRI fields.

**20.** The resource indication method of any one of claims 14 to 19, wherein the bit width of the first SRI field is determined based on a maximum value among numbers of resources comprised in each of the multiple SRS resource sets.

**21.** The resource indication method of claim 20, wherein the bit width of the first SRI field is determined based on the maximum value among the numbers of resources comprised in each of the multiple SRS resource sets and at least one of a minimum value among numbers of resources comprised in each of the multiple SRS resource sets and a maximum number of transmission layers.

**22.** The resource indication method of any one of claims 14 to 19, in case that numbers of resources comprised in the multiple SRS resource sets are the same, the bit width of the first SRI field is determined based on the number of resources comprised in one SRS resource set among the multiple SRS resource sets and a maximum number of transmission layers.

**23.** The resource indication method of any one of claims 14 to 22, wherein a bit width of a third SRI field other than the first SRI field among the multiple SRI fields is determined based on at least one of the number of resources comprised in an SRS resource set corresponding to the third SRI field, a minimum value among the numbers of resources comprised in each of the multiple SRS resource sets, and a maximum number of transmission layers.

24. The resource indication method of any one of claims 14 to 22, wherein a coding scheme of the first SRI field is determined based on the number of resources comprised in the SRS resource set to which the SRS resource indicated by the first SRI field belongs and at least one of a minimum value among numbers of resources comprised in each of the multiple SRS resource sets and a maximum number of transmission layers.

25. The resource indication method of any one of claims 14 to 22, wherein the multiple SRI fields in the DCI are in one-to-one correspondence with the multiple SRS resource sets.

26. The resource indication method of any one of claims 14 to 22, wherein usage types of the multiple SRS resource sets are consistent; or
uplink transmission schemes corresponding to the multiple SRS resource sets are consistent.

27. A terminal, comprising: a processor, a memory storing a computer program, a transceiver for transmitting and receiving data under control of the processor,
the computer program, in case that executed by the processor of the terminal, causes the processor to perform the following operations:

receiving downlink control information (DCI), the DCI comprising multiple sounding reference signal (SRS) resource indicator (SRI) fields;
determining a bit width of a first SRI field in the multiple SRI fields based on the number of resources comprised in at least one SRS resource set among multiple SRS resource sets; and
determining an SRS resource corresponding to an uplink transmission based on the bit width of the first SRI field.

28. The terminal of claim 27, wherein determining the bit width of the first SRI field in the multiple SRI fields based on the number of resources comprised in at least one SRS resource set among multiple SRS resource sets comprises:
determining the bit width of the first SRI field based on the number of resources comprised in an SRS resource set corresponding to the first SRI field among the multiple SRS resource sets.

29. The terminal of claim 28, wherein the number of resources comprised in the SRS resource set corresponding to the first SRI field is equal to or greater than the number of resources comprised in each of SRS resource sets other than the SRS resource set corresponding to the first SRI field among the multiple SRS resource sets.

30. The terminal of claim 28 or 29, wherein determining the bit width of the first SRI field based on the number of resources comprised in the SRS resource set corresponding to the first SRI field among the multiple SRS resource sets comprises:
determining the bit width of the first SRI field based on the number of resources comprised in the SRS resource set corresponding to the first SRI field and at least one of a minimum value among numbers of resources comprised in each of the multiple SRS resource sets and a maximum number of transmission layers.

31. The terminal of claim 28, wherein among the multiple SRI fields comprised in the DCI, a second SRI field indicates the number of transmission layers and SRS resources corresponding to the second SRI field, and SRI fields other than the second SRI field among the multiple SRI fields indicate SRS resources corresponding to the number of transmission layers; and
the number of resources comprised in the SRS resource set corresponding to the second SRI field is equal to or greater than the number of resources comprised in each of SRS resource sets other than the SRS resource set corresponding to the second SRI field among the multiple SRS resource sets.

32. The terminal of claim 31, wherein the second SRI field is one of the first SRI fields.

33. The terminal of any one of claims 27 to 32, wherein determining the bit width of the first SRI field in the multiple SRI fields based on the number of resources comprised in at least one SRS resource set among multiple SRS resource sets comprises:
determining the bit width of the first SRI field based on a maximum value among numbers of resources comprised in each of the multiple SRS resource sets.

34. The terminal of claim 33, wherein determining the bit width of the first SRI field based on the maximum value among numbers of resources comprised in each of the multiple SRS resource sets comprises:
determining the bit width of the first SRI field based on the maximum value among the numbers of resources comprised in each of the multiple SRS resource sets and at least one of a minimum value among numbers of resources comprised in each of the multiple SRS resource sets and a maximum number of transmission layers.

35. The terminal of any one of claims 27 to 32, wherein determining the bit width of the first SRI field in the multiple SRI fields based on the number of resources comprised in at least one SRS resource set among multiple SRS resource sets comprises:

   in case that numbers of resources comprised in the multiple SRS resource sets are the same, determining the bit width of the first SRI field in the multiple SRI fields based on the number of resources comprised in one SRS resource set among the multiple SRS resource sets and a maximum number of transmission layers.

36. The terminal of any one of claims 27 to 35, wherein a bit width of a third SRI field other than the first SRI field among the multiple SRI fields is determined based on at least one of the number of resources comprised in an SRS resource set corresponding to the third SRI field, a minimum value among the numbers of resources comprised in each of the multiple SRS resource sets, and a maximum number of transmission layers.

37. The terminal of any one of claims 27 to 35, wherein a coding scheme of the first SRI field is determined based on the number of resources comprised in the SRS resource set to which the SRS resource indicated by the first SRI field belongs and at least one of a minimum value among numbers of resources comprised in each of the multiple SRS resource sets and the maximum number of transmission layers.

38. The terminal of any one of claims 27 to 35, wherein the multiple SRI fields in the DCI are in one-to-one correspondence with the multiple SRS resource sets.

39. The terminal of any one of claims 27 to 35, wherein usage types of the multiple SRS resource sets are consistent; or uplink transmission schemes corresponding to the multiple SRS resource sets are consistent.

40. A network side device, comprising a processor, a memory storing a computer program, a transceiver for transmitting and receiving data under control of the processor,
   the computer program, in case that executed by the processor of the network side device, causes the processor to perform the following operations:

   determining downlink control information (DCI), wherein the DCI comprises multiple sounding reference signal (SRS) resource indicator (SRI) fields, a bit width of a first SRI field in the multiple SRI fields is determined based on the number of resources comprised in at least one SRS resource set among multiple SRS resource sets; and
   transmitting the DCI.

41. The network side device of claim 40, wherein the bit width of the first SRI field is determined based on the number of resources comprised in the SRS resource set corresponding to the first SRI field among the multiple SRS resource sets.

42. The network side device of claim 41, wherein the number of resources comprised in the SRS resource set corresponding to the first SRI field is equal to or greater than the number of resources comprised in each of SRS resource sets other than the SRS resource set corresponding to the first SRI field among the multiple SRS resource sets.

43. The network side device of claim 41 or 42, wherein the bit width of the first SRI field is determined based on the number of resources comprised in the SRS resource set corresponding to the first SRI field and at least one of a minimum value among numbers of resources comprised in each of the multiple SRS resource sets and a maximum number of transmission layers.

44. The network side device of claim 41, wherein among the multiple SRI fields comprised in the DCI, a second SRI field indicates the number of transmission layers and SRS resources corresponding to the second SRI field, and SRI fields other than the second SRI field among the multiple SRI fields indicate SRS resources corresponding to the number of transmission layers; and
   the number of resources comprised in the SRS resource set corresponding to the second SRI field is equal to or greater than the number of resources comprised in each of SRS resource sets other than the SRS resource set corresponding to the second SRI field among the multiple SRS resource sets.

45. The network side device of claim 44, wherein the second SRI field is one of the first SRI fields.

46. The network side device of any one of claims 40 to 45, wherein the bit width of the first SRI field is determined based on a maximum value among numbers of resources comprised in each of the multiple SRS resource sets.

47. The network side device of claim 46, wherein the bit width of the first SRI field is determined based on the maximum value among the numbers of resources comprised in each of the multiple SRS resource sets and at least one of a minimum value among numbers of resources comprised in each of the multiple SRS resource sets and a maximum number of transmission layers.

48. The network side device of any one of claims 40 to 45, in case that numbers of resources comprised in the multiple SRS resource sets are the same, the bit width of the first SRI field is determined based on the number of resources comprised in one SRS resource set among the multiple SRS resource sets and a maximum number of transmission layers.

49. The network side device of any one of claims 40 to 48, wherein a bit width of a third SRI field other than the first SRI field among the multiple SRI fields is determined based on at least one of the number of resources comprised in an SRS resource set corresponding to the third SRI field, a minimum value among the numbers of resources comprised in each of the multiple SRS resource sets, and a maximum number of transmission layers.

50. The network side device of any one of claims 40 to 48, wherein a coding scheme of the first SRI field is determined based on the number of resources comprised in the SRS resource set to which the SRS resource indicated by the first SRI field belongs and at least one of a minimum value among numbers of resources comprised in each of the multiple SRS resource sets and the maximum number of transmission layers.

51. The network side device of any one of claims 40 to 48, wherein the multiple SRI fields in the DCI are in one-to-one correspondence with the multiple SRS resource sets.

52. The network side device of any one of claims 40 to 48, wherein usage types of the multiple SRS resource sets are consistent; or
uplink transmission schemes corresponding to the multiple SRS resource sets are consistent.

53. A resource indication apparatus, comprising:

a receiving unit, for receiving downlink control information (DCI), the DCI comprising multiple sounding reference signal (SRS) resource indicator (SRI) fields;
a bit width determining unit, for determining a bit width of a first SRI field in the multiple SRI fields based on the number of resources comprised in at least one SRS resource set among multiple SRS resource sets; and
a parsing unit, for determining an SRS resource corresponding to an uplink transmission based on the bit width of the first SRI field.

54. The resource indication apparatus of claim 53, wherein the bit width determining unit is further used for:
determining the bit width of the first SRI field based on the number of resources comprised in an SRS resource set corresponding to the first SRI field among the multiple SRS resource sets.

55. The resource indication apparatus of claim 54, wherein the number of resources comprised in the SRS resource set corresponding to the first SRI field is equal to or greater than the number of resources comprised in each of SRS resource sets other than the SRS resource set corresponding to the first SRI field among the multiple SRS resource sets.

56. The resource indication apparatus of claim 54 or 55, wherein the bit width determining unit is further used for:
determining the bit width of the first SRI field based on the number of resources comprised in the SRS resource set corresponding to the first SRI field and at least one of a minimum value among numbers of resources comprised in each of the multiple SRS resource sets and a maximum number of transmission layers.

57. The resource indication apparatus of claim 54, wherein among the multiple SRI fields comprised in the DCI, a second SRI field indicates the number of transmission layers and SRS resources corresponding to the second SRI field, and SRI fields other than the second SRI field among the multiple SRI fields indicate SRS resources corresponding to the number of transmission layers; and
the number of resources comprised in the SRS resource set corresponding to the second SRI field is equal to or greater than the number of resources comprised in each of SRS resource sets other than the SRS resource set corresponding to the second SRI field among the multiple SRS resource sets.

58. The resource indication apparatus of claim 57, wherein the second SRI field is one of the first SRI fields.

59. The resource indication apparatus of any one of claims 53 to 58, wherein the bit width determining unit is further used for:
determining the bit width of the first SRI field based on a maximum value among numbers of resources comprised in each of the multiple SRS resource sets.

60. The resource indication apparatus of claim 59, wherein the bit width determining unit is further used for:
determining the bit width of the first SRI field based on the maximum value among the numbers of resources comprised in each of the multiple SRS resource sets and at least one of a minimum value among numbers of resources comprised in each of the multiple SRS resource sets and a maximum number of transmission layers.

61. The resource indication apparatus of any one of claims 53 to 58, wherein the bit width determining unit is further used for:
in case that numbers of resources comprised in the multiple SRS resource sets are the same, determining the bit width of the first SRI field in the multiple SRI fields based on the number of resources comprised in one SRS resource set among the multiple SRS resource sets and a maximum number of transmission layers.

62. The resource indication apparatus of any one of claims 53 to 61, wherein a bit width of a third SRI field other than the first SRI field among the multiple SRI fields is determined based on at least one of the number of resources comprised in an SRS resource set corresponding to the third SRI field, a minimum value among the numbers of resources comprised in each of the multiple SRS resource sets, and a maximum number of transmission layers.

63. The resource indication apparatus of any one of claims 53 to 61, wherein a coding scheme of the first SRI field is determined based on the number of resources comprised in the SRS resource set to which the SRS resource indicated by the first SRI field belongs and at least one of a minimum value among numbers of resources comprised in each of the multiple SRS resource sets and the maximum number of transmission layers.

64. The resource indication apparatus of any one of claims 53 to 61, wherein the multiple SRI fields in the DCI are in one-to-one correspondence with the multiple SRS resource sets.

65. The resource indication apparatus of any one of claims 53 to 61, wherein usage types of the multiple SRS resource sets are consistent; or
uplink transmission schemes corresponding to the multiple SRS resource sets are consistent.

66. A resource indication apparatus, comprising:

an information determining unit, for determining downlink control information (DCI), wherein the DCI comprises multiple sounding reference signal (SRS) resource indicator (SRI) fields, a bit width of a first SRI field in the multiple SRI fields is determined based on the number of resources comprised in at least one SRS resource set among multiple SRS resource sets; and
a transmitting unit, for transmitting the DCI.

67. The resource indication apparatus of claim 66, wherein the bit width of the first SRI field is determined based on the number of resources comprised in the SRS resource set corresponding to the first SRI field among the multiple SRS resource sets.

68. The resource indication apparatus of claim 66, wherein the number of resources comprised in the SRS resource set corresponding to the first SRI field is equal to or greater than the number of resources comprised in each of SRS resource sets other than the SRS resource set corresponding to the first SRI field among the multiple SRS resource sets.

69. The resource indication apparatus of claim 67 or 68, wherein the bit width of the first SRI field is determined based on the number of resources comprised in the SRS resource set corresponding to the first SRI field and at least one of a minimum value among numbers of resources comprised in each of the multiple SRS resource sets and a maximum number of transmission layers.

70. The resource indication apparatus of claim 67, wherein among the multiple SRI fields comprised in the DCI, a second SRI field indicates the number of transmission layers and SRS resources corresponding to the second SRI field, and SRI fields other than the second SRI field among the multiple SRI fields indicate SRS resources corresponding to the number of transmission layers; and
the number of resources comprised in the SRS resource set corresponding to the second SRI field is equal to or greater than the number of resources comprised in each of SRS resource sets other than the SRS resource set corresponding to the second SRI field among the multiple SRS resource sets.

71. The resource indication apparatus of claim 70, wherein the second SRI field is one of the first SRI fields.

72. The resource indication apparatus of any one of claims 66 to 71, wherein the bit width of the first SRI field is determined based on a maximum value among numbers of resources comprised in each of the multiple SRS resource sets.

73. The resource indication apparatus of claim 72, wherein the bit width of the first SRI field is determined based on the maximum value among the numbers of resources comprised in each of the multiple SRS resource sets and at least one of a minimum value among numbers of resources comprised in each of the multiple SRS resource sets and a maximum number of transmission layers.

74. The resource indication apparatus of any one of claims 66 to 71, in case that numbers of resources comprised in the multiple SRS resource sets are the same, the bit width of the first SRI field is determined based on the number of resources comprised in one SRS resource set among the multiple SRS resource sets and a maximum number of transmission layers.

75. The resource indication apparatus of any one of claims 66 to 74, wherein a bit width of a third SRI field other than the first SRI field among the multiple SRI fields is determined based on at least one of the number of resources comprised in an SRS resource set corresponding to the third SRI field, a minimum value among the numbers of resources comprised in each of the multiple SRS resource sets, and the maximum number of transmission layers.

76. The resource indication apparatus of any one of claims 66 to 74, wherein a coding scheme of the first SRI field is determined based on the number of resources comprised in the SRS resource set to which the SRS resource indicated by the first SRI field belongs and at least one of a minimum value among numbers of resources comprised in each of the multiple SRS resource sets and a maximum number of transmission layers.

77. The resource indication apparatus of any one of claims 66 to 74, wherein the multiple SRI fields in the DCI are in one-to-one correspondence with the multiple SRS resource sets.

78. The resource indication apparatus of any one of claims 66 to 74, wherein usage types of the multiple SRS resource sets are consistent; or
uplink transmission schemes corresponding to the multiple SRS resource sets are consistent.

79. A processor-readable storage medium, storing a computer program that causes, in case that executed by a processor, the processor to perform the method of any one of claims 1 to 13 or perform the method of any one of claims 14 to 26.

110 — Receiving downlink control information (DCI), the DCI including multiple sounding reference signal (SRS) resource indicator (SRI) fields

Determining a bit width of a first SRI field in the multiple SRI fields based on the number of resources included in at least one SRS resource set among multiple SRS resource sets — 120

Determining an SRS resource corresponding to an uplink transmission based on the bit width of the first SRI field — 130

FIG. 1

Determining downlink control information (DCI), where the DCI includes multiple sounding reference signal (SRS) resource indicator (SRI) fields, a bit width of a first SRI field in the DCI is determined based on the number of resources included in at least one SRS resource set among multiple SRS resource sets — 210

Transmitting the DCI — 220

FIG. 2

310

Processor

320

Memory

Bus interface

300

Transceiver

330

User interface

FIG. 3

Processor 410

Memory 420

Bus interface

Transceiver 400

FIG. 4

Receiving unit 510

Bit width determining unit 520

Parsing unit 530

FIG. 5

Information determining unit 610

Transmitting unit 620

FIG. 6

## INTERNATIONAL SEARCH REPORT

| | International application No. |
| --- | --- |
| | **PCT/CN2022/110527** |

**A.     CLASSIFICATION OF SUBJECT MATTER**

H04W 72/04(2009.01)i;  H04L 5/00(2006.01)i

According to International Patent Classification (IPC) or to both national classification and IPC

**B.     FIELDS SEARCHED**

Minimum documentation searched (classification system followed by classification symbols)

H04W72/-,  H04L5/-

Documentation searched other than minimum documentation to the extent that such documents are included in the fields searched

Electronic data base consulted during the international search (name of data base and, where practicable, search terms used)

CNABS; CNTXT; CNKI; BAIDU: 下行控制信息, 探测参考信号, 资源指示, 域, 比特, 数量, 数, 长度, 大小, 宽度, 资源, 层数, 非码本, 多传输接收点: VEN; USTXT; EPTXT; WOTXT; IEEE; 3GPP: Downlink Control Information, DCI, Sounding Reference Signaling, SRS, SRI, domain, bit, length, number, amount, resource, layer, nonCodebook, Multiple Transmission and reception Point, M-TRP, TRP

**C.     DOCUMENTS CONSIDERED TO BE RELEVANT**

| Category* | Citation of document, with indication, where appropriate, of the relevant passages | Relevant to claim No. |
| --- | --- | --- |
| X | CN 110535508 A (ZTE CORP.) 03 December 2019 (2019-12-03) description, paragraphs [0036]-[0037], [0363], and [0730] | 1-79 |
| X | CN 111464273 A (CHINA MOBILE COMMUNICATION LTD., RESEARCH INSTITUTE et al.) 28 July 2020 (2020-07-28) description, paragraphs [0006] and [0054]-[0061], and claim 40 | 1-79 |
| A | CN 112703760 A (QUALCOMM INC.) 23 April 2021 (2021-04-23) entire document | 1-79 |
| A | CN 110838903 A (TELECOMMUNICATIONS TECHNOLOGY RESEARCH INSTITUTE CO., LTD.) 25 February 2020 (2020-02-25) entire document | 1-79 |
| A | CN 109995497 A (HUAWEI TECHNOLOGIES CO., LTD.) 09 July 2019 (2019-07-09) entire document | 1-79 |
| A | US 2019150123 A1 (SHARP LABORATORIES OF AMERICA, INC.) 16 May 2019 (2019-05-16) entire document | 1-79 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 September 2022** | **03 November 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/110527**

| Patent document cited in search report | | | Publication date (day/month/year) | Patent family member(s) | | | Publication date (day/month/year) |
|---|---|---|---|---|---|---|---|
| CN | 110535508 | A | 03 December 2019 | WO | 2021018078 | A1 | 04 February 2021 |
| | | | | KR | 20220042187 | A | 04 April 2022 |
| | | | | CA | 3144172 | A1 | 04 February 2021 |
| | | | | EP | 4007179 | A1 | 01 June 2022 |
| CN | 111464273 | A | 28 July 2020 | None | | | |
| CN | 112703760 | A | 23 April 2021 | WO | 2020056708 | A1 | 26 March 2020 |
| | | | | WO | 2020056708 | A9 | 03 June 2021 |
| | | | | EP | 3854133 | A1 | 28 July 2021 |
| | | | | EP | 3854133 | A4 | 27 April 2022 |
| | | | | US | 2021328644 | A1 | 21 October 2021 |
| CN | 110838903 | A | 25 February 2020 | US | 2021351960 | A1 | 11 November 2021 |
| | | | | WO | 2020035069 | A1 | 20 February 2020 |
| | | | | KR | 20210044856 | A | 23 April 2021 |
| | | | | EP | 3840271 | A1 | 23 June 2021 |
| | | | | IN | 202127006744 | A | 25 June 2021 |
| | | | | EP | 3840271 | A4 | 03 November 2021 |
| | | | | CN | 110838903 | B | 04 January 2022 |
| CN | 109995497 | A | 09 July 2019 | WO | 2019158005 | A1 | 22 August 2019 |
| | | | | EP | 3709740 | A1 | 16 September 2020 |
| | | | | CN | 110166209 | A | 23 August 2019 |
| | | | | BR | 112020016565 | A2 | 22 December 2020 |
| | | | | JP | 2022106776 | A | 20 July 2022 |
| | | | | JP | 2021507650 | A | 22 February 2021 |
| | | | | US | 2020296758 | A1 | 17 September 2020 |
| | | | | IN | 202037021150 | A | 07 August 2020 |
| US | 2019150123 | A1 | 16 May 2019 | WO | 2019099388 | A1 | 23 May 2019 |
| | | | | US | 10945251 | B2 | 09 March 2021 |

Form PCT/ISA/210 (patent family annex) (January 2015)

**REFERENCES CITED IN THE DESCRIPTION**

**Patent documents cited in the description**

- CN 2021109035881